# EUROPEAN PATENT APPLICATION

(11) **EP 4 245 654 A1**
(43) Date of publication of application: **20.09.2023**
(21) Application number: 21892003.1
(22) Date of filing: 12.11.2021
(51) Int. Cl.: B63B 49/00, G05B 19/418, G06Q 50/04, G16Y 10/25, G16Y 20/10, G16Y 20/20, G16Y 40/20, G06Q 10/00

(54) **UNIFIED DATABASE-BASED SHIP-BUILDING SIMULATION METHOD, SHIP-BUILDING SIMULATION PROGRAM, AND SHIP-BUILDING SIMULATION SYSTEM OF SHIP, AND SHIP QUALITY DATABASE BUILDING METHOD**

(30) Priority: 12.11.2020 JP 2020188598; 12.11.2020 JP 2020188599; 25.12.2020 JP 2020217945
(71) Applicant: National Institute of Maritime, Port and Aviation Technology, Mitaka-shi, Tokyo 181-0004 (JP)
(72) Inventor: MATSUO Kohei, Mitaka-shi, Tokyo 181-0004 (JP); TANIGUCHI Tomoyuki, Mitaka-shi, Tokyo 181-0004 (JP); TAKEZAWA Masahito, Mitaka-shi, Tokyo 181-0004 (JP); HIRAKATA Masaru, Mitaka-shi, Tokyo 181-0004 (JP)
(74) Representative: Körfer, Thomas
(86) International application number: PCT/JP2021/041795
(87) International publication number: WO 2022/102758

(57) **Abstract**

[Object] It is an object of the present invention to provide a shipbuilding simulation method and a shipbuilding simulation program based on a unified database capable of simulating building of a ship at detailed operation level.

[Solving Means] The shipbuilding simulation method executes a step S1 for obtaining basic design information of a ship from a unified database 10, and for setting the basic design information as a product model which is expressed by means of a standardized data structure, a step S2 from the unified database 10, information concerning equipment and worker of a factory , and for setting this information as a facility model 12 which is expressed by means of the standardized data structure, a step S3 for creating a process model which is expressed by means of the standardized data structure based on the product model and the facility model 12, a step S5 for carry out time evolution system simulation based on the process model, a step S6 for converting a result of simulation into time series data and into building time series information 51, and a step S7 for supplying the building time series information 51.

## Description

### [TECHNICAL FIELD]

The present invention relates to a method, a program and a system for simulating building of a ship based on a unified database, and also relates a quality database construction method of a ship.

### [BACKGROUNG TECHNIQUE]

An operation amount of each of operations, i.e., man-hour which become a setting basis of a production (building) schedule or planning calendar of a shipbuilding is generally acquired based on point of view of "man-hour = standard time per controlling quantity of material × controlling quantity of material".

However, essentially, only a main operation (operation by which a product proceeds toward termination) is proportionate to controlling quantity of material. An associated operation (main operation cannot proceed if the associated operation is not carried out, but a product is not completed if only the associated operation is carried out) and non-added valuable conduct (conduct which is non variable for termination of a product) are simply handled as totally being proportionate to the controlling quantity of material although the associated operation and the non-added valuable conduct are determined in dimension which is different from the controlling quantity of material. It is reported that a rate of the main operation in the shipbuilding is generally 30 to 40% although it differs depending upon a type of occupation, there is a problem in terms of precision to proportionally estimate the man-hour from the controlling quantity of material.

On the other hand, a line simulator which carries out simulation of a producing step exists, bit it is necessary to manually input all of detailed operations one by one. The line simulator is suited for simulation in which flow of material and motion of an operator are determined like line production of a large number of products and the similar operation is repeated, but the line simulator is not suited for simulation in which various operations are changed in depending on the situation like shipbuilding which is built to order.

Further, various quality inspections are carried out when ship is built, but quality is not recorded or even if quality is recorded, its state is not recorded as data which can be managed in many cases, and it is difficult to say that a system for maintain the quality is completed.

Here, patent document 1 discloses a ship and a marine plant production simulation consolidated solution system including a ship and a marine plant production simulation framework which are commonly applied regardless of different environments of shipyards, a cross-validation simulation system of shipbuilding marine step which is discriminately applied in conformance to the different environments of the shipyards, a crane lifting and on-board simulation system of a block, GIS information infrastructure equipment, and extendability and recyclability which are effectively applied in conformance to situations of the shipyards by separably coupling the block and a material flow traffic simulation system to each other.

Patent document 2 discloses a method for generating a project plan, a project description information including information describing precedence relationships between the tasks, information indicating durations of the tasks, and information indicating variability in the durations of the tasks is received by a processor unit, a simulation model is generated for the project by the processor unit using the project description information, the simulation model is run for a plurality of runs to identify a subset of tasks forming a critical path and to generate simulation results data, and a project network presentation including the identified subset of the tasks forming the critical path is generated from the simulation results data, and the project description information is received by the processor unit in an information format which is selected from a group of information format including a text file, an electronic spreadsheet file and an Extensible Markup Language file.

Patent document 3 discloses a scheduling device for carrying out production scheduling of production object including a plurality of steps. The scheduling device includes accumulating means in which step connecting information for setting a connecting ranking relation of the steps, block flow information for setting a moving path of blocks included in the steps, operation construction period information for setting construction period of each of the steps of the blocks, and constraint conditions of the steps are accumulated, interpretation means for sorting steps from information accumulated in the accumulating means in the order from downstream to upstream, model creating means for forming a scheduling model based on step data after sorting obtained by the interpretation means, plan calendar creating means for optimizing schedule per scheduling model obtained by the model creating means, and output means for outputting a scheduling result obtained by the plan calendar creating means.

Patent document 4 discloses a production system plan method. In the production system plan method, production action is simulated by a production line model formed in each of the plans using a step plan, an equipment installing plan based on the step plan, a worker plan based on the step plan and the equipment installing plan, and a production plan based on the step plan, the equipment installing plan and the worker plan, and an evaluation norm value of each of the plans is formed, it is determined whether each of the plans is good or poor by the norm value, and the plans are corrected based thereon.

Patent document 5 discloses a service assisting system of production physical distribution equipment. The service assisting system includes an actual achievement plan information database for storing service actual achievement information and operation plan information of production physical distribution equipment, a statistics information calculating section for calculating a statistics value of service status of the production physical distribution equipment at designated time zones using the service actual achievement information and the operation plan information stored in the database, an equipment work status display section for displaying, in a superposed manner, a list of operation carried out in the selected and operated equipment on an equipment work status screen as an operation information list in accordance with selected and operated equipment displayed on the equipment work status screen while displaying the equipment work status screen which shows a service status of the equipment included in the production physical distribution equipment at the designated time zone using a statistics value of the service status of the calculated production physical distribution equipment, and a Gantt Chart display section for identifying and displaying operation which is in a preceding/succeeding relation with respect to a selected and operated operation in accordance with operation in a Gantt Chart screen which is selected and operated while displaying a Gantt Chart of the equipment included in the production physical distribution equipment or a Gantt Chart screen in which the operation related to selected and operated product is identified and displayed in accordance with the selecting and operating action of the product.

Patent document 6 discloses, in a quality management system, shipping inspection data as quality data which is input from a supplier terminal is accumulated in a server's database, statistic processing is carried out in the server, and management diagram is automatically produced, the management diagram and the quality data can immediately be monitored from a purchaser's terminal or a supplier's terminal, appearance of an abnormal value in the management diagram is automatically detected, and an abnormal generation notice mail is sent to a concerned parties from the server, and the quality data, the management diagram, and handling history when the abnormal value appears are accumulated in BBS and a mail, and database is created.

Patent document 7 discloses an IC tag database combination use quality management method of a mechanical element product, in which the mechanical element product which is managed is a plurality types of assembled element parts, the plurality of element parts are produced through a forging step, a thermal process step and a grinding step from purchase of material, information of each of the steps is recorded in an IC tag together with a lot number of the step, recording information of the IC tag with respect to the element parts is recorded in a management computer system in response to a production number or a production lot number after the element parts are assembled into the mechanical element product, another IC tag is attached to the mechanical element product and a production number or a lot number is recorded, and processing condition information of the forging step, the thermal process step and the grinding step is recorded in this IC tag.

In non-patent document 1, as specific action corresponding to step management for constructing shipbuilding CIM, process planning and scheduling are mentions. In the process planning, it is described that method and procedure for production based on conceptional knowledge concerning a producing field concerning production information are determined. In the scheduling, it is described a result of the process planning is developed in view of utilization of time and a field machine based on knowledge concerning specific status in an actual producing field, a planning calendar for satisfying delivery period and other conditions is formed. And non-patent document 1 disclose Shipyard Model for steps management based on object orientation.

Non-patent document 2 discloses a technique to evaluate influence on period and cost of entire process caused by introducing new production equipment utilizing production process simulation in which reworking operation is taken into account based on a production error of a product for production process to evaluate introduction effect of production equipment in a ship production process. It is described that in the production process simulation, constraint of an operation place of shipbuilding shipyard and skill of a worker are taken into account.

### [PRIOR ART DOCUMENTS]

### [PATENT DOCUMENTS]

[Patent Document 1] Japanese Utility Model Registration No.3211204
[Patent Document 2] Japanese Patent Application Laid-open No.2013-117959
[Patent Document 3] Japanese Patent Application Laid-open No.2007-183817
[Patent Document 4] Japanese Patent Application Laid-open No.2003-162313
[Patent Document 5] Japanese Patent Application Laid-open No.2015-138321
[Patent Document 6] Japanese Patent Application Laid-open No.2006-79354
[Patent Document 7] Japanese Patent Application Laid-open No.2004-334891

### [NON-PATENT DOCUMENTS]

[Non-patent Document 1] "A Fundamental Study on Manufacturing Planning and Control System for Shipbuilding CIM" by TAKEO Koyama and one other, Journal of the Society of Naval Architects of Japan, The Society of Naval Architects of Japan, November in 1989, volume 166, pages 415 to 423
[Non-patent Document 2] "Study on Installation of Production Facilities Using Shipbuilding Process Simulation" by MITSUYUKI Taiga and three others, Journal of the Japan Society of Naval Architects and Ocean Engineers, The Japan Society of Naval Architects and Ocean Engineers, December in 2016, Volume 24, pages 291 to 298

### [SUMMARY OF THE INVENTION]

### [OBJECT TO BE SOLVED BY THE INVENTION]

Patent documents 1 to 4 and non-patent documents 1 to 2 do not precisely replicate production action of a worker in simulation of building, including main operations and associated operations, or quality data related to building of a ship is not accumulated in database. In non-patent document 2, production process simulation is utilized to evaluate an introduction effect of production equipment which influences quality of a product, but quality data is not accumulated in a database in a state where the data can be managed.

Patent document 5 does not accumulated information concerning equipment and worker of a factory for simulation in a database, and quality data related to building of a ship is not accumulated in a database.

In patent documents 6 to 7, shipping inspection data and production information accumulated in a database are not related to a product model which expresses configuration or a shape of the product.

Hence, it is an object of the present invention to provide a shipbuilding simulation method, a shipbuilding simulation program, and a shipbuilding simulation system based on a unified database capable of simulating building of a ship at a detailed operation level, and it is also an object of the invention to provide a quality database construction method of a ship capable of accumulating quality data which is related to building of a ship in a state where the data can be managed and capable of effectively utilizing the quality data.

### [MEANS FOR SOLVING PROBLEM]

A shipbuilding simulation method based on unified database corresponding to claim1, is the method for simulating building of a ship based on information which is expressed by means of standardized data structure accumulated in a unified database, executes: a product model setting step for obtaining basic design information of the ship from the unified database, and for setting the basic design information as a product model which is expressed by means of the standardized data structure; a facility model setting step for obtaining, a facility model setting step for obtaining, from the unified database, information concerning equipment and worker of a factory which builds the ship, and for setting this information as a facility model which is expressed by means of the standardized data structure; a process model creating step for clarifying assembling procedure and tasks to build the ship from a component part based on the product model and the facility model, and creating a process model which is expressed by means of the standardized data structure; a simulating step for carry out time evolution system simulation which sequentially calculates a progress status of building hourly based on the process model; a time series informatization step for converting a result of the time evolution system simulation into time series data and into building time series information; and an information supplying step for supplying the building time series information.

According to the invention described in claim 1, a user can simulate building of a ship hourly at a detailed operation level based on information which is expressed by means of standardized data structure, and it is possible to improve a factory, improve production design, forecast cost when order is received, and consider investment of equipment, based on building time series information as a result of the precise simulation. Therefore, it is possible to reduce building cost, and shorten a building period.

In an invention described in claim 2, the facility model is previously created based on information concerning the equipment and the worker, and the facility model is expressed by means of the standardized data structure and is accumulate in the unified database.

According to the invention described in claim 2, since the facility model is accumulated as data structure which is standardized in the unified database, it is possible to easily obtain a facility model of standardized data structure, utilize commonly, set, and accumulate new information.

In an invention described in claim 3, the product model is previously created based on the basic design information of the ship, and the product model is expressed by means of the standardized data structure and is accumulate in the unified database.

According to the invention described in claim 3, it is possible to easily obtain the product model without accessing the design system. Since the product model is a data structure, for example, in which types or attribution of information, and relation between a plurality of information sets are standardized, it is possible to more easily obtain the product model, create the process model and accumulate the models.

In an invention described in claim 4, the shipbuilding simulation method further executes a process model accumulating step for accumulate, in the unified database, the process model created in the process model creating step and expressed by means of the standardized data structure.

According to the invention described in claim 4, for example, it is possible to carry out time evolution system simulation using the accumulated process model as past ship process data in a next simulation chance or simulation of a similar ship. Further, for example, since data structure of the process model is based on standardizing types or attribution of information, and relation between a plurality of information sets, it becomes easy to accumulate or utilize the process model.

In an invention described in claim 5, the process model includes an assembling tree expressing dependence relation of assembling as the assembling procedure, and a task tree expressing dependence relation between the tasks based on the assembling tree.

According to the invention described in claim 5, it is possible to clarify assembling procedure and a dependent relation of tasks concerning the assembling procedure, and it is possible to precisely create a process model.

In an invention described in claim 6, the tasks include a custom task constructed by combining basic tasks which are functions that can be executed by the time evolution system simulation.

According to the invention described in claim 6, it is possible to enhance the precision of time evolution system simulation by the custom task in which small operations are combined by type of operations.

In an invention described in claim 7, in the process model creating step, at least one of schedule information of the worker or factory layout information concerning location of the equipment and the worker in the factory is created based on the assembling procedure and the tasks.

According to the invention described in claim 7, it is possible to precisely replicate and to carry out time evolution system simulation all of production actions of workers including a main operation and an associated operation based on the schedule information. Further, it is possible to carry out the time evolution system simulation based on factory layout information to which placement of equipment and worker are reflected.

In an invention described in claim 8, rule information including Brains which is determination rule given to the worker is utilized so that the worker proceeds a virtual operation or so that the worker determines the equipment which is used in the virtual operation.

According to the invention described in claim 8, it becomes easy for a worker in the time evolution system simulation to proceed a virtual operation and to determine equipment by utilizing rule information. Further, the worker can determine operations which are not repetitive operations but which require on factory floor extremely many determinations utilizing the Brains, and can smoothly proceed virtual operations.

In an invention described in claim 9, each of the standardized data structures of the product model, the facility model and the process model includes classes divided according to type of at least a plurality of data, and a data structure including relation between the classes and parent and child relation between the classes.

According to the invention described in claim 9, it becomes easier to obtain, accumulate and utilize the product model, the facility model and the process model by the data structure on the axis of the class or relation between classes.

In an invention described in claim 10, in the information supplying step, at least the building time series information is supplied to the unified database as the standardized data structure.

According to the invention described in claim 10, types, attribution and format of information supplied as the building time series information can easily be accumulated in the unified database in the standardized data structure as the building time series information while taking relation with the product model into account. Further, building time series information which is accumulated as the standardized data structure, for example, is obtained from the unified database, it is referred to when an actual ship is built, or utilized as information at the time of later simulation, or it is utilized for machine learning of rule information.

A shipbuilding simulation program based on unified database corresponding to claim 11, is the program for simulating building of a ship based on information which is expressed by means of standardized data structure accumulated in a unified database, the simulation program makes a computer executes: the product model setting step; the facility model setting step; the process model creating step; the simulating step; the time series informatization step; and the information supplying step in the shipbuilding simulation method based on unified database.

According to the invention described in claim 11, a user can simulate building of a ship hourly at a detailed operation level based on information which is expressed by means of standardized data structure, and it is possible to improve a factory, improve production design, forecast cost when order is received, and consider investment of equipment, based on building time series information as a result of the precise simulation. Therefore, it is possible to reduce building cost, and shorten a building period.

In an invention described in claim 12, the simulation program further causes the computer to the process model accumulating step.

According to the invention described in claim 12, for example, it is possible to carry out time evolution system simulation using the accumulated process model as past ship process data in a next simulation chance or simulation of a similar ship. Further, for example, since data structure of the process model is based on standardizing types or attribution of information, and relation between a plurality of information sets, it becomes easy to accumulate or utilize the process model.

A shipbuilding simulation system based on unified database corresponding to claim 13, is the system for executing the shipbuilding simulation method based on unified database, includes: unified database in which information concerning building of the ship is accumulated in a standardized data structure; product model setting means for setting the product model; facility model setting means for setting the facility model; process model creating means for creating the process model; building simulating means for carrying out time evolution system simulation; time series informatization means for creating the building time series information; and information supplying means for supplying the building time series information.

According to the invention described in claim 13, a user can simulate building of a ship hourly at a detailed operation level based on information which is expressed by means of standardized data structure, and it is possible to improve a factory, improve production design, forecast cost when order is received, and consider investment of equipment, based on building time series information as a result of the precise simulation. Therefore, it is possible to reduce building cost, and shorten a building period.

In an invention described in claim 14, the system further includes process model accumulating means for accumulating the process model in the unified database.

According to the invention described in claim 14, it is possible to obtain the accumulated process model from the unified database and to carry out the time evolution system simulation. Further, for example, by accumulating the process model created by data structure in which the types or attribution of information or relation between a plurality of information sets are standardized, it becomes easy to form, accumulate or utilize the process model.

In an invention described in claim 15, the facility model is created from information of the equipment of the plurality of factories and information of the worker, the process model creating means creates the process model for each of the factories, and the building simulating means carries out the time evolution system simulation for each of the factories for the product model.

According to the invention described in claim 15, for example, process model per a factory is created from one product model with respect to facility model of a plurality of factories, and time evolution system simulation is carried out using the facility model per a factory. Therefore, it is possible to compare production cost and a building period between the factories, it becomes easy to select a factory which actually build, cost is further reduced, and a building period is further shortened.

In an invention described in claim 16, a result of the time evolution system simulation of each of the factories in the building simulating means is supplied from the information supplying means as the comparable building time series information.

According to the invention described in claim 16, a user can swiftly and reliably compare man-hour prediction results, problems of the facility, and bottlenecks in the factories, and it is possible to compare production cost and a building period.

In an invention described in claim 17, the system further includes at least one of, based on the building time series information, cost-calculating means for calculating cost concerning building of the ship, part-procuring planning means for creating purchase plan of a purchased part which is required for building of the ship, and production planning means for gestating a production plan concerning building of the ship.

According to the invention described in claim 17, the system includes the cost-calculating means, so that it is possible to easily obtain a cost concerning building of a ship calculated based on building time series information. Further, the system includes the part-procuring planning means, so that it is possible to easily obtain a purchase plan of a purchased part created based on the building time series information. Further, the system includes the production planning means, so that the building time series information can smoothly be connected to gestation of a production plan of entire building of a ship.

A quality database construction method of a ship corresponding to description of claim 18, based on the process model or the building time series information in the shipbuilding simulation method based on unified database, building process is executed, the quality data concerning the building process is obtained, the quality data is associated with at least one of the product model, the facility model and the process model, and the quality data is expressed in a standardized quality data structure and the quality data is accumulate in the quality database a quality management data of the product model.

According to the invention described in claim 18, by quality data of a ship (product) built (produced) in accordance with the process model is related to a product model, and the quality data is accumulated as quality management data of the product model, it is possible to uniformly manage the product model of a ship and quality data of an actual product. According to this, it is possible to cross-check the actual product and the quality data, and it is possible to analyze concerning quality, and it is possible to enhance the quality management, improve quality, and enhance the service. Further, by quality data of a product produced in accordance with a process model is related to the process model, and it is accumulated as quality management data, it is possible to uniformly manage the process model, actual step information (construction information) and quality data. According to this, it is possible to cross-check the operation concerning production with quality data, and it is possible to analyze concerning quality, and to improve, etc. the step quality. Further, it is possible to manage quality data in time series. By quality data of a product produced in accordance with a process model is related to a facility model, and the quality data is accumulated as quality management data, it is possible to uniformly manage the facility model and quality data of the actual product. According to this, it is possible to cross-check equipment or a worker in a step with quality data, and it is possible to analyze concerning quality, and to improve, etc. the step.

In an invention described in claim 19, after launch quality information after launch of the ship is obtained, the after launch quality information is associated with at least one of the product model, the facility model and the process model, and the quality information is accumulated in the quality database as the quality management data after launch of the ship.

According to the invention described in claim 19, by after launch quality information such as at the time of trial operation, during operation, or at the time of docking is accumulated in the quality database as the quality management data after launch of the ship, it is possible to analyze concerning quality to which information such as damage after launch or improvement building is reflected and to improve not only production quality, but also design quality, plan quality, using quality and the like.

In an invention described in claim 20, the standardized quality data structure is associated with the standardized data structure of at least one of the product model, the facility model and the process model and is standardized.

According to the invention described in claim 20, by the quality management data is related with the standardized data structure, it becomes easier to handle the quality management data.

### [EFFECT OF THE INVENTION]

According to the shipbuilding simulation method based on unified database of the present invention, a user can simulate building of a ship hourly at a detailed operation level based on information which is expressed by means of standardized data structure, and it is possible to improve a factory, improve production design, forecast cost when order is received, and consider investment of equipment, based on building time series information as a result of the precise simulation. Therefore, it is possible to reduce building cost, and shorten a building period.

When the facility model is previously created based on information concerning equipment and the worker, and the facility model is expressed by means of the standardized data structure and is accumulate in the unified database, since the facility model is accumulated as data structure which is standardized in the unified database, it is possible to easily obtain a facility model of standardized data structure, utilize commonly, set, and accumulated new information.

When the product model is previously created based on the basic design information of the ship, and the product model is expressed by means of the standardized data structure and is accumulate in the unified database, for example, it is possible to easily obtain the product model without accessing the design system. Since the product model is a data structure, for example, in which types or attribution of information, and relation between a plurality of information sets are standardized, it is possible to more easily obtain the product model, create the process model and accumulate the models.

When the shipbuilding simulation method further executes a process model accumulating step for accumulate, in the unified database, the process model created in the process model creating step and expressed by means of the standardized data structure, for example, it is possible to carry out time evolution system simulation using the accumulated process model as past ship process data in a next simulation chance or simulation of a similar ship. Further, for example, since data structure of the process model is based on standardizing types or attribution of information, and relation between a plurality of information sets, it becomes easy to accumulate or utilize the process model.

When the process model includes an assembling tree expressing dependence relation of assembling as the assembling procedure, and a task tree expressing dependence relation between the tasks based on the assembling tree, it is possible to clarify assembling procedure and a dependent relation of tasks concerning the assembling procedure, and it is possible to precisely create a process model.

When the tasks include a custom task constructed by combining basic tasks which are functions that can be executed by the time evolution system simulation, it is possible to enhance the precision of time evolution system simulation by the custom task in which small operations are combined by type of operations.

When at least one of schedule information of the working person and factory layout information concerning locations of the equipment and the worker in the factory is created based on the assembling procedure and the task in the process model creating step, it is possible to precisely replicate and to carry out time evolution system simulation all of production actions of workers including a main operation and an associated operation based on the schedule information. Further, it is possible to carry out the time evolution system simulation based on factory layout information to which placement of equipment and the worker are reflected.

When rule information including Brains which is determination rule given to the worker is utilized so that the worker proceeds a virtual operation or so that the worker determines the equipment which is used in the virtual operation, it becomes easy for a worker in the time evolution system simulation to proceed the virtual operation and to determine equipment by utilizing rule information. Further, the worker can determine operations which are not repetitive operations but which require on factory floor extremely many determinations utilizing the Brains, and can smoothly proceed virtual operations.

When each of the standardized data structures of the product model, the facility model and the process model includes classes divided according to type of at least a plurality of data, and a data structure including relation between the classes and parent and child relation between the classes, it becomes easier to obtain, accumulate and utilize the product model, the facility model and the process model by the data structure on the axis of the class or relation between classes.

When at least the building time series information is supplied to the unified database as the standardized data structure in the information supplying step, types, attribution and format of information supplied as the building time series information can easily be accumulated in the unified database in the standardized data structure as the building time series information while taking relation with the product model into account. Further, building time series information which is accumulated as the standardized data structure, for example, is obtained from the unified database, it is referred to when an actual ship is built, or utilized as information at the time of later simulation, or it is utilized for machine learning of rule information.

According to the shipbuilding simulation program based on unified database of the present invention, a user can simulate building of a ship hourly at a detailed operation level based on information which is expressed by means of standardized data structure, and it is possible to improve a factory, improve production design, forecast cost when order is received, and consider investment of equipment, based on building time series information as a result of the precise simulation. Therefore, it is possible to reduce building cost, and shorten a building period.

When the simulation program further causes the computer to the process model accumulating step, for example, it is possible to carry out time evolution system simulation using the accumulated process model as past ship process data in a next simulation chance or simulation of a similar ship. Further, for example, since data structure of the process model is based on standardizing types or attribution of information, and relation between a plurality of information sets, it becomes easy to accumulate or utilize the process model.

According to the shipbuilding simulation system based on unified database of the present invention, a user can simulate building of a ship hourly at a detailed operation level based on information which is expressed by means of standardized data structure, and it is possible to improve a factory, improve production design, forecast cost when order is received, and consider investment of equipment, based on building time series information as a result of the precise simulation. Therefore, it is possible to reduce building cost, and shorten a building period.

When the system further includes process model accumulating means for accumulating the process model in the unified database, it is possible to obtain the accumulated process model from the unified database and to carry out the time evolution system simulation. Further, for example, by accumulating the process model created by data structure in which the types or attribution of information or relation between a plurality of information sets are standardized, it becomes easy to form, accumulate or utilize the process model.

When the facility model is created from information of the equipment of the plurality of factories and information of the worker, and the process model creating means creates the process model for each of the factories, and the building simulating means carries out the time evolution system simulation for each of the factories for the product model, for example, process model per a factory is created from one product model with respect to facility model of a plurality of factories, and time evolution system simulation is carried out using the facility model per a factory. Therefore, it is possible to compare production cost and a building period between the factories, it becomes easy to select a factory which actually build, cost is further reduced, and a building period is further shortened.

When a result of the time evolution system simulation of each of the factories in the building simulating means is supplied from the information supplying means as the comparable building time series information, a user can swiftly and reliably compare man-hour prediction results, problems of the facility, and bottlenecks in the factories, and it is possible to compare production cost and a building period.

When the system further includes at least one of, based on the building time series information, cost-calculating means for calculating cost concerning building of the ship , part-procuring planning means for creating purchase plan of a purchased part which is required for building of the ship, and production planning means for building of the ship, and production planning means for gestating a production plan concerning building of the ship, the system includes the cost-calculating means, so that it is possible to easily obtain a cost concerning building of a ship calculated based on building time series information. Further, the system includes the part-procuring planning means, so that it is possible to easily obtain a purchase plan of a purchased part created based on the building time series information. Further, the system includes the production planning means, so that the building time series information can smoothly be connected to gestation of a production plan of entire building of a ship.

According to the quality database construction method of a ship of the present invention, by quality data of a ship (product) built (produced) in accordance with the process model is related to a product model, and the quality data is accumulated as quality management data of the product model, it is possible to uniformly manage the product model of a ship and quality data of an actual product. According to this, it is possible to cross-check the actual product and the quality data, and it is possible to analyze concerning quality, and it is possible to enhance the quality management, improve quality, and enhance the service. Further, by quality data of a product produced in accordance with a process model is related to the process model, and it is accumulated as quality management data, it is possible to uniformly manage the process model, actual step information (construction information) and quality data. According to this, it is possible to cross-check the operation concerning production with quality data, and it is possible to analyze concerning quality, and to improve, etc. the step quality. Further, it is possible to manage quality data in time series. By quality data of a product produced in accordance with a process model is related to a facility model, and the quality data is accumulated as quality management data, it is possible to uniformly manage the facility model and quality data of the actual product. According to this, it is possible to cross-check equipment or a worker in a step with quality data, and it is possible to analyze concerning quality, and to improve, etc. the step.

When after launch quality information after launch of the ship is obtained, and the after launch quality information is associated with at least one of the product model, the facility model and the process model, and the quality information is accumulated in the quality database as the quality management data after launch of the ship, by after launch quality information such as at the time of trial operation, during operation, or at the time of docking is accumulated in the quality database as the quality management data after launch of the ship, it is possible to analyze concerning quality to which information such as damage after launch or improvement building is reflected and to improve not only production quality, but also design quality, plan quality, using quality and the like.

When the standardized quality data structure is associated with the standardized data structure of at least one of the product model, the facility model and the process model and is standardized, by the quality management data is related with the standardized data structure, it becomes easier to handle the quality management data.

### [BRIEF DESCRIPTION OF THE DRAWINGS]

Fig. 1 is a flowchart of a shipbuilding simulation method based on unified database according to a first embodiment of the present invention;
Fig. 2 is a block diagram expressing by means of functional realizing means a shipbuilding simulation system used for the shipbuilding simulation method;
Fig. 3 is an entire schematic diagram;
Figs. 4 are diagrams showing examples of a product model;
Fig. 5 is a diagram showing a coupling relation of a five-plate model;
Fig. 6 is a diagram showing a three-dimensional model of a first plate P1;
Fig. 7 is a diagram showing examples of a product model of a three-plate model;
Figs. 8 are diagrams showing examples of a three-dimensional model of a facility;
Fig. 9 is a diagram showing examples of the facility model;
Fig. 10 is a conceptual diagram of the process model;
Fig. 11 is a detailed flowchart of a process model creating step;
Fig. 12 is a diagram showing examples of an assembling tree of the five-plate model;
Fig. 13 is a diagram showing examples of an assembling tree of the three-plate model;
Fig. 14 is a diagram showing examples expressing a relation of the total tasks as a tree;
Fig. 15 is a diagram showing examples of a task tree of the three-plate model;
Fig. 16 is a diagram showing examples of data of the task tree of the three-plate model;
Fig. 17 are diagrams showing examples of allocation of a task to a worker in the three-plate model and order of the tasks;
Fig. 18 is a diagram showing examples of location in an actual simulation space;
Fig. 19 is a diagram showing examples of factory layout information in the three-plate model;
Fig. 20 is a detailed flowchart of a simulating step;
Figs. 21 are diagrams showing a state of simulation utilizing Brains;
Fig. 22 is a diagram showing a pseudocode of the simulating step;
Fig. 23 is a diagram showing a move task (move) as examples of the basic task;
Fig. 24 is a diagram showing a welding task (weld) as an example of the basic task;
Fig. 25 is a diagram showing a crane moving task (CraneMove) as examples of the basic task;
Fig. 26 is a diagram showing examples of carry task "go to receive";
Fig. 27 is a diagram showing examples of carry task "locating";
Fig. 28 is a diagram showing examples expressing a welding task by means of a combination of the basic tasks;
Fig. 29 is a diagram showing examples constituting a movable mesh among a region surrounding by a wall having two entrances;
Fig. 30 is a diagram showing examples of shape data;
Fig. 31 is a diagram showing examples of welding line data;
Fig. 32 is a diagram showing examples of backside heating line data;
Fig. 33 is a diagram showing examples of product model data;
Fig. 34 is a diagram showing examples of polyline data;
Fig. 35 is a diagram showing examples of assembling tree data;
Fig. 36 is a diagram showing examples of task tree data;
Fig. 37 is a detailed flowchart of outputting processing;
Fig. 38 is a flowchart of a shipbuilding simulation method based on unified database according to a second embodiment of the present invention;
Fig. 39 is a block diagram expressing by means of functional realizing means a shipbuilding simulation system based on unified database;
Fig. 40 is a block diagram expressing by means of functional realizing means a shipbuilding simulation system based on unified database according to a third embodiment of the present invention;
Fig. 41 is a block diagram expressing by means of functional realizing means a shipbuilding simulation system based on unified database according to a fourth embodiment of the present invention;
Fig. 42 is a block diagram expressing by means of functional realizing means a shipbuilding simulation system based on unified database according to a fifth embodiment of the present invention;
Fig. 43 is a block diagram expressing by means of functional realizing means a shipbuilding simulation system based on unified database according to a sixth embodiment of the present invention;
Fig. 44 is a diagram showing an example of standardized data structure of a product model according to an embodiment of the invention;
Fig. 45 is a diagram showing an example of standardized data structure of a facility model;
Fig. 46-1 is a diagram showing a product model among an example of standardized data structure of the product model, the facility model and the process model.
Fig. 46-2 is a diagram showing the facility model among an example of standardized data structure of the product model, the facility model and the process model.
Fig. 46-3 is a diagram showing the process model among an example of standardized data structure of the product model, the facility model and the process model.
Fig. 47 is a block diagram of a system used in a quality database construction method of a ship according to a seventh embodiment of the present invention;
Fig. 48 is a flowchart of the quality database construction method of a ship;
Fig. 49 is a conceptual diagram of data structure of quality management data;
Fig. 50 is a diagram showing examples of quality management item and quality management data;
Fig. 51 is a diagram showing configuration of the unified database;
Fig. 52 is a class diagram of the product model and the quality data;
Fig. 53 is a block diagram of a system used in a quality database construction method of a ship according to an eighth embodiment;
Fig. 54 is a flowchart of the quality database construction method of a ship;
Fig. 55 is an explanatory diagram of a utilizing method of the unified database in the quality database construction method of a ship;
Fig. 56 is an explanatory diagram of another utilizing method of the unified database in the quality database construction method of a ship;
Fig. 57 is a diagram showing an entire configuration of the unified database and each application in quality database construction method of a ship;
Fig. 58 is a diagram showing utilization of quality management data by a welding quality management application;
Fig. 59 is a diagram showing utilization of quality management data by the coating quality management application;
Fig. 60 is a Gantt chart of a calculation result of simulation in an assembling scenario of a case 1 according to an example of the invention;
Fig. 61 is a Gantt chart of a calculation result of simulation in an assembling scenario of a case 2; and
Fig. 62 is a three-dimensional appearance diagram of simulation of the case 2.

### [MODE FOR CARRYING OUT THE INVENTION]

A shipbuilding simulation method, a shipbuilding simulation program and a shipbuilding simulation system based on a unified database according to a first embodiment of the present invention will be described.

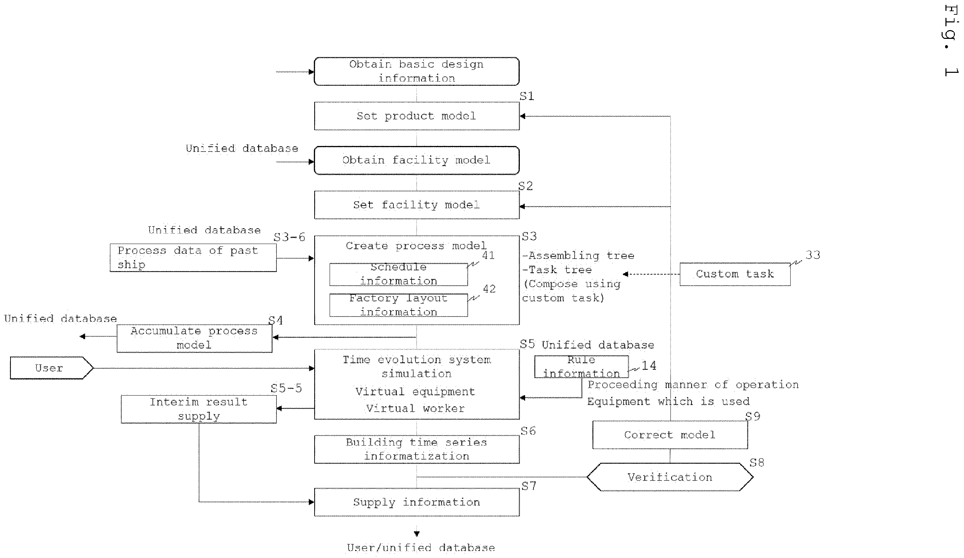

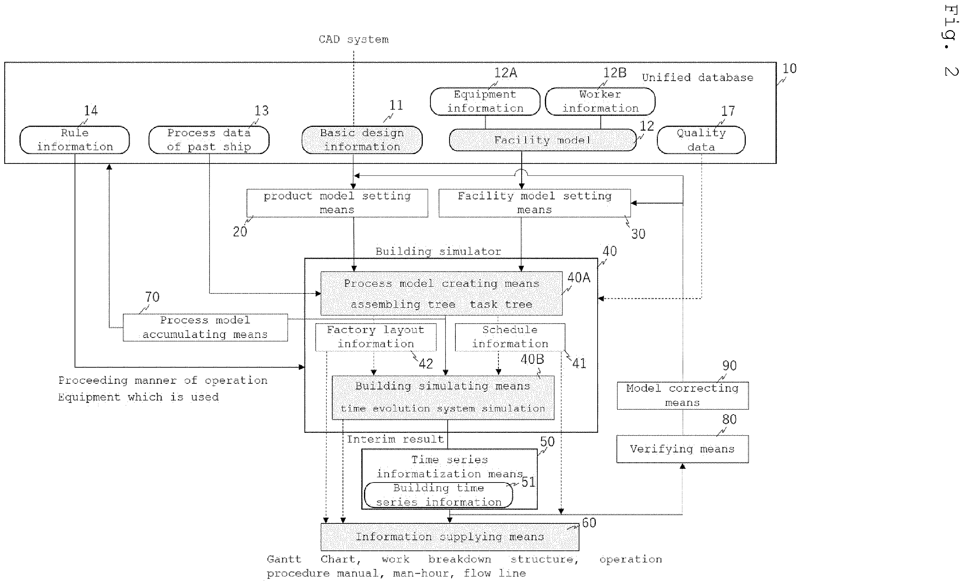

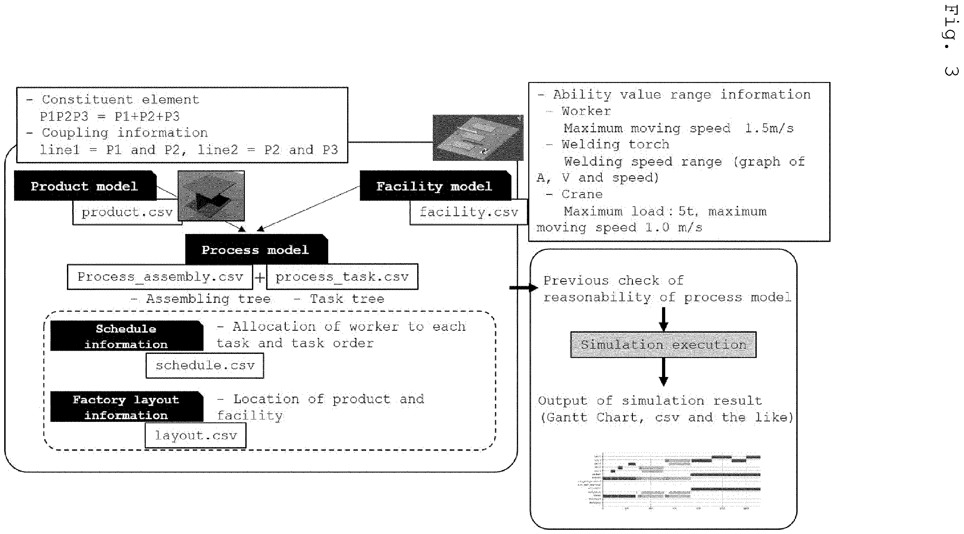

Fig. 1 is a flowchart of a shipbuilding simulation method based on the unified database according to this embodiment, Fig. 2 is a block diagram expressing by means of functional realizing means a shipbuilding simulation system used for the shipbuilding simulation method, and Fig. 3 is an entire schematic diagram.

The shipbuilding simulation method based on the unified database is for simulating the building of a ship based on information which is expressed by means of standardized data structure accumulated in the unified database 10. In this method, with the goal of expressing, within building simulation, detailed motion of a worker, i.e., motion of element operation, information required for constructing a virtual shipbuilding factory will be assembled. The shipbuilding factory is constructed from three models, i.e., a product (product including ship) model, a facility (equipment including tools and worker) model, and a process (operation and step) model. These three models are data which becomes a core required for modeling the shipbuilding factory. To carry out the simulation, schedule information 41 and factory layout information 42 will be defined as two associated information which complements the information.

The product model is a data group which is obtained by systemizing an actual product, and the facility model 12 is a data group which is obtained by systemizing actual equipment or a worker such that they can be handled by simulation. It can also be said that these models are virtual produce, equipment and worker. It can also be said that the process model is a virtual operation system introduced by the product model and the facility model 12.

The shipbuilding simulation system used for the shipbuilding simulation method includes unified database 10 in which information concerning building of a ship is accumulated in a standardized data structure, product model setting means 20, facility model setting means 30, building simulator 40 including process model creating means 40A and building simulating means 40B, time series informatization means 50, information supplying means 60, process model accumulating means 70, verifying means 80, and model correcting means 90.

Accumulated in the unified database 10 are basic design information 11, a facility model 12 including equipment information 12A and worker information 12B, process data 13 of a past ship, rule information 14 and quality data 17. By accumulating various types of information in the unified database 10 in this manner, it becomes easy to accumulate and obtain the information as compared with a case where different database is provided for each kind of information, the information can commonly be utilized, and it is possible to unify the management database. The unified database 10 may be physically converged database or may be diversified database which coordinates through communication line.

Even if database is the converged database or the diversified databases, it is important that basically accumulate various types of information have respectively standardized data structures or the various types of information can be converted such that they have standardized data structures, and it is also said "unified" that the various types of information respectively have standardized data structures, or the various types of information can be converted into the standardized data structure.

The facility model 12 is previously created based on information concerning equipment and a worker of the factory (equipment information 12A and worker information 12B), and the facility model 12 is expressed by means of the standardized data structure and is accumulate in the unified database 10. "Standardized data structure" of the facility model 12 means that types and attribution of information concerning equipment and a worker is defined as a class, and relation such as parent and child relationship of classes is defined as an information tree. Tools are also included in equipment of a factory.

In a product model setting step S1 shown in Fig. 1, the basic design information 11 of a ship is obtained from the unified database 10 using the product model setting means 20, and it is set as a product model expressed by means of standardized data structure.

The coupling relation between the completed part of a ship and the component part constituting the completed part is included in the basic design information 11. For example, when the product is a ship hull, the completed part is a block (compartment) constituting the ship hull, and the component part is a plate material constituting the block. The coupling relation is expressed by means of a node (actual material information of part) and edge (coupling information of part). An entire ship is set as the completed part of the ship, and a part which constitutes a ship such as a hull, a ship hull, a ballast tank, a fuel tank, a main engine, an auxiliary equipment, a pipe and a wiring can be defined as the component part.

The basic design information 11 is accumulated in the unified database 10. According to this, it is possible to easily obtain the basic design information 11 without accessing the design system.

The basic design information 11 can also be obtained from a CAD system. By obtaining the basic design information 11 from the CAD system, the basic design information 11 created by the CAD system can effectively utilized for setting the product model or the like. Information including, for example, a coupling relation expressed by means of a node and edge converted from a design CAD data of a ship hull can also be included in the basic design information 11. The information including this coupling relation may be obtained by previously converting by the CAD system, or may be obtained by converting by the product model setting means 20 after the basic design information 11 is obtained. When the basic design information 11 obtained from the CAD system is held by proprietary data structures the individual CAD systems, the CAD data is converted into a data structure which can be utilized in simulation in the product model setting means 20. The basic design information 11 from the CAD system can be obtained using various means such as acquirement through a communication line, and acquirement using near field communication or storing means.

In the product model, attribution information of a part itself constituting the product and coupling information between parts are defined as information concerning a product to be assembled. Information of operation (assembling procedure and process) concerning assembling of the product is not included in the product model.

It is considered that in the product, parts having substances which are component parts are coupled to each other. The product model is defined using a graph structure expressed by means of a node and an edge based on graph theory. An edge which is coupling between the nodes has no directionality, and it is an undirected graph.

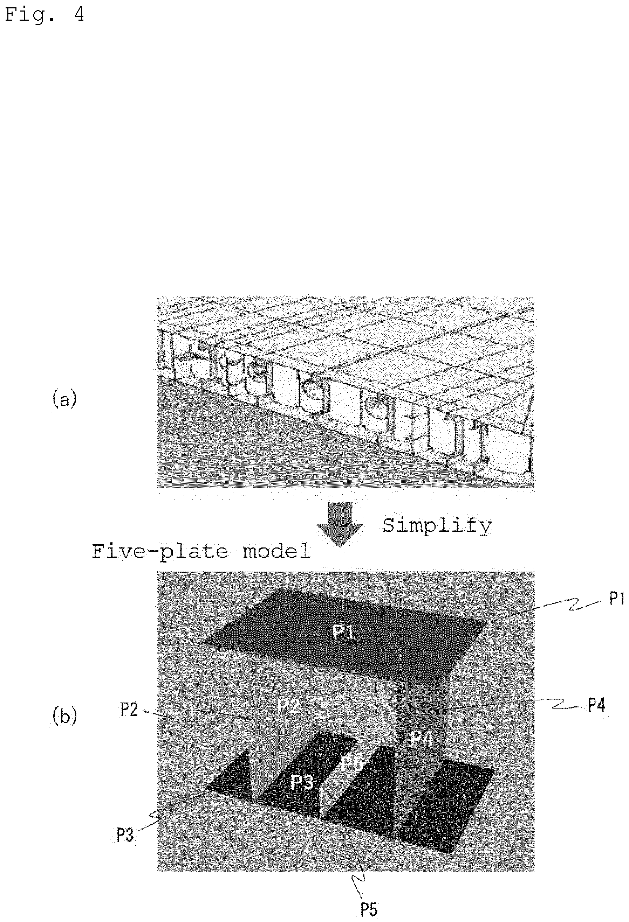

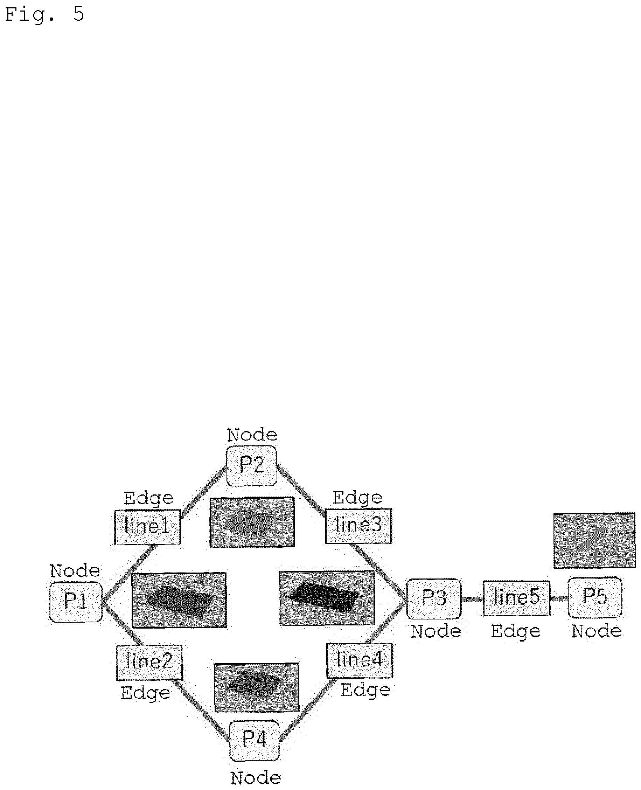

Figs. 4 are diagrams showing examples of a product model, and Fig. 5 is a diagram showing a coupling relation of a five-plate model. The five-plate model in Fig. 5 shows a simplified product model, but a complicated block of a ship hull, a ship body structure and an entire ship can be included as an objective of the product model.

Here, a double bottomed block shown in Fig. 4(a) is an objective of a simplified five-plate model as shown in Fig. 4(b). Although it is not correct in a precise sense, a first plate P1 is recognized as an inner bottom, a third plate P3 is recognized as a bottom shell, a second plate P2 and a fourth plate P4 are recognized as girders and a fifth plate P5 is recognized as a longitudinal member, and they are simplified. There are no color plate or floor, the number of longitudinal members is small, and they are different from an actual completed part, but sufficient and essential elements are extracted.

This completed part is defined by means of a coupling relation shown in Fig. 5. The plates P1 to P5 correspond to nodes of component part substances, and lines 1 to 5 which are the coupling relations thereof correspond to edges. Here, the five-plate model is used for simplification, but also in an actual completed part constituted by many component parts, the entire completed part can be defined by the component part substance and the coupling relation thereof. Therefore, it is possible to define the product model using the similar graph expression.

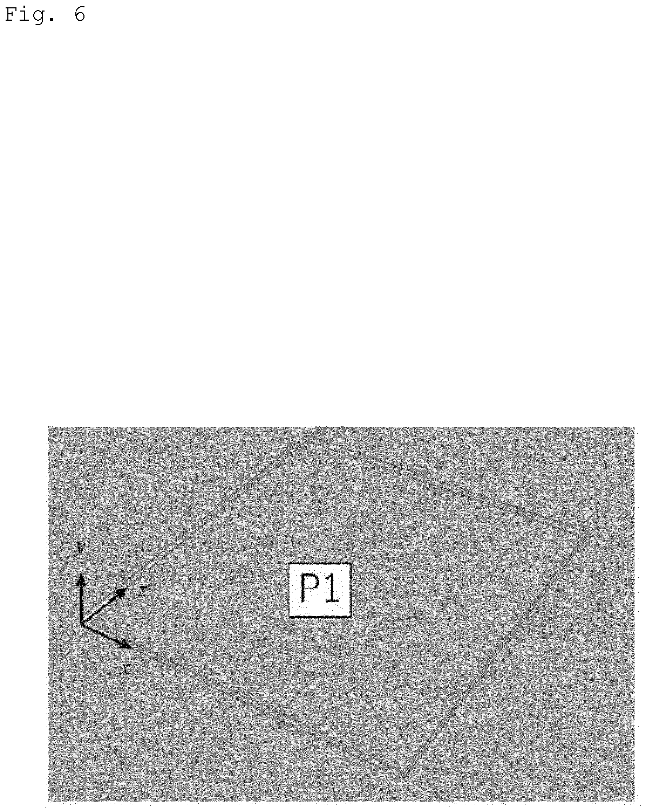

Fig. 6 is a diagram showing a three-dimensional model of a first plate P1.

A shape of a component part of a product can be defined by inputting a 3 DCAD model. As shown in Fig. 6, a coordination system of a three-dimensional model defines a quadrangle (Bounding-box) surrounding an entire member thereof, and the three-dimensional model is located such that among eight apexes of the quadrangle, apexes whose x, y, z coordinate values become minimum are located at original point positions. During execution of simulation, position (local coordination system or coordination in global coordination system) of a reference point and attitude information (Euler angle and quaternion based on initial attitude) defined in the three-dimensional model can be referred as needed.

It is necessary to show coupling information of the component parts on an edge showing joining information of the component parts. In this embodiment, position and attitude information of the respective component parts in the coordinate system in the completed state of the completed part is given to it for simplification. More specifically, three-points as reference points are arbitrarily given to each component parts, and information is held by coordinate data indicating where the three-points are located in the completed coordinate system in the completed state. It is possible to calculate a positional relation between arbitrary component parts by using this information.

Welding line information is held by means of three-dimensional information. For example, one welding line is composed of a welding line path (polyline) and a direction vector of a welding torch (normal vector). These information sets are data defined in the coordinate system in the completed state of the completed part, and when a welding task (custom task 33) is actually carried out in simulation, these information sets convert coordination with respect to the welding line data based on the position and the attitude of the component part at that timing. The direction if the torch is also defined in addition to the welding line path, a position of a worker who is welding can be defined. Further, since the direction of the torch during the welding operation can be recognized, it is possible to determine the welding attitude.

As described above, the coupling relation between the component parts, joining data in the coupling portion, the position and angle of the component part in the completed part are included in the product model. There is a case where a portion of data required for creating the product model in the basic design information 11 obtained by the CAD system is not included depending upon performance of the CAD system. For example, the number of CAD systems which handle backside heating line data is small. In such a case, data required for creating the product model which is not included in the basic design information 11 is created in the product model setting step S1.

If the above-described data is summarized, the product model is summarized as information of node and edge as shown in the following tables 1 and 2.

**[Table 1]**

| Attribution name | Explanation |
|---|---|
| Node name | Node name of itself (name of component part) |
| Completed part name | Name of completed part |
| Coordinate conversion information | Three-point information defining position and attitude of itself in completed state |
| Attribution information of component part | Attribution information of component part such as weight |
| Edge | Edge connected to itself |
| Three-dimensional object | Three-dimensional object placed in simulation space |

**[Table 2]**

| Attribution name | Explanation |
|---|---|
| Edge name | Name of edge of itself |
| Node 1 | Node 1 connected to itself |
| Node 2 | Node 2 connected to itself |
| Attribution information of edge | Attribution information such as welding line data |

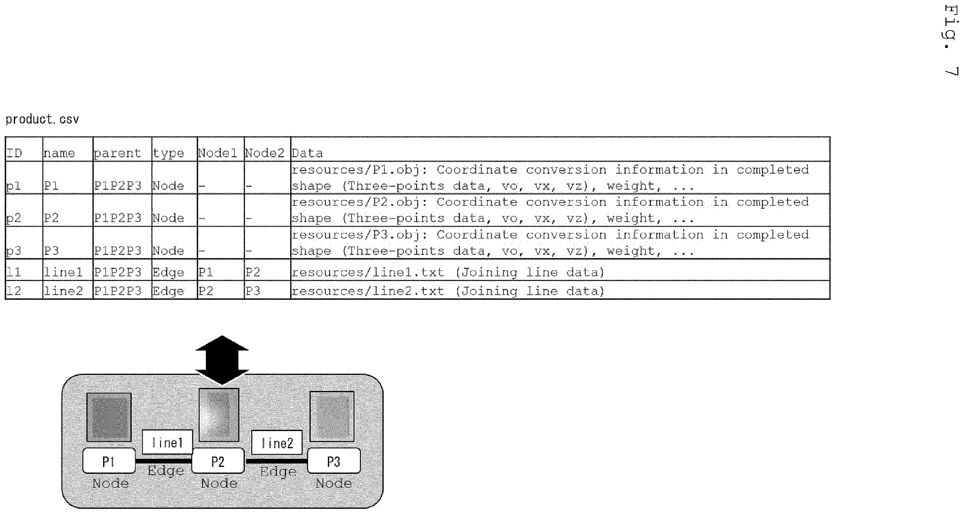

Fig. 7 is a diagram showing examples of a product model of a three-plate model.

Fig. 7 shows a product model which is database in which joining relation between component parts (first plate P1, second plate P2 and third plate P3). "name" represents name, "parent" represents parent product, and "type" represents type. Three reference coordinate points (vo(0,0,0), vx(1,0,0), vz(0,0,1)) of the plates P1 to P3 are omitted. In the data should be the described objective ID, but it is described as "name" for explanation.

Referring back to Fig. 1, in the facility model setting step S2, the facility model 12 which is expressed by means of the standardized data structure using the facility model setting means 30.

In the facility model setting step S2, information concerning equipment and a worker of a factory where a ship is built is obtained from the unified database 10, and it can be set as the facility model 12 which is expressed by means of the standardized data structure, but in this embodiment, since the previously created facility model 12 is accumulated in the unified database 10 as described above, the facility model 12 which is expressed by means of the standardized data structure is directly obtained from the unified database 10 and is set. By the facility model 12 is accumulated as data structure which is standardized in the unified database 10, it is possible to easily obtain the facility model 12 of the standardized data structure, utilize commonly, set, and accumulate new information.

The facility model 12 defines an ability value having individual facility as information concerning facility of a factory in addition to individual name (e.g., welding machine No.1) of the facility and type (e.g., welding machine). A maximum value (range) of function of the facility is defined for the ability value. For example, examples of one of ability values of a crane are a lifting load and speed, and an ability value range thereof is a maximum lifting load and maximum speed.

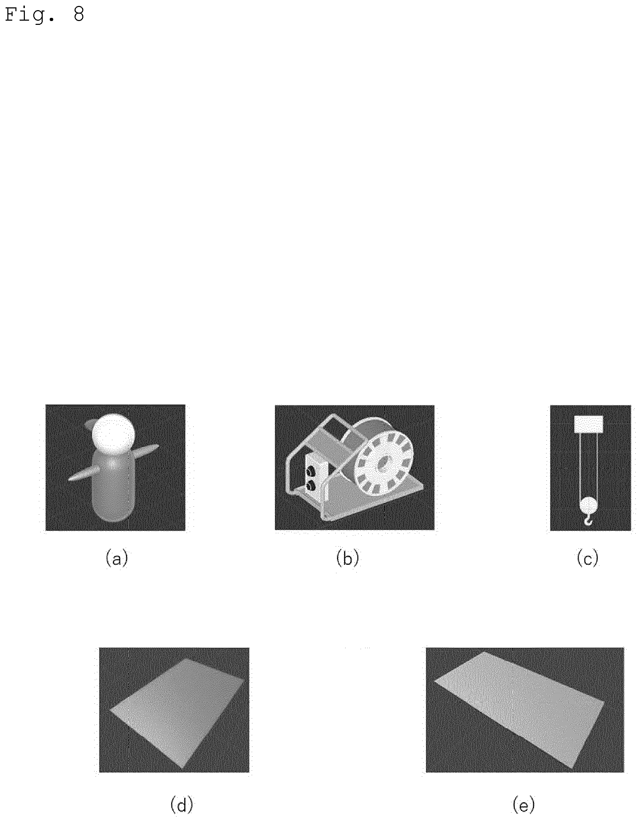

Not only a product, but also a facility can be an obstacle on a moving path of a worker. Therefore, a shape is defined using a three-dimensional model. According to this, in a simulator, it is also possible to determine three-dimensional interference between objects. Here, Figs. 8 show examples of the three-dimensional model of the facility, wherein Fig. 8(a) shows a worker, Fig. 8(b) shows a welding machine, Fig. 8(c) shows a crane, Fig. 8(d) shows a floor and Fig. 8(e) shows a surface plate.

Specific attribution information held by a facility model 12 is shown in the following table 3.

**[Table 3]**

| Attribution name | Explanation |
|---|---|
| Name | Name of facility |
| Type | Type of facility |
| Inherent ability value | Ability value range inherent to facility |
| Three-dimensional object | Three-dimensional object placed in simulation space |

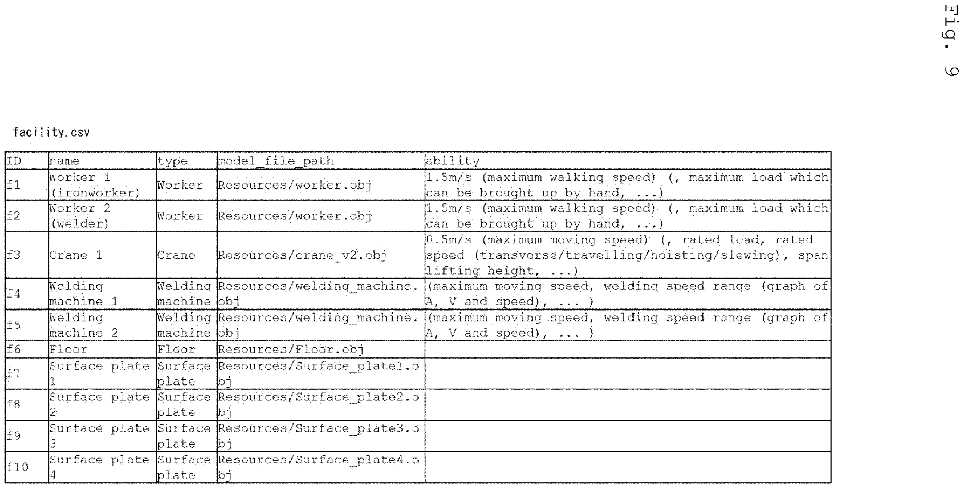

Fig. 9 is a diagram showing examples of the facility model. Fig. 9 shows the facility model which is database in which facility of a factory is registered. "name" is a name, "type" is type, "model_fwile_path" is a shape (three-dimensional model data), and "ability" is ability (ability value range facility is defined).

As described above, the completed part and component part in the product model and equipment of the factory in the facility model 12 is expressed by means of the three-dimensional model. By utilizing the three-dimensional model, it is possible to enhance the precision of simulation.

Referring back to Fig. 1, in a process model creating step S3, using the process model creating means 40A, based on the product model and the facility model 12, clarifying assembling procedure and tasks to build the ship from a component part based on the product model and the facility model, and creating a process model which is expressed by means of the standardized data structure. Here, it is important that the product model and the facility model 12 are first created and the process model is created thereafter. By proceeding the procedure in this order, the process model can reliably be created without tracking the process backward, and later process can be carried out without delay.

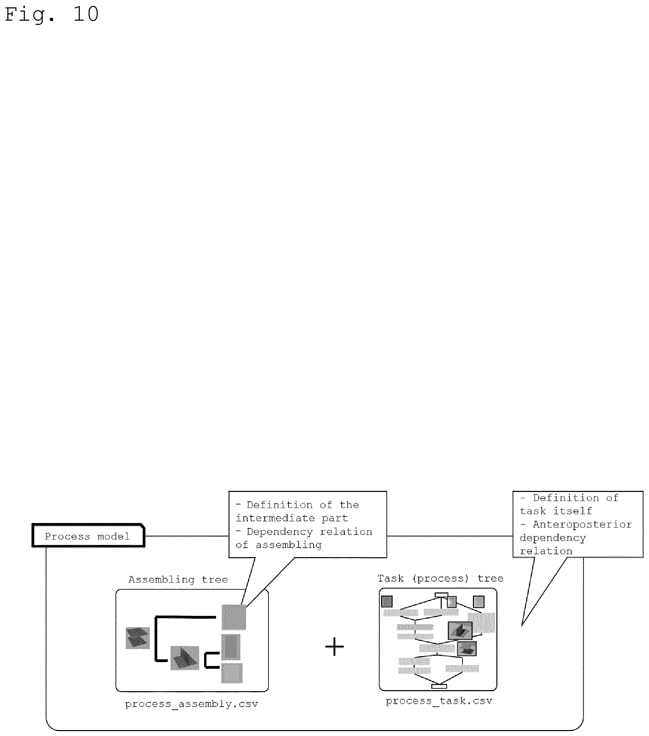

Fig. 10 is a conceptual diagram of the process model.

The process model is data in which operation information concerning a sequence of assembling steps is defined. The process model includes an assembling tree expressing a dependence relation of assembling as assembling procedure for building a ship from a component part, and a task tree expressing a dependence relation between tasks based on the assembling tree. According to this, it is possible to clarify assembling procedure and a relation of tasks concerning the assembling procedure, and it is possible to precisely create a process model. Here, the task means a single operation including a custom task 33.

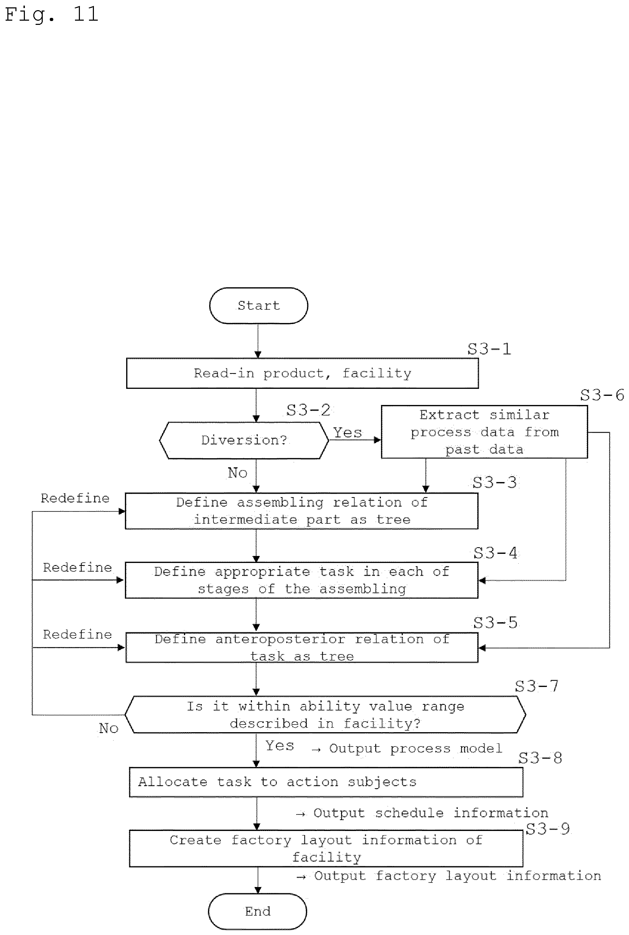

Fig. 11 is a detailed flowchart of the process model creating step.

First the product model which is set in the product model setting step S1 and the facility model 12 created in the facility model setting step S2 are read in the building simulating means 40B (process model creating information reading step S3-1) .

Next, for creating the process model, process data 13 of past ship built in the past referred from the unified database 10, and it is selected whether it should be diverted or not (diversion determining step S3-2) .

When it is selected not to diverse in the diversion determining step S3-2, the process data 13 of past ship is not referred, assembling procedure including intermediate part of the component part is defined as the assembling tree (assembling tree defining step S3-3), an appropriate task in each of stages of the assembling procedure is defined (task defining step S3-4), and an anteroposterior relation as a dependence relation of the task is defined as a task tree (task tree defining step S3-5) .

On the other hand, if it is selected to diverse in the diversion determining step S3-2, similar process data is extracted from the unified database 10 (past ship process data extracting step S3-6), and the process data 13 of past ship extracted in the assembling tree defining step S3-3, the task defining step S3-4, and the task tree defining step S3-5 is referred and diverted. If the process data 13 of past ship is diverted, when the product model or the facility model 12 is changed based on the basic design information 11, it is possible to create the process model swiftly and precisely with effort smaller than that required for creating the process model from the beginning. The process data 13 includes the process model, the process data 13 also can be expressed by means of the standardized data structure and can be accumulated in the unified database 10.

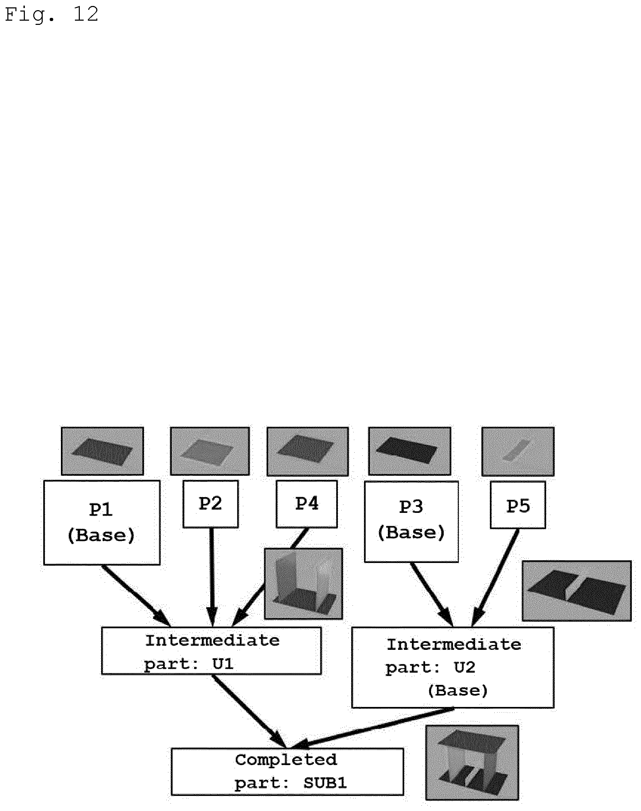

Fig. 12 is a diagram showing examples of an assembling tree of the five-plate model.

In the assembling tree defining step S3-3, information (name and attitude of part) of the intermediate part and the anteroposterior relation of the assembling operation are defined in the assembling tree. Since the anteroposterior relation exists in the assembling order of the parts, the assembling tree is expressed by means of a directed graph.

The intermediate part is a component part in a state where some members are coupled, and by assembling the intermediate part and a member, or the intermediate parts, they become a completed part. Fig. 12 shows a state where the first plate P1, the second plate P2 and the fourth plate P4 are combined to form an intermediate part U1, the third plate P3 and the fifth plate P5 are combined to form a second intermediate part U2, and the first intermediate part U1 and the second intermediate part U2 are combined to form a completed part SUB1. When the first intermediate part U1 is assembled, the first plate P1 acts as a base, when the second intermediate part U2 is assembled, the third plate P3 acts as a base, and when the completed part SUB1 is assembled, the second intermediate part U2 acts as a base.

Attribution information which is required for defining the assembling tree is shown in the following table 4. These information sets are defined in all of the intermediate parts and the completed part.

**[Table 4]**

| Attribution name | Explanation |
|---|---|
| Name of part | Name of part of itself |
| Coordinate conversion information | Information defining position and attitude in completed state of itself |
| Name of base part | Name of base part of child part group of itself |
| Parent part | Part which become parent of itself |
| Child part group | Part group which become child of itself |
| Position and attitude data of child part group | Information defining position and attitude of child part in coordinate system of itself |

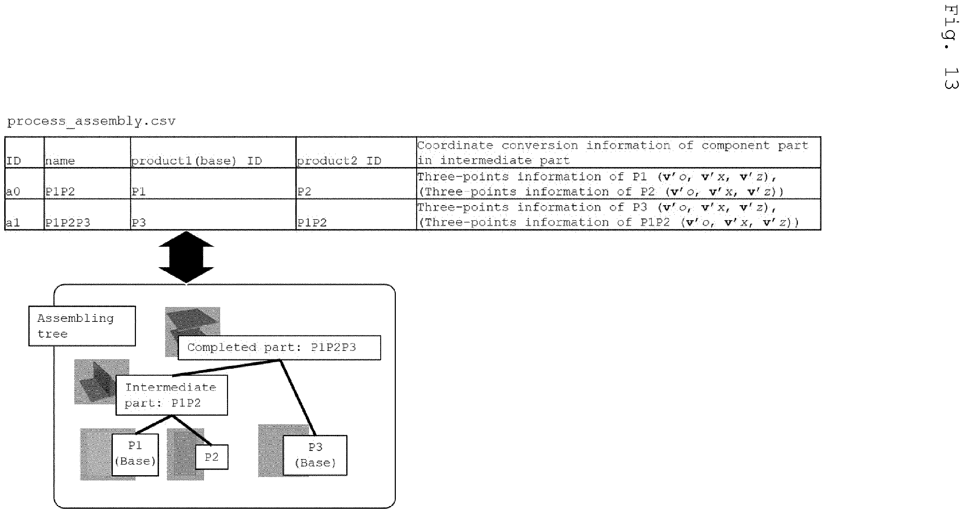

Fig. 13 is a diagram showing examples of an assembling tree of the three-plate model, "name" is name, "product 1 (base)" is a part which acts as a base among parts to be joined, "product 2" is a part to be joined, "coordinate conversion information of a component part in the intermediate part" is definition of the intermediate part. Three reference coordinate points (vo(0,0,0), vx (1,0,0), vz(0,0,1)) of the intermediate part and the completed part are omitted. In the data should be the described objective ID, but it is described as "name" for explanation.

In the three-plate model in Fig. 13, the first plate P1 and the second plate P2 are combined to form the intermediate part, and the third plate P3 is combined with the intermediate part to form the completed part. When the intermediate part is assembled, the first plate P1 acts as a base, and when the completed part is combined, the third plate P3 acts as a base.

In the task tree defining steps S3-5, information required for tasks and anteroposterior relation information of the tasks are defined in the task tree. For example, in the task defining steps S3-4, three types of tasks shown in the following table 5 are defined.

**[Table 5]**

| Task name | Explanation |
|---|---|
| Carry | Carry target part to designated place using facility which designates |
| Temporary welding | Weld objective parts to each other in accordance with designated welding line information using designated facility (welding machine and crane) |
| Regular welding | Weld designated parts to each other in accordance with designated welding line information using designated facility (welding machine) |

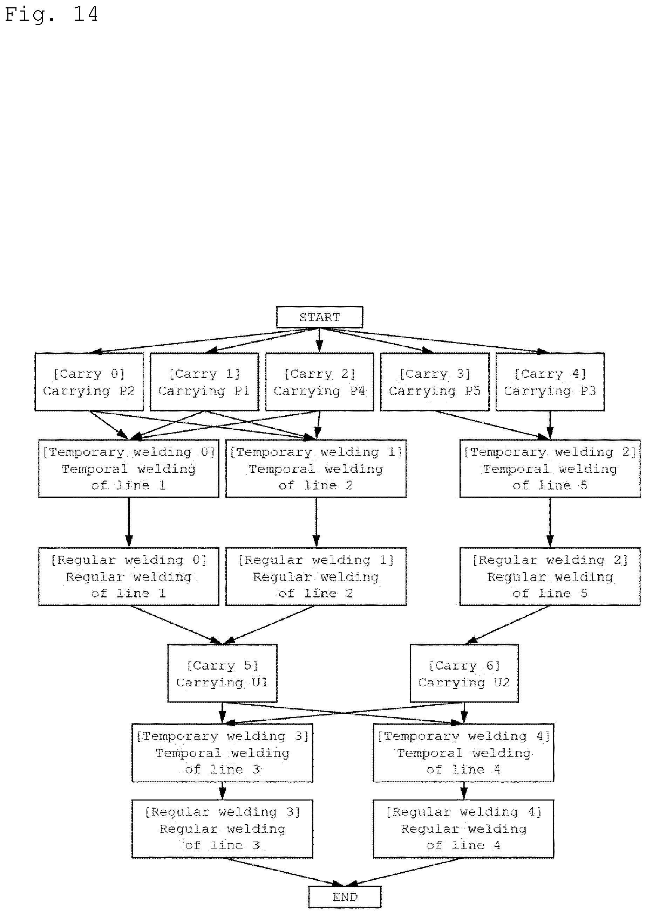

Here, Fig. 14 is a diagram showing examples expressing a relation of the total tasks as a tree.
Fig. 14 is assumed scenario that the completed part is assembled by carrying the plates (steel plates) P1 to P5 for five-plate model at predetermined positions and carrying out temporary welding and regular welding.

Since the anteroposterior relation exists in the tasks, the task tree is expressed by means of the directed graph in the task tree defining step S3-5. For example, a task [temporary welding 0] means that it cannot be started unless all of tasks of [carry 0], [carry 1] and [carry 2] are completed.

Specific attribution information of the task tree is shown in the following table 6. For example, the following information is defined in the task [carry 0]. That is, an object [second plate P2] is carried such that this object is located at a position (8m, 0m, 2m) on an object [surface plate 2] at an Euler angle (0, 0, 0) using facility [crane 1]. A coordinate of a start point is not defined in the carry task, and it is started from a coordinate in an execution timing of the task when simulation is carried out. Similarly, the following information is defined in the [regular welding 0]. That is, an edge [line 1] (coupled portion between the first plate P1 and the second plate P2) is regularly welded to an objective using the facility [welding machine 2] at the speed of 0.2 m/s. This task cannot be started unless the task [temporary welding 0] is completed due to an anteroposterior relation of the task. As information of a welding path, information associated with the edge of the product model is referred.

**[Table 6]**

| Attribution name | Explanation |
|---|---|
| Name | Name of task |
| Type | Type of task |
| Object group | Object group which is objective in task |
| Facility group | Facility group utilized in task |
| Precedent task group | Task group which must be completed until task is started |
| Task information | Necessary information inherent to execution of task |

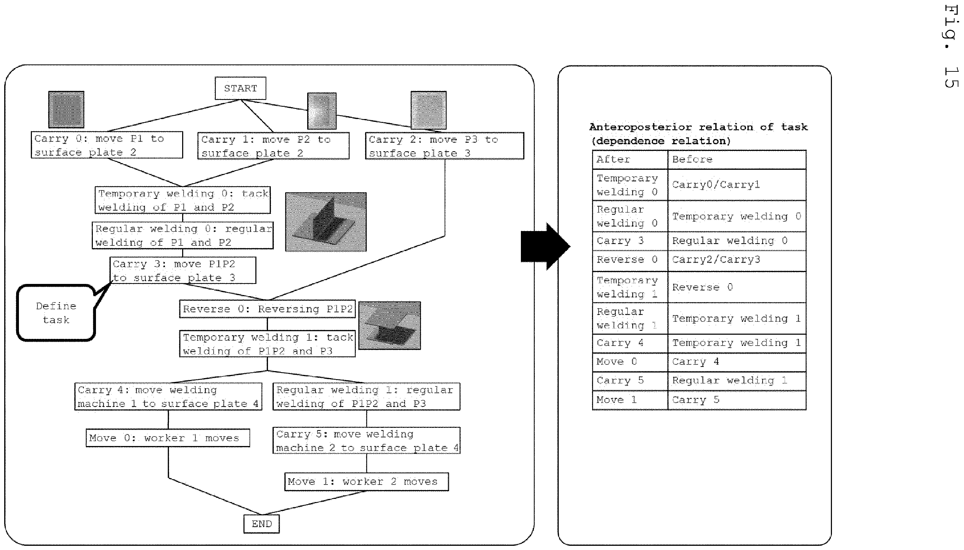

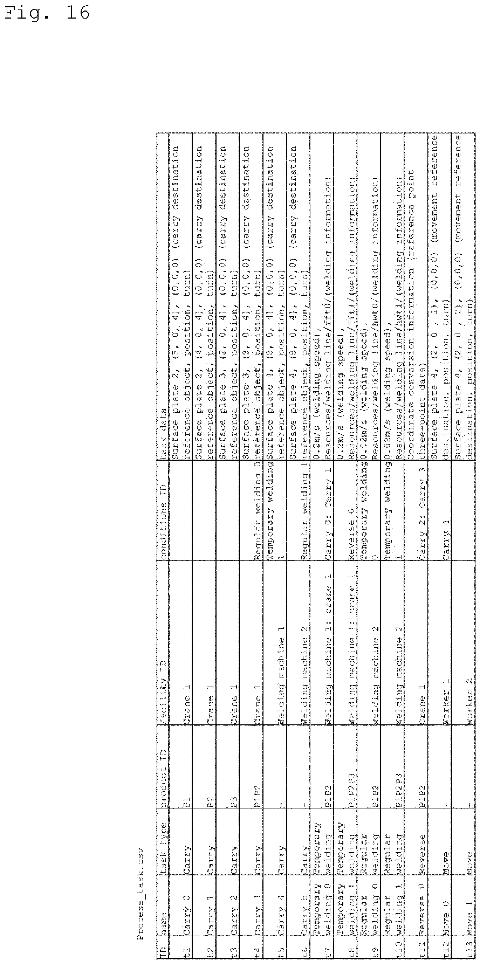

Fig. 15 is a diagram showing examples of the task tree of the three-plate model, and a right table expresses a left graph diagram. Fig. 16 is a diagram showing examples of data of the task tree of the three-plate model. In Fig. 16, "name" is name, "task type" is type, "product" is a related part, "facility" is related facility, "conditions" is task tree information, and "task data" is task information (inherent data required for that task). In the data should be the described objective ID, but it is described as "name" for explanation.

As shown in Fig. 15, this example is assumed scenario that the completed part is assembled by carrying the plates (steel plates) P1 to P3 for three-plate model at predetermined positions and carrying out temporary welding and regular welding.

As shown in Fig. 11, in the process model creating step S3, schedule information 41 of a worker is created based on the assembling procedure and a task using the process model creating means 40A (schedule information creating step S3-8). As shown in Fig. 11, it is important that the assembling procedure is first determined and a task is determined later. According to this, the process model can reliably be created without tracking the process backward, and later process can be carried out without delay. That is, the assembling tree is first created and the task tree is created later.

The schedule information 41 is the allocation of tasks, including their order to a worker as each action subject. According to this, it is possible to precisely replicate and simulate all of production actions of the worker including the main operation and the associated operation based on the schedule information 41. The schedule information 41 is provided to a user from a monitor or printer of the information supplying means 60. According to this, the user can directly or indirectly check the created schedule information 41 as necessary. It is also possible to provide the schedule information 41 to the user only when the user requires.

Although information concerning the assembling tree and the task tree is defined in the process model, the schedule information 41 defines allocation of a worker in charge and specific execution order of tasks for the respective tasks defined in the task tree.

A forming example of the schedule information 41 is shown in the following table 7. In this example, a worker 1 is assumed to be an ironworker, and a carry task and temporary welding task are allocated. The worker 1 starts from a task [carry 0], and sequentially carries out up to a task [temporary welding 4]. On the other hand, a worker 2 is assumed to be a welding person, and regular welding tasks are allocated in a sequential order. The worker 2 starts from a task [regular welding 0], and sequentially carries out up to a task [regular welding 3].

**[Table 7]**

| Person in charge | Task in charge and execution order |
|---|---|
| Worker 1 | Carry 0, carry 3, carry 2, carry 1, carry 4, temporary welding 1, temporary welding 2, carry 5, carry 6, temporary welding 3, temporary welding 4 |
| Worker 2 | Regular welding 0, regular welding 1, regular welding 2, regular welding 4, regular welding 3 |

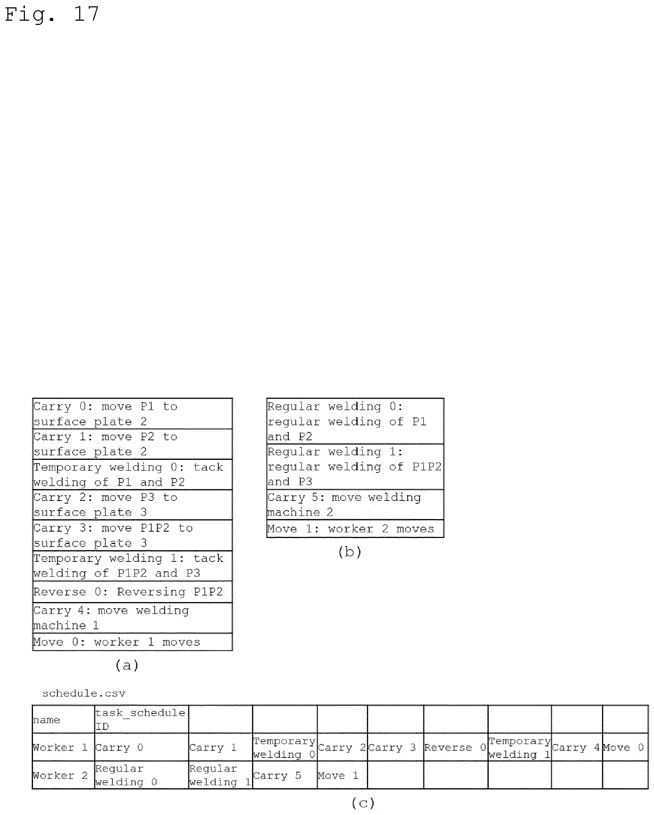

Figs. 17 are diagram showing examples of allocation of a task to a worker and order of the tasks in the three-plate model shown in Figs. 15 and 16. Fig. 17(a) shows allocation and order of tasks to the worker 1, Fig. 17 (b) shows allocation and order of tasks to the worker 2, and Fig. 17(c) shows data type schedule information. In the data should be the described objective ID, but it is described as "name" for explanation.

As shown in Fig. 11, in this embodiment, before a schedule information creating step S3-8, it is determined whether a task exceeds an ability value range of facility based on the facility model 12 (ability value range determining step S3-7) .

When it is determined that the task does not exceed the ability value range in the ability value range determining step S3-7, the procedure proceeds to the schedule information creating step S3-8 and the schedule information 41 is created. By creating the schedule information 41 when it is determined that the task does not exceed the ability value range of facility, it is possible to prevent a case where the schedule information 41 which carry out simulation exceeding the facility or ability value range of tasks is created. The created process model is supplied to a user from the information supplying means 60.

On the other hand, when it is determined that the task exceeds the ability value range of facility in the ability value range determining step S3-7, the procedure is returned to the assembling tree defining step S3-3, the task defining step S3-4 and the task tree defining step S3-5, and definition of the intermediate part, definition of the assembling tree, definition of task and definition of the task tree is redefined. By redefining each of definitions, it is possible to create a more precise process model.

After the schedule information creating step S3-8, factory layout information 42 concerning location of equipment and a worker in the factory which are actually used is created based on the assembling procedure and the task (factory layout information creating step S3-9). According to this, it is possible to carry out the simulation based on the factory layout information 42 on which the locations of the equipment and the worker are reflected. The factory layout information 42 is provided to a user from a monitor or printer of the information supplying means 60. According to this, the user can directly or indirectly check the created factory layout information 42 as necessary. It is also possible to provide the factory layout information 42 to the user only when the user requires.

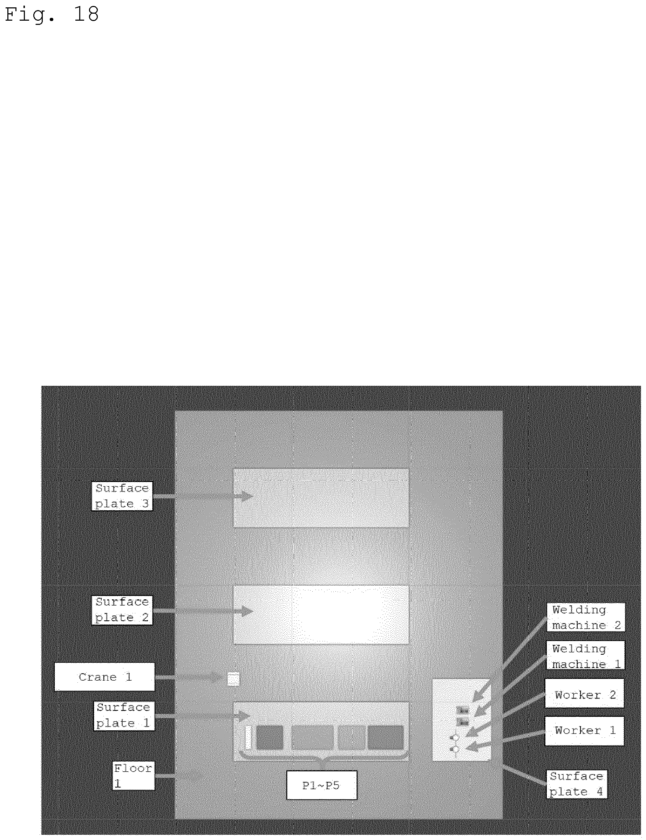

The location information in a factory is not defined in the product model and the facility model 12 which are defined until now. Hence, in the factory layout information 42, initial locations of the objects are defined. Required attribution information is shown in the following table 8. Fig. 18 is a diagram showing examples of location in an actual simulation space.

**[Table 8]**

| Attribution name | Explanation |
|---|---|
| Object name | Name of the product or facility to be placed in the simulation space |
| Reference object name | Object which is standard of placement |
| Coordinate information | Positions (x, y, z) placed with respect to reference object Positions placed with respect to reference object (x, y, z) |
| Attitude information | Attitude placed with respect to reference object (Euler angles, φ, θ, ψ) |

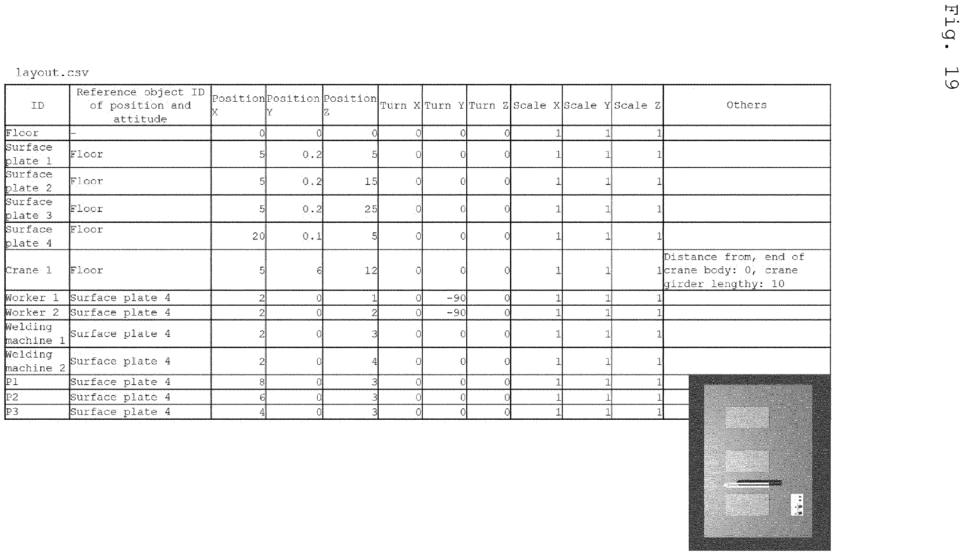

Fig. 19 is a diagram showing examples of factory layout information in the three-plate model. In the data should be the described objective ID, but it is described as "name" for explanation.

A part which is actually utilized for simulation and location information of a facility are defined in layout.csv from databases of the product model and the facility model 12.

Referring back to Fig. 1, after the process model creating step S3, the created process model expressed by means of the standardized data structure is accumulated in the unified database 10 using the process model accumulating means 70 (process model accumulating step S4). By executing the process model accumulating step S4, for example, it is possible to carry out the time evolution system simulation using the accumulated process model as the process data 13 of past ship in a next simulation chance or simulation of a similar ship.

For example, since data structure of the process model is based on standardizing types or attribution of information, and relation between a plurality of information sets, it becomes easy to create, accumulate and utilize the process model. Here, "standardized data structure" of the process model means that information concerning process e.g., types and attribution of information such as a task as element operation (attribution information provided with starting time, end time and the like) is defined as a class, and relation such as parent and child relationship of classes is defined as an information tree.

The quality data 17 of the standardized data structure which is accumulated in the unified database 10 can also be utilized for creating the process model. For example, when the assembling tree or the task tree are defined or created, or the schedule information 41 or the factory layout information 42 is created, it is possible to create them in consideration of quality standard as the quality data 17, or past quality status. The process model and the like can be created in consideration of a design condition, a production condition or an inspection result of a past ship, and quality status accumulated as quality of a launch test or after launch. For example, the process model, the schedule information 41 and the factory layout information 42 can be created in consideration of operation standard at the time of welding, relation between an assembled part and likelihood of welding defect, past case example which requires correction, failure at the time of non-destructive inspection and proactive measures method, and deterioration or generation of failure after launch and measures method and the like.

After the process model creating step S3, time evolution system simulation (time evolution on three-dimensional space) for sequentially calculating a proceeding status of hourly building based on the created process model is carried out using the building simulating means 40B (simulation step S5).

In the time evolution system simulation, positions of each facilities and product on the three-dimensional platform or an occupation status, and a proceeding status of the custom task 33 are changed based on the process model, thereby simulating the building in the shipbuilding. It is also possible to give random number to daringly deteriorate precision of the intermediate part, and this influence is simulated up to a downstream step. Regarding the relationship between the custom task 33 and the task tree, the custom task 33 are expressed as a tree structure of anteroposterior relation, and connected together to form the task tree.

In this embodiment, the three-dimensional platform is constructed utilizing Unity (Registered Trademark) which is a game engine.

If three of variables x_{f}, xₚ expressing positions, angles and occupations of each facility and product at time t, and sₜ expressing non-completed or completed of the custom task 33 in the process model are defined as parameters, it is possible to express variations of x_{f}, xₚ and sₜ to the next time t+1 by changing the arguments related to the task in accordance with previously set rule in the order of the custom task 33 described in a schedule defined in the building simulating means 40B. According to this, time history of each of the arguments is output.

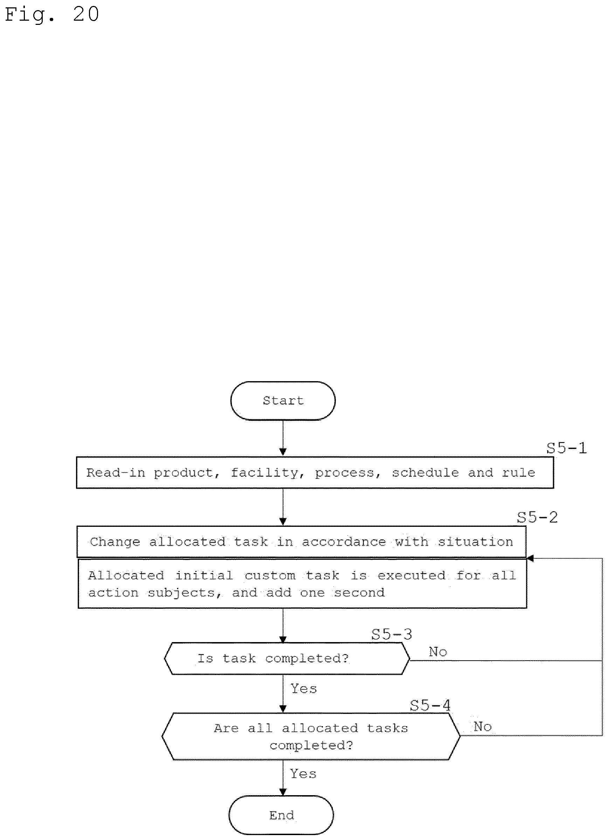

Fig. 20 is a detailed flowchart of the time evolution system simulation.

First, objects are located on the three-dimensional platform based on a product model which is set in the process model setting step S1, a facility model 12 which is set in the facility model setting step S2, a process model, schedule information 41 and factory layout information 42 created in the process model creating step S3, and rule information 14 for autonomously proceeding virtual operation carried out by a worker obtaining from the unified database 10 (simulation execution information reading step S5-1). Information for determining equipment used in virtual operation carried out by a working person can also be included in the rule information 14.

Here, the rule information 14 is a constraint or option which is required for autonomous decision made by the building simulating means 40B. For example, in a welding task (custom task 33), only types of welding machines which can be used are designated as the rule information 14, and the building simulating means 40B autonomically determines which machine should be used during simulation.

That is, the rule information 14 describes how a virtual worker determines in the simulation. By utilizing the rule information 14, it becomes easy for a worker in the simulation to reliably proceed a virtual operation and it becomes easy to select equipment.
The rule information 14 can be accumulated in a database which is different from the unified database 10, but if the rule information 14 is accumulated in the unified database 10 as in this embodiment, the rule information 14 can commonly be utilized in another simulation. The rule information 14 is previously created like a catalog and accumulated in the unified database 10. It is also possible to autonomously learn, create and obtain the rule information 14 by reinforcement learning or a multiagent. As a method for creating the rule information 14 autonomously by the reinforcement learning or the like, a technique in which an agent freely moves in the building simulating means 40B and effectively learns the rule and the rule information 14 is produced is used. One example of the rule information 14 is as shown below.
Rule 1A: A vacant and near tool is obtained.
Rule 1B: A vacant and near tool is obtained also in a subsequent step.
Rule 2: When cranes are used, cranes which do not hinder other steps by interference between the cranes are selected.
Rule 3: A magnetic hoisting attachment is placed on a wagon after usage.
Rule 4: For a subsequent step having the same operation place, tools are collectively brought.

These rules are allocated to a worker before the time evolution system simulation is carried out, and as shown below for example.
Worker 1: Rule 1A.
Worker 2: Rule 1B, rule 2, rule 3, rule 4

The worker 1 is assumed to be a new hire, and the worker 2 is assumed to be a skilled people. Since a new worker works while only thinking about him or herself, the new worker may hinder other steps.

By the rule information 14, task information and the schedule information 41 which are not input are automatically constructed during execution of the time evolution system simulation. In this embodiment, Brains which are determination rules given to a worker are included as the rule information 14.

The Brains correspond to the custom tasks 33 on a one-to-one basis, and the Brains are constructed before the time evolution system simulation is executed. The Brains are sequentially operated on the time evolution system simulation. According to this, a determining manner of the worker is replicated in accordance with a status in the time evolution. Therefore, the worker can determine operations like especially shipbuilding steps which are not repetitive operations but which require on factory floor extremely many determinations utilizing the Brains, and can smoothly proceed virtual operations.

Contents determined by the Brains which are one of the rule information 14 can broadly be divided into the following four.
1. Necessary arguments for any one custom task 33 is determined.
2. One of a plurality of custom tasks 33 belonging one type (task type) is selected.
3. One of a plurality of types of custom tasks 33 is selected.
4. Countermeasure when competition occurs during execution of the custom task 33 is selected based on rules.

In a determining method by the Brains, a candidate group is first created as a combination of parameters, evaluation parameter is extracted for each of the candidate groups, an evaluation value based on a predetermined evaluation value rule is calculated, and the highest evaluation value is finally selected.

Extraction of the evaluation parameter, the predetermined rule, and selection based on the evaluation value are as described below on the base of a carry task as an example, respectively.

### [Extraction of evaluation parameter]

The evaluation parameter group concerning determination is sequentially obtained during the time evolution system simulation.
- p1: Distance from current position of a worker to a product
- p2: Distance from product to crane
- p3: Distance from product to destination (destination is automatically calculated)
- p4: Whether base plate or not (0 or 1)
- p5: Can it move without interference (0 or 1)

### [Evaluation value rule]

$V = \left(p4-0.2*\left(p1+p2+p3\right)\right) * p5$

### [Selection]

A task which obtains the maximum evaluation value among evaluation values which are greater than 0 is selected.

| | |
|---|---|
| Task 1: | v1 |
| Task 2: | v2 |
| Task 3: | v3 |
| ... | |

The evaluation rule of the Brains is constructed by manual or machine learning.

When the evaluation value rule is constructed manually, a rule is estimated and constructed through a result off video analysis or hearing for a worker.

When the evaluation value rule is constructed by machine learning, there are two constructing methods. The first constructing method is to obtain data concerning a worker in a shipbuilding factory, a tool and motion of a product by monitoring using a camera and a position sensor or the like, and from the large amount of data obtained, a parameter X such as a distance between the worker and the product, a distance between thee worker and the tool and the like, and a task selection result (determination history) Y of the worker are organized, the organized data is defined as training data, and this is constructed as a machine learning model such as neural network which forecasts the task selection result Y from the parameter X. The second constructing method is to set a goal, for example, which is better when time is shorter, reinforcement learning having this goal as reward is applied, and optimal strategy is automatically constructed.

Examples of the task type-by-task type Brains are shown in the following table 9. In the table, "AtBrain" shows the Brains of carry At, "FtBrain" shows the Brains of tack welding At, "WtBrain" shows the Brains of regular welding Wt, and "DtBrain" shows the Brains of backside heating Dt.

**[Table 9]**

| | |
|---|---|
| Brains | Automatically determined items *all arguments are common, list of all tasks which can be started |
| AtBrain | (Select task): list of AtPick and AtPlace (used synonymously with determination of objective) |
| | (Determine arguments): utilizing facility name (crane), reference object, coordinate value, and Euler angle of carry destination |
| FtBrain | (Select task): one Ft (used synonymously with determination of objective) (Determine arguments): utilized facility name (welding machine, power source) |
| WtBrain | (Select task): one Wt (used synonymously with determination of objective) (Determine arguments): utilized facility name (welding machine, power source) |
| DtBrain | (Select task): one Dt (used synonymously with determination of objective) (Determine arguments): utilized facility name (burner name, gas spout) |

Concerning the custom task 33, arguments which is automatically determined in simulation, and arguments which is previously constructed in the task tree are shown in the following table 10. The underlined arguments are those which are automatically determined arguments, and the non-underlined arguments are those which are previously constructed.

**[Table 10]**

| | | |
|---|---|---|
| Task type | Function name | Arguments |
| | | (common): task name, task type, function name, objective, utilized facility, antecedent task, subjective name, required facility type and number of pieces |
| Carry At | AtPick | (Inherent) : - |
| | AtPlace | (Inherent): reference object, coordinate value (x, v, z), and Euler angle (θ, φ, ψ) of carry destination |
| Tack welding Ft | Ft | (Inherent): - |
| Regular welding Wt | Wt | (Inherent): - |
| Backside heating Dt | Dt | (Inherent): - |

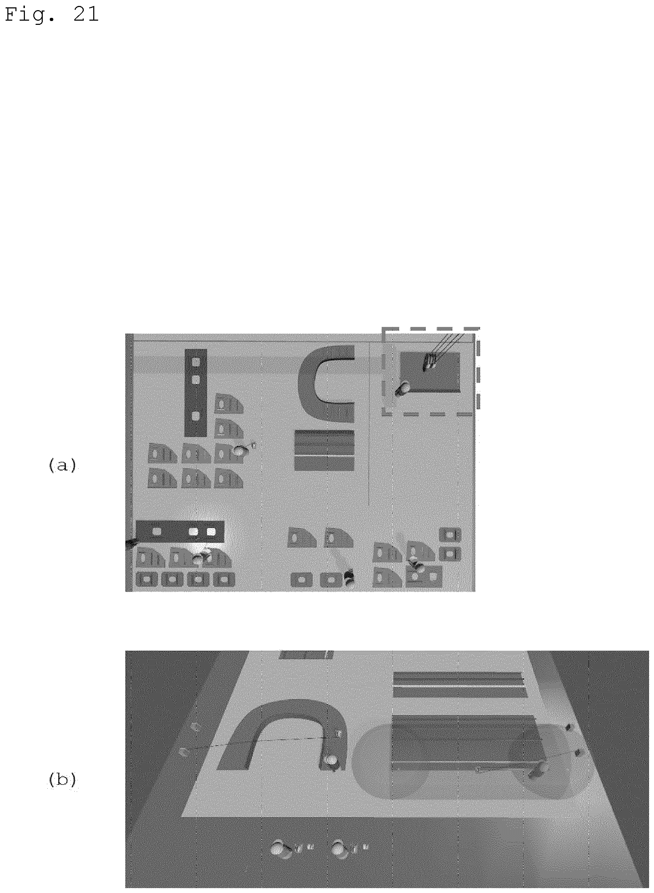

Figs. 21 are diagrams showing a manner of simulation utilizing the Brains, wherein Fig. 21(a) shows a carry task and Fig. 21(b) shows a welding task.

In the carry task, constraint of a carry place, and a locating position are automatically determined.

In the welding task, evaluation parameters such as a position of a welding line are obtained, and an evaluation value is calculated. In the evaluation value calculation, a welding region is into account, such as another operation is not carried out near a welding worker.

After the simulation execution information reading step S5-1 in Fig. 20, among the custom task 33 described in the schedule information 41, a task existing at the front is executed for all action subjects, and one second is added to time (task executing step S5-2). The custom task 33 is previously defined as a method, and an allocated custom task 33 is changed based on the rule information 14 in accordance with a status.

In the time evolution system simulation, sequentially calculates an hourly position of the completed part or the component part of a ship, positions and occupation statuses of the equipment and the worker, and the assembling procedure and the progress status of the task. According to this, it is possible to precisely carry out the time evolution system simulation concerning building of the ship.

Next, it is determined whether the custom task 33 is completed (task termination determining step S5-3) .

In the task termination determining step S5-3, if it is determined that the custom task 33 is not completed, the procedure is returned to the task executing step S5-2, and the custom task 33 is executed.

On the other hand, if it is determined that the custom task 33 is completed in the task termination determining step S5-3, the completed custom task 33 is deleted from the top of the schedule, and it is determined whether all of the allocated custom tasks 33 are completed (simulation termination determining step S5-4) .

In the simulation termination determining step S5-4, when it is determined that all of the allocated custom tasks 33 are not completed, the procedure is returned to the task executing step S5-2, and the custom task 33 is executed.

On the other hand, in the simulation termination determining step S5-4, when it is determined that all of the allocated custom tasks 33 are completed, the simulation is completed. In this manner, the simulation is repeatedly executed until all of scheduled custom tasks 33 are deleted.

Further, as shown in Fig. 1, in the simulating step S5, an interim result of the time evolution system simulation is supplied from the information supplying means 60 (interim result supply step S5-5). The interim result of the simulation is supplied to a user whenever the task executing step S5-2 is completed for example. Based on the supplied interim result, the user determines whether the simulation is continued as it is or the custom task 33 is changed and next simulation is carried out. According to this, the user determines based on the interim result and it becomes easy to carry out simulation suited to the intention of the user.

ON/OFF of the supply of the interim result in the interim result supply step S5-5 can arbitrarily be selected when the user pushes an execution button of simulation for example, and when OFF is selected, the supply is not executed. On the other hand, when ON is selected, for example, a monitor is brought into a browse mode, a simulation status is supplied in a flowing manner just as animation, and the user can sequentially check this status when the user presses a momentary pause button or a play button. When the user presses the pause button, the user can see an already completed custom task 33, a custom task 33 which is being executed, and a scheduled custom task 33 which is not yet carried out. For example, order of the scheduled custom tasks 33 can be changed, and a tool which is used for that custom task 33 can be changed or designated. After the change, if the play button is pressed, the simulation is restarted, and proceeds in accordance with the changed scenario.

In the time evolution system simulation of the simulating step S5, a virtual worker autonomously proceeds a virtual operation utilizing the previously obtained rule information 14 and a task. More specifically, the virtual operation is proceeded utilizing the custom task 33 in which the rule information 14 and a basic task as a task is combined.

As described above, the rule information 14 is a type of a usable welding machine for example. By utilizing the rule information 14 and tasks, it becomes easy for a virtual worker in the simulation to proceed a virtual operation reliably.

After the interim result supply step S5-5, a changing condition to which change is added from the user is received, and the time evolution system simulation can also be executed based on the changing condition. According to this, it is possible to precisely carry out simulation based on the changing condition on which intention of the user is reflected.

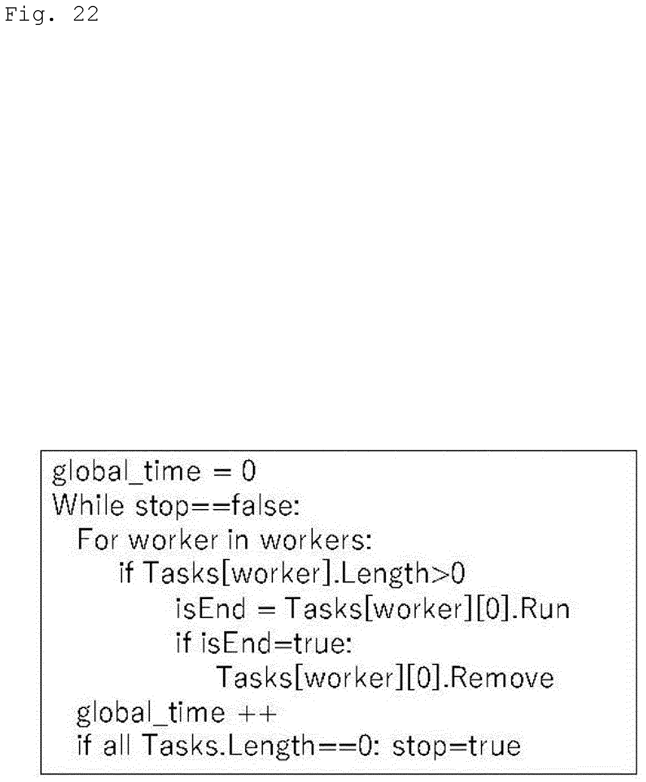

Fig. 22 is a diagram showing a pseudocode of a simulation.

The basic task constituting the custom task 33 expresses a small operation which can generally be used.

The basic task is a function which can be executed on the time evolution system simulation, and before the time evolution system simulation is executed, the basic task is constructed as a function. The basic task is a basic function which is necessary for simulation in which an argument is given, an object of simulation related to the argument is moved or the object is occupied. The basic task is a function in which three-dimensional constrained is taken into account.

The custom task 33 is constructed as a combination of the basic task. If a task includes a custom task 33 constructed by combining the basic task which is a function executable in the time evolution system simulation, it is possible to enhance the precision of time evolution system simulation by a custom task 33 in which small operations are combined by type of operations.

A concrete example of the basic task is shown in the following table 11. Many basic tasks exist in addition to that shown in table 11.

**[Table 11]**

| Basic task name | Argument | Contents |
|---|---|---|
| move | Subject name, destination | Function to move subject worker to destination, Calculate automatic path |
| weld | Subject name, welding line, welding machine | Function to move subject worker to top of welding line together with welding machine, to move the same at welding speed, and renew product |
| Crane Move | Subject name, destination | Function to move subject worker (equipment such as crane) to destination, calculate automatic path, and consider interference with another crane |

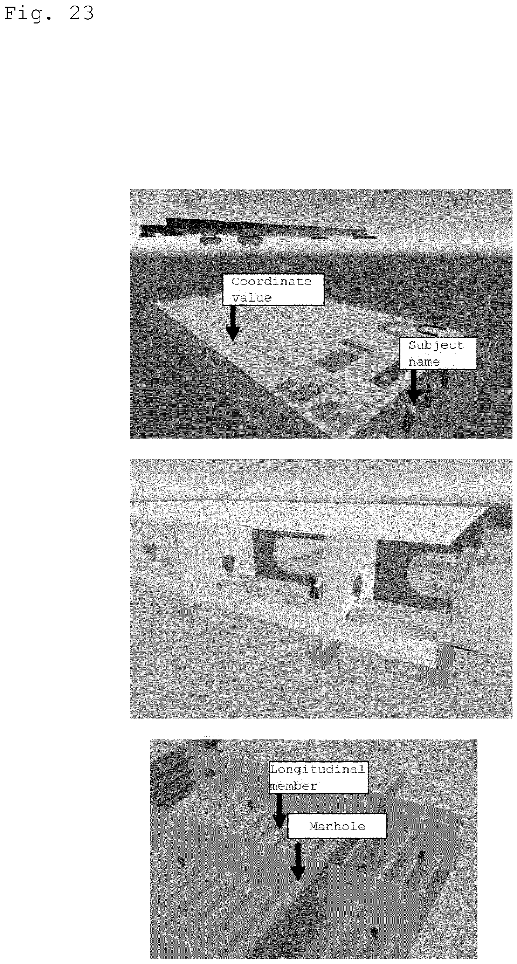

Fig. 23 is a diagram showing a moving task (move) as examples of the basic task. Definition of the moving task is as follows.
- It has as arguments a moving subject name and a coordinate value of a destination.
- On simulation, this becomes a function which moves a subject worker at specific speed.
- The shortest path is automatically calculated which taking three-dimensional land form into account.
- When an obstacle such as a manhole or a longitudinal member exists on the way to a path and it is necessary to go under, stride across or exceeds the obstacle, speed is reduced in accordance with such behavior.

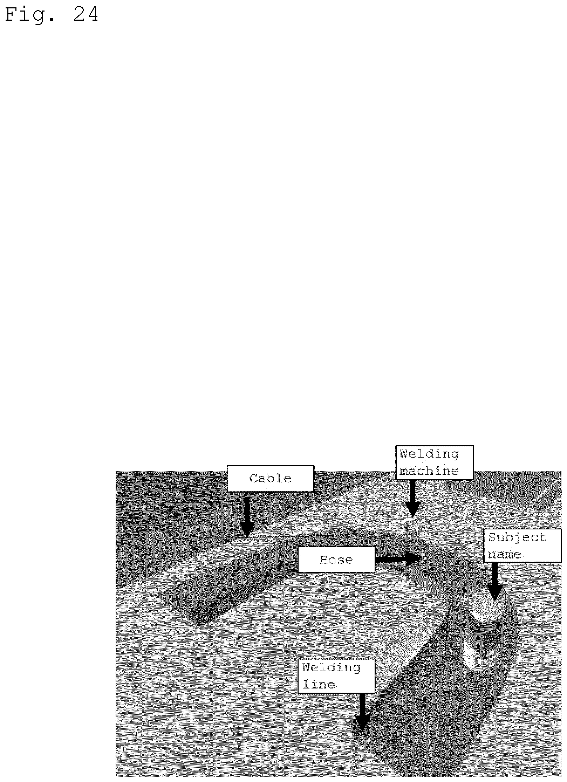

Fig. 24 is a diagram showing a welding task (weld) as examples of the basic task. Definition of the welding task is as follows.
- The arguments are a subject name, a welding line name of objective, and a welding machine name to be utilized.
- On the simulation, it is a function which moving a torch near the welding line at specific welding speed.

- A power source cable, a torch and a hose are replicated in the welding machine, and the cable and the hose interfere with another object.
- When the welding line is overhead and when the welding line is flat, the welding speed is changed.

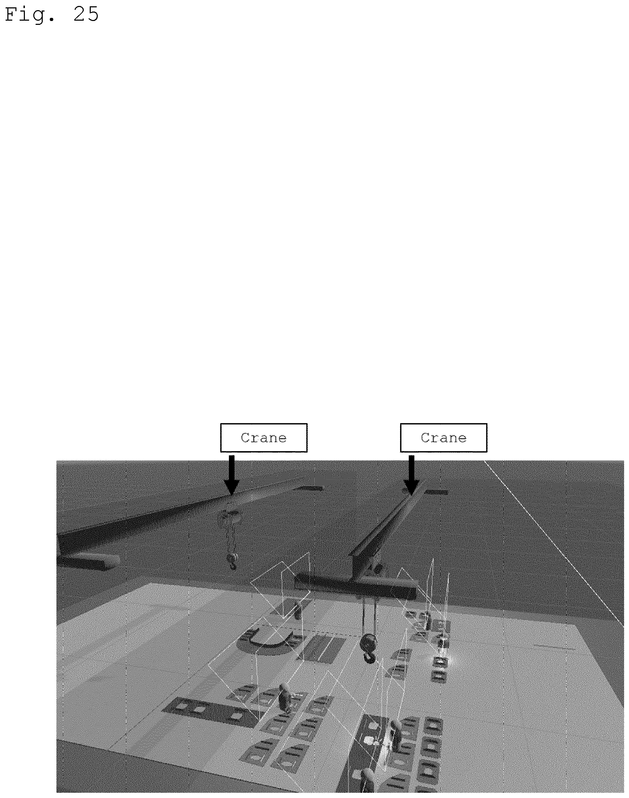

Fig. 25 is a diagram showing a crane moving task (CraneMove) as examples of the basic task. Definition of the crane moving task is as follows.
- The arguments are a subject name and a coordinate value of a destination.
- On the simulation, it becomes a function which moves to a destination at specific moving speed.
- In this basic task, a subject worker becomes an equipment (crane). Concerning the equipment, a style in which a task is instructed from outside and the task is executed is employed.
- Interference determination with another crane is carried out, and a region where the crane can move is taken into account as constraint.

Here, a custom task 33 which is previously defined as a method before task executing step S5-2 will be described in detail. The custom task 33 is defined as follows.
- The custom task 33 is constructed as a combination of the basic task, aggregation of a series of continuous patterned or conventionalized is expressed as one custom task 33. For example, when the custom task 33 is a carry task, "move to object -> grasp object -> move together with object -> place object" is established.
- An argument is given to the custom task 33, basic tasks in a predetermined order are previously constructed based on the argument, and a list of the basic tasks is constructed finally.
- The custom tasks 33 are constructed on a task-by-task basis which are desired to be reproduced such as a carry task, a tack welding task and a welding task.
- The custom task 33 includes a common argument as input and an argument which is inherent to each task.
- As the custom tasks 33, there are one having a person as a subject and one having an equipment as a subject. For example, a subject of a carry task is a person (worker), and a subject of an automatic welding task is an equipment (automatic welding machine).

Examples of a task type, a function name and an argument of a custom task 33 allocated to a person are shown in the following table 12, and examples of a function name and an argument of a custom task 33 allocated to an equipment are shown in the following table 13.

**[Table 12]**

| | | |
|---|---|---|
| Task type | Function name | Arguments |
| | | (common): task name, task type, function name, objective, utilized facility, antecedent task, subject name, required facility type and number of pieces |
| Carry At | AtPick | (Inherent): - |
| | AtPlace | (Inherent): reference object, coordinate value (x, y, z), and Euler angle (θ, φ, ψ) of carry destination |
| Tack welding Ft | Ft | (Inherent): - |
| Regular welding Wt | Wt | (Inherent): - |
| Backside heating Dt | Dt | (Inherent): - |

**[Table 13]**

| | |
|---|---|
| Function name | Argument |
| | (common): task name, task type, function name, objective, utilized facility, antecedent task, subject name, required facility type and number of pieces |
| CraneRun | (Inherent): - |
| CraneHoist | (Inherent): - |
| AutoWeldRun | (Inherent): - |

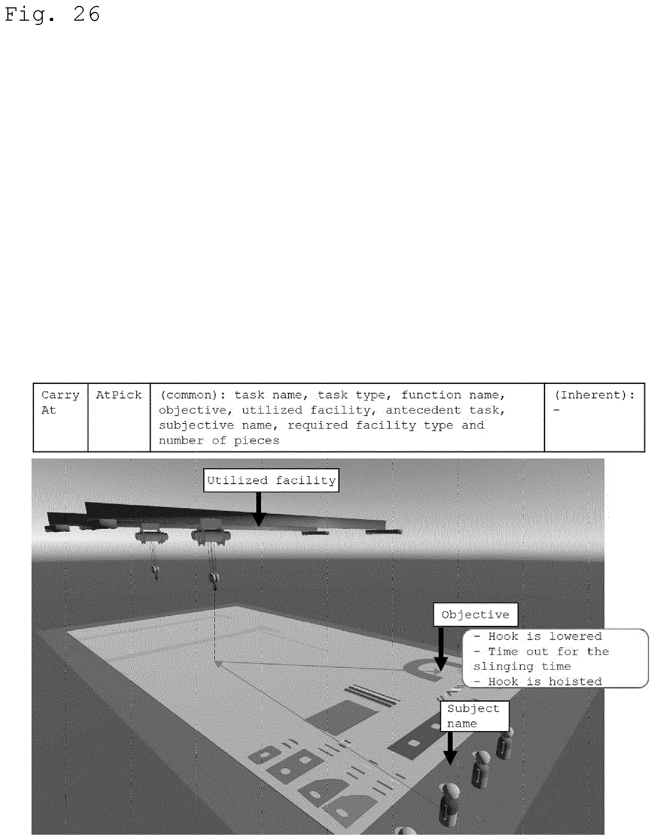

Fig. 26 is a diagram showing examples of carry task "go to receive" as a custom task. A hoist crane is used.

A task type of this carry task is "carry At", a function name is "AtPick", a common argument is "task name, task type, function name, objective, utility facility, antecedent task, subject name, required facility type and the number of pieces", and there is no inherent argument. Examples of a list of the basic task constituting the carry task "go to receive" are shown below.
1. move (subject worker, place of facility)
2. move (subject worker and facility, place of objective)
3. CraneHoist (down)
4. Timeout (designated seconds)
5. CraneHoist (up)

The No. 3 basic task lowers a hook, the No. 4 basic task keeps the hoist crane waiting for the slinging time, and the No. 5 basic task hoists the hook.

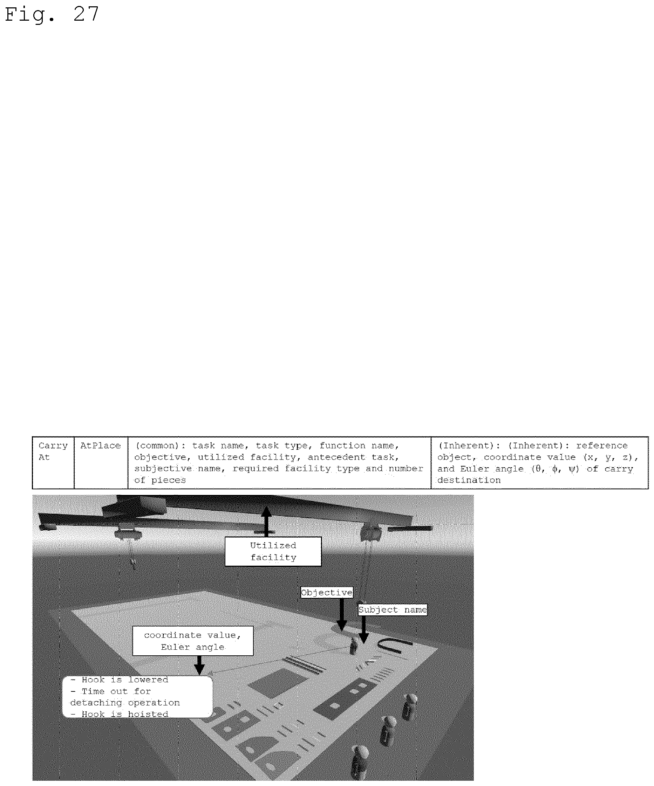

Fig. 27 is a diagram showing examples of carry task "locating" as a custom task.

A task type of this carry task is "carry At", a function name is "AtPlace", a common argument is "task name, task type, function name, objective, utilizing facility, antecedent task, subject name, required facility type and the number of pieces", and an inherent argument is "reference object, coordinate value (x, y, z) and Euler angle (θ, φ, ψ)" of carry destination.

Examples of a list of the basic task constituting the carry task "locating" are shown below.
1. move (subject worker, facility and objective, to designated coordinate value)
2. CraneHoist (down)
3. Timeout (designated seconds)
4. CraneHoist (up)

The No. 3 basic task keeps the hoist crane waiting for time required for detach object.

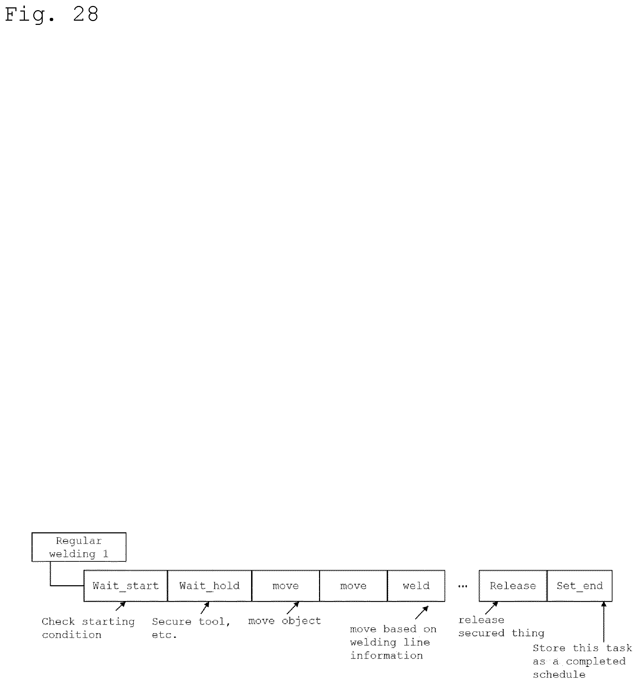

Fig. 28 is a diagram showing examples expressing a welding task which is one of custom tasks by means of a combination of the basic tasks. By executing a task as a method, variables x_{f}, xₚ and st are varied. Hence, methods are defined for each of the custom tasks, but the custom tasks are expressed by a combination of the basic tasks which are further small methods.

First, the basic task (Wait _start) which confirms a starting condition becomes a method to wait until the condition is satisfied.

The basic task (Wait_hold) for securing a tool becomes a basic method in which if all of tools to be used are not available, the procedure must be waited, and if the tools are available, the state is shifted the tools are occupied for the welding task.

Expression such as to move a component part by a crane is expressed as a moving task (move), and a position and an angle are changed at designated speed.

The welding task (weld) is a method in which based on welding line information defined in the product model, a welding torch and a worker are moved at speed based on moment to a welding starting point and a welding attitude, and the component part is changed to a next intermediate part. Various tasks are expressed by the combination of such basic tasks, and the various tasks are constructed as methods previously (before task executing step S5-2) .

In this manner, the custom task 33 describes predetermined standard procedure. The custom task 33 is created like a catalogue before the time evolution system simulation. One example of the custom task 33 is as follows.

Temporary welding (custom task 33) : go to receive a welding machine + go to receive a crane + hang a part + align a position + temporary joint.

At that time, which tool should be selected (welding machine 1 or welding machine 2, etc.) is determined based on the rule information 14 (rule 1A, rule 2A, rule 2, etc.). Concerning the rule 3 of the rule information 14, when a magnetic type crane is used, a new task that the tool is placed on a wagon after it is used is generated. Of course, it is also possible for a user to designate a tool to be used not based on the rule information 14.

Concerning movement also in the basic task, it is estimated that it is difficult to manually input a moving path in all of tasks in many cases. Therefore, it is preferable that it is set such that the building simulating means 40B searches a path and automatically determines. In this case, more specifically, a movable region is dynamically produced by mesh, an apex and a line segment are of the mesh recognized, and the path is automatically calculated by A* algorithm.

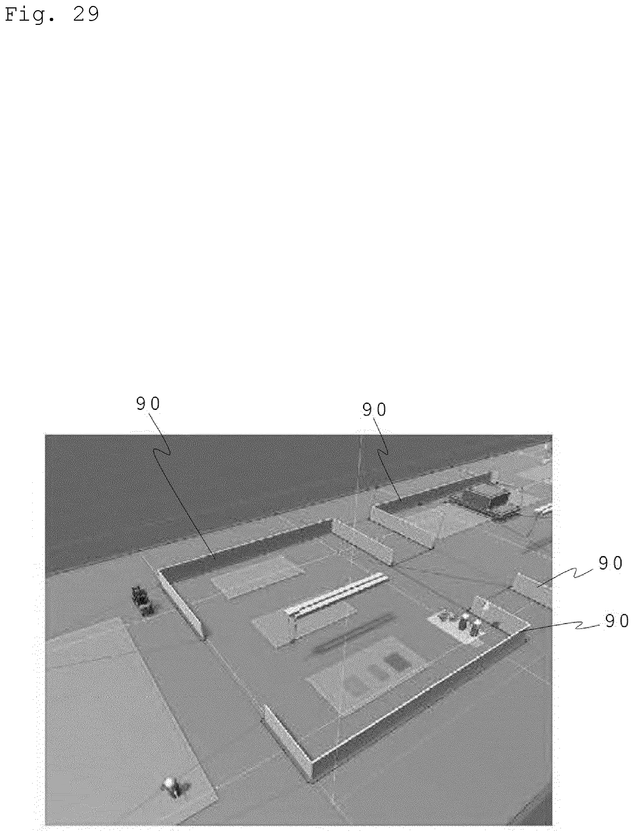

Fig. 29 is a diagram showing examples constituting a movable mesh among a region surrounding by a wall having two entrances. Since a mesh does not exists near a wall 90, a path which moves to bypass the wall 90 is produced. In an actual mounting operation, NavmeshAgent class of Unity (Registered Trademark) is utilized for example. According to this, a point of a destination or an object of the destination is designated in the basic task, a halfway path can largely delete labor of input which is automatically calculated.

Here, a specific example of input data which is input in simulation is shown in the following table 14. Data concerning facility is deleted.

**[Table 14]**

| N o | Data name | Simple explanation | Sample place (input sample) |
|---|---|---|---|
| 1 | Shape data | Shape data of each of parts, in sample, obj format. | SUB_F/Original Data/*.obj |
| 2 | Welding line data | Data showing polyline of welding line and line in torch direction, in sample, txt format. | SUB_F/WeldingL ine/Line*/weld _0.txt |
| 3 | Backside heating line data | Data pf line requiring backside heating like welding line, in sample, txt format. | SUB_F/HeatingL ine/Line*/heat _0.txt |
| 4 | Product model data | Data showing relation between parts and connection relation. | Product.csv |
| 5 | Polyline data | Data showing relation between backside heating line and product. | Polyline.csv |
| 6 | Assembling tree data | Assembling hierarchy of part, data of position and direction of base plate in the hierarchy in local coordinate system. | Assenblytree.c sv |
| 7 | Task tree data | Data showing list of tasks required until product is assembled, parameter, and anteroposterior relation. Partly, blank space is automatically determined in simulation. | Tasktree.csv |

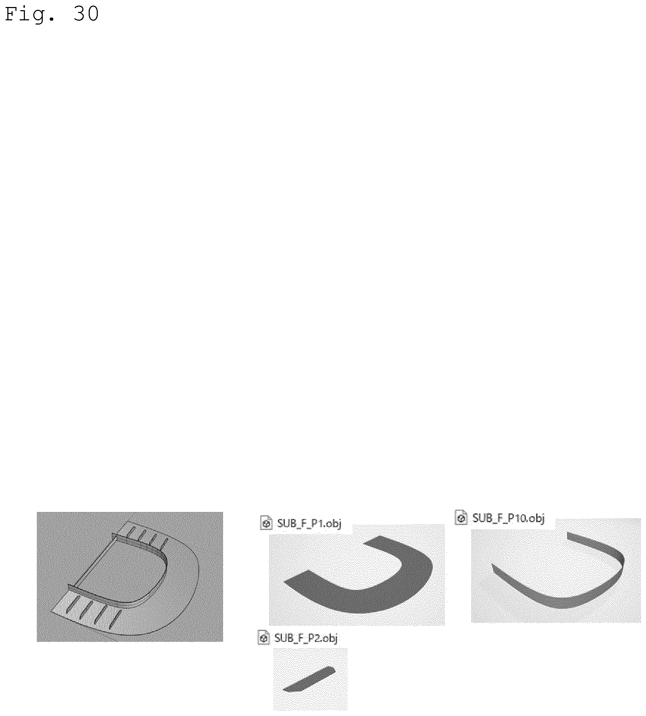

Fig. 30 is a diagram showing examples of shape data.

It is assumed that a sample shown in Fig. 30 is a small set of a name SUB_F. All of parts is defined with a local coordinate system per a part and with stable attitude. Although a solid model is indicated, other data format can also be employed.

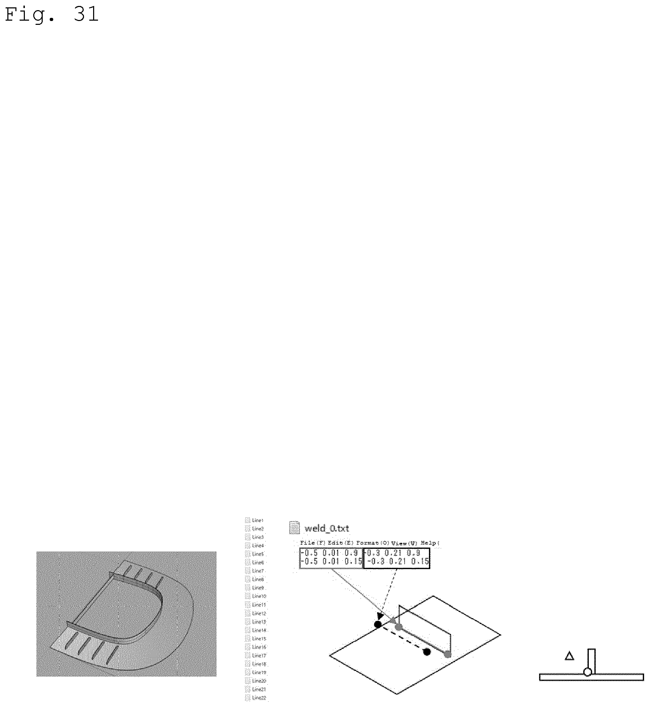

Fig. 31 is a diagram showing examples of welding line data.

The welding line data is defined for each of welding lines, a polyline of the welding line is in a completed coordinate system. In the central drawing, a solid line shows the welding line, and a dotted line is a welding line drawn in an opposite direction of torch contact. The right drawing is a side view, "o" shows a position of the welding line, and "△" shows a position of the welding line drawn in an opposite direction of torch contact.

As described above, in this embodiment, it is defined that welding speed is changed when the welding line is overhead and when the welding line is flat, but it is also possible that data concerning actual welding speed is previously obtained, and the welding speed is changed based on the data.

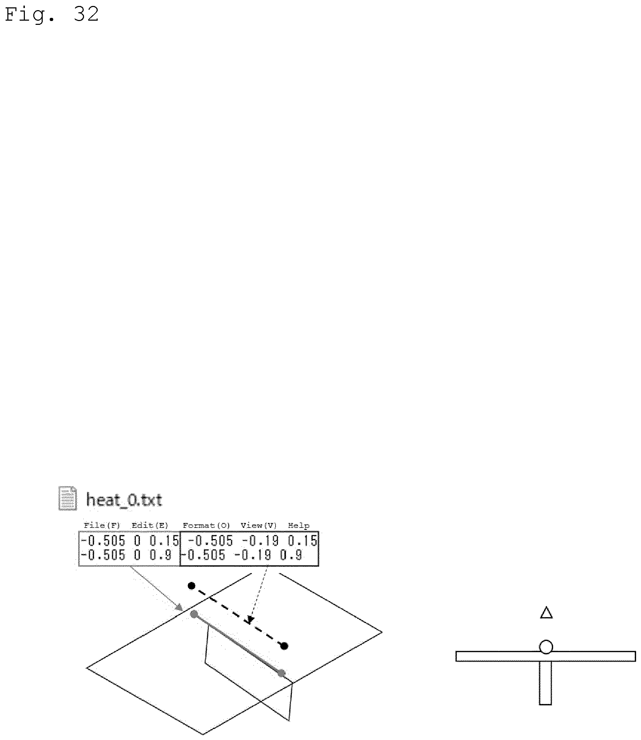

Fig. 32 is a diagram showing examples of backside heating line data.

Here, for the purpose of straightening distortion, it is assumed that fire is struck to a back side of a bone at a small set stage by means of a gas burner. The polyline of the backside heating line is in the completed state coordination system. In the left drawing, a solid line shows the backside heating line, and a dotted line is the backside heating line drawn in a direction opposite from orientation of the gas burner. The right drawing is a side view, "o" shows a position of the backside heating line, and "△"shows a position of the welding line drawn in a direction opposite from the orientation of the gas burner.

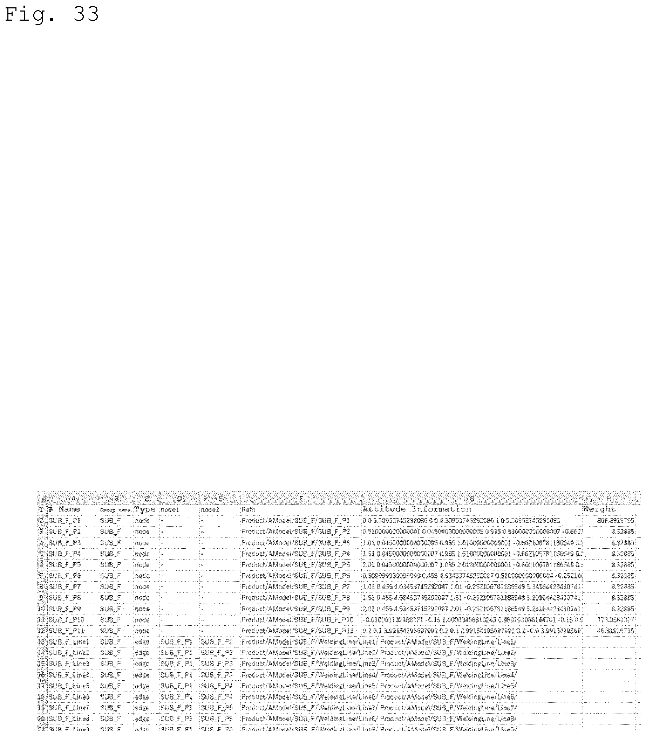

Fig. 33 is a diagram showing examples of product model data.

Column A shows that a title is "name", and names of a part and a welding line are described. Column B shows that a title is a "group name", and a group name which belongs to is described. Column C shows that a title is "type", "node" is described if it is a part, and "edge" is described if it is a line. Column D and E show that titles are "nodes", and information of a line connecting which part to which part is described. Column F shows that a title is "Path", and a path showing a storage location of shape data and welding line data is described. Column G shows that a title is "attitude information", and a relative position and an angle of parts in the completed state are described. Column H shows that a title is "weight", and weight of a part is described.

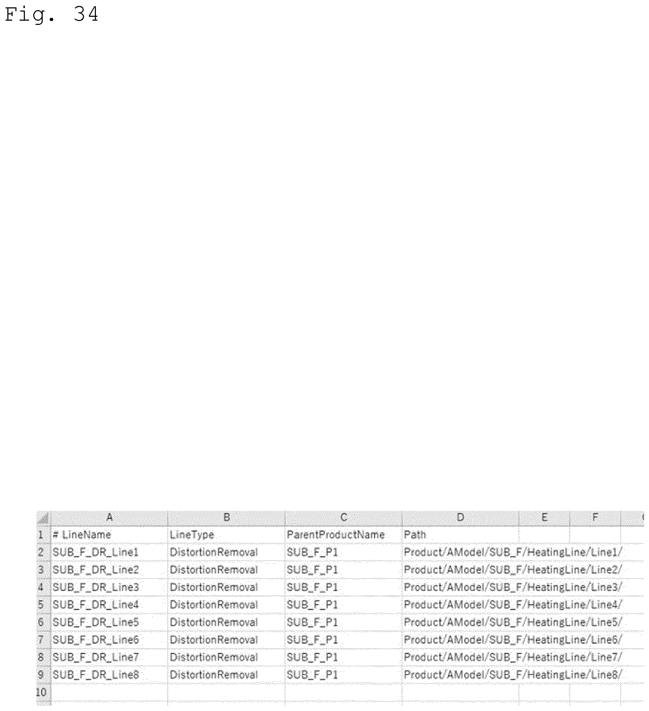

Fig. 34 is a diagram showing examples of polyline data.

Column A shows that a title is "LineName", and a backside heating line name is described. Column B shows that a title is "LineType", and a line type is described. Column C shows that a title is "ParentProductName", and information as to which product (parent product) is reference is described. Column D shows that a title is "Path", and path showing a storage location of the backside heating line data is described.

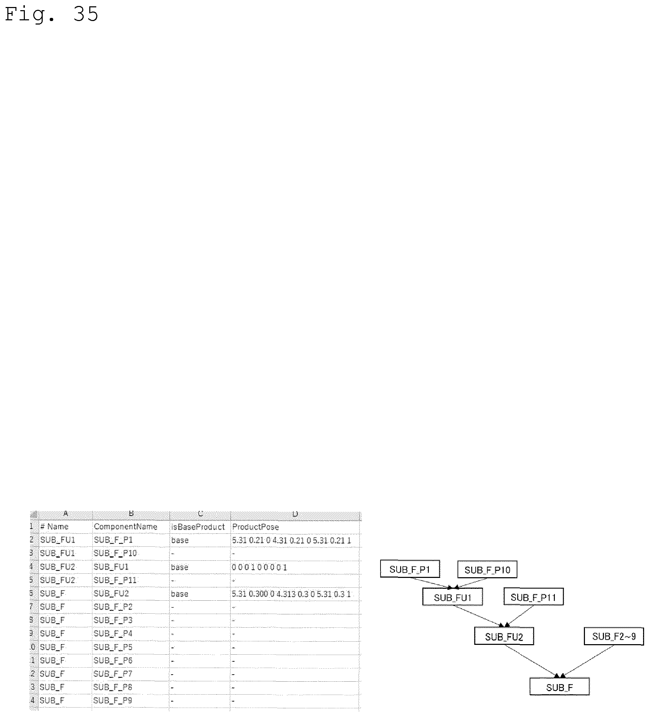

Fig. 35 is a diagram showing examples of assembling tree data.

In the left diagram, column A shows that a title is "Name", and a name of an intermediate part is described. Column B shows that a title is "ComponentName", and a name of member constituting the intermediate part is described. Column C shows that a title is "isBasedProduct", and if it is a base plate, "base" is described. Column D shows that a title is "ProductPose", and if it is a base plate, a position and an angle of the base plate in a local coordinate system of the intermediate part is described.

The right diagram shows examples of the assembling tree of the plate model.

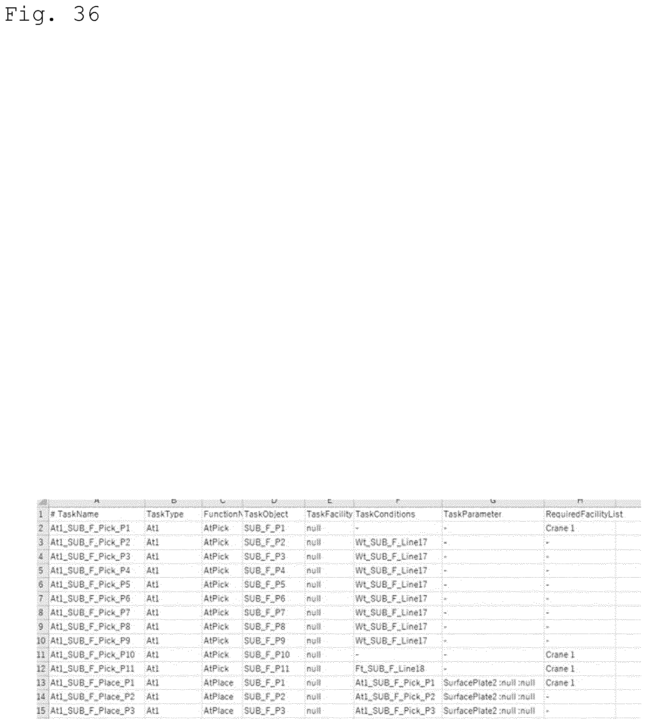

Fig. 36 is a diagram showing examples of task tree data.

Column A shows that a title is "TaskName", and a name of a task is described. Column B shows that a title is "TaskType", and type of a task is described. Column C shows that a title is "FunctionName", and a name in simulation is described. An argument required for each of tasks is described in columns D to G. Column H shows that a title is "RequiredFacilityList", and necessary facility is described.

Examples of types of a task described in column B are At1 (carry), Ft (tack welding), Wt (regular welding), Tt (reverse), Dt (backside heating), and At2 or At3 (movement of product).

In the columns D to G where arguments required for the respective tasks are described, the title of the column D is "TaskObject" and an objective is described. The title of the column E is "TaskFacility" and a utilized facility name is described. The title of the column F is "TaskConditions", and antecedent task is described. The title of the column G is "TaskParameter", and a parameter which is inherent to a task is described. Although "null" is described in the column of task condition of the column F, this is automatically determined in simulation.

Description of column H shows the necessary number of specific type of tools, and if there is not sufficient number of tools, that operation cannot be carried out. For example, "Crane 1" in the Fig. 36 shows that if one crane does not exist, that operation cannot be carried out.

Referring back to Fig. 1, after the simulating step S5, converting a result of the time evolution system simulation into time series data and into building time series information 51 using the time series informatization means 50 (time series informatization step S6). A time series data is time history data such as a position, an angle and occupation status of each facility including a worker which is action subjects.

After the time series informatization step S6, the building time series information 51 is supplied to a user as a result of the time evolution system simulation using the information supplying means 60 (information supplying step S7) . A user can commonly have the obtained building time series information 51 in a cross-sectoral manner at related places by a worker, a designer, a manager and the like utilizing a cloud server. When the user watches the obtained building time series information 51 and feels the necessity to correct a condition of simulation, if only slight change is required, it is possible to operate the shipbuilding simulation system through the cloud server from on-the-spot.

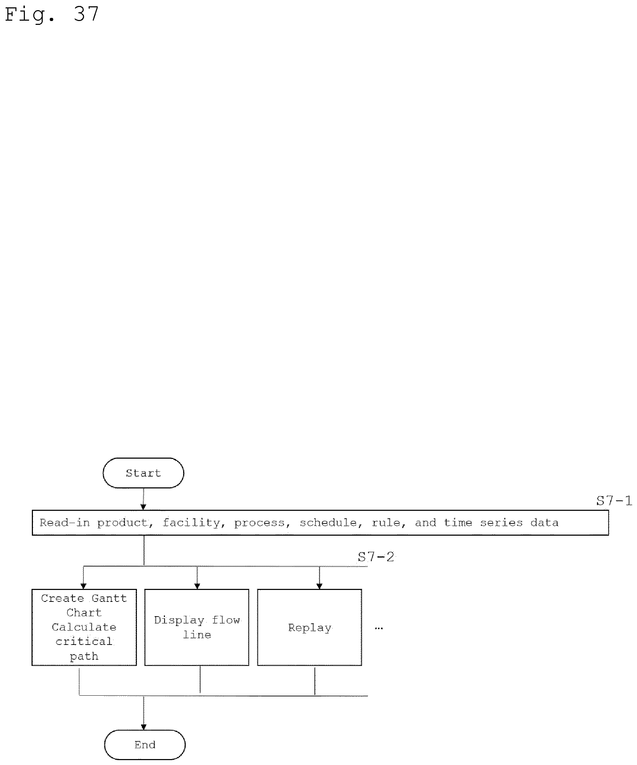

Here, Fig. 37 is a detailed flowchart of outputting processing carried out by information supplying means.

First, the product model, the facility model 12, the process model, the schedule information 41, the rule information 14 and the building time series information 51 are read (output information reading step S7-1).

Next, calculation or creation required for display is carried out, and the building time series information 51 is displayed (display step S7-2). It is preferable that the building time series information 51 includes at least one of a Gantt Chart, an operation procedure manual, a work breakdown structure, man-hour and a flow line. By supplying information in which the building time series information 51 is concretized, the user knows the building time series information 51 as a result of simulation, and he or she can obtain knowledge which is useful for building such as change in a component part or a facility, analysis and interpretation of a bottleneck and forecasting of man-hour. Concerning the work breakdown structure, it is possible to describe starting time and completion time of each task from the time series information. Therefore, although it is not direct, the work breakdown structure can be handled as the building time series information 51. The man-hour is for example, the number of days required for each operation, expressed as "** may day". Further, the building time series information 51 can also be expressed as a PERT diagram. It is described in the operation procedure manual which operation a worker carries out, which equipment (such as crane) is used and from where the tool should be obtained. The operation procedure manual, the work breakdown structure, the man-hour and the flow line can also be expressed as time series information.

In this manner, a shipbuilding simulation method or system executes a product model setting step S1 for obtaining basic design information 11 of a ship from a unified database 10 and for setting the same as a product model which is expressed by means of standardized data structure, a facility model setting step S2 for obtaining, from the unified database 10, information concerning equipment and a worker of a factory which builds a ship and for setting the same as a facility model 12 which is expressed by means of standardized data structure, a process model creating step S3 for clarifying assembling procedure and tasks to build the ship from a component part based on the product model and the facility model 1, and creating a process model which is expressed by means of standardized data structure, a simulating step S5 for carry out time evolution system simulation which sequentially calculates a progress status of building hourly based on the process model, a time series informatization step S6 for converting a result of the time evolution system simulation into time series data and into building time series information 51, and an information supplying step S7 for supplying the building time series information 51. According to this, a user can simulate building of a ship hourly at a detailed operation level based on information which is expressed by means of standardized data structure, and it is possible to improve a factory, improve production design, forecast cost when order is received, and consider investment of equipment, based on the building time series information 51 as a result of precise simulation. Therefore, it is possible to reduce building cost, and shorten a building period. Further, the facility model 12 is previously created based on information concerning the equipment and the worker, and the facility model is expressed by means of the standardized data structure and is accumulate in the unified database 10. Therefore, it is possible to easily obtain the facility model 12 of standardized data structure, utilize commonly, set, and accumulate new information.

Further, since the building time series information 51 exists to an extremely detailed operation level, information is transmitted to a worker such that checking can visually be carried out utilizing a portable terminal such as a tablet, AR (Augmented Reality) technology, MR (Mixed Reality) technology or hologram display, or such that checking in full scale in a virtual space utilizing VR (Virtual Reality) can be carried out, thereby enhancing the operation efficiency. It is also possible to guide the operation by sound such as AI chatbot or the like.

In the information supplying step S7, at least the building time series information 51 is supplied to the unified database 10 as standardized data structure using the information supplying means 60. According to this, types, attribution and format of information supplied as the building time series information 51 can easily be accumulated in the unified database 10 in the standardized data structure as the building time series information 51 while taking relation with the product model into account. Further, the building time series information 51 which is accumulated as the standardized data structure, for example, is obtained from the unified database 10, it is referred to when an actual ship is built, or utilized as information at the time of later simulation, or it is utilized for machine learning of the rule information 14.

Here, "standardized data structure" of the building time series information 51 means that types, attribution and format of information as the building time series information 51 are defined, parent and child relation of information sets, format of each information, and relation of data allocated to the format are defined.

It is also possible to supply a set product model, a facility model 12, a process model, schedule information 41, factory layout information 42 to the unified database 10.

The building time series information 51 which is converted into time series data in the time series informatization step S6 is verified using the verifying means 80 (verifying step S8). At least one of the product model and the facility model 12 is corrected based on a result of verification in the verifying step S8 using the model correcting means 90 (model correcting step S9). For example, it is determined whether a result of the building time series information 51 exceeds an expected target range in the verifying step S8, and if the result exceeds the range, at least one of the product model and the facility model 12 is corrected in the model correcting step S9. According to this, it is determined whether the product model or the facility model 12 should be corrected by verifying the building time series information 51 based on the expected target, and the product model or the facility model 12 can appropriately be corrected. When it is determined that the result of the building time series information 51 does not exceeds the expected target range in the verifying step S8, the processing is completed without proceed to the model correcting step S9. As the expected target, predetermined time or the like is set for example, but the expected target is not limited to this, and a degree of equalization of operation (whether operation load is dispersed), a degree of securing of safety of an operation place, and existence or non-existence of dangerousness can be included.

If at least one of the product model and the facility model 12 is corrected in the model correcting step S9, the process model creating step S3, the simulating step S5, the time series informatization step S6 and the verifying step S8 are repeated based on at least one of corrected the product model and the facility model 12. At that time, the product model or the facility model 12 which is not corrected in the model correcting step S9, the one before correction is used. By repeating each step, the product model and the facility model 12 is corrected, and a simulation result in which building of a ship remain within the target range can be obtained. As the target, predetermined time or the like is set for example, but the target is not limited to this, and equalization of operation (whether operation load is dispersed), securing of safety of an operation place, and existence or non-existence of dangerousness can be included.

The verifying means 80 can also be made to function to verify, without through the time series informatization means 50, the process model created by the process model creating means 40A, an interim result of simulation by the building simulating means 40B, schedule information 41 and the factory layout information 42, and at least one of the product model and the facility model 12 can be corrected based on the verification result by the model correcting means 90.

The above-described steps can be executed by computer by a shipbuilding program.

In this case, the program makes the computer execute at least the process model setting step S1, the facility model setting step S2, the process model creating step S3, the simulating step S5, the time series informatization step S6 and the information supplying step S7. According to this, a user can simulate building of a ship hourly at a detailed operation level based on information which is expressed by means of standardized data structure, and it is possible to improve a factory, improve production design, forecast cost when order is received, and consider investment of equipment, based on the building time series information 51 as a result of precise simulation. Therefore, it is possible to reduce building cost, and shorten a building period.

Further, the program further causes the computer to the process model accumulating step S4. According to this, for example, it is possible to carry out the time evolution system simulation using the accumulated process model as the process data 13 of past ship in a next simulation chance or simulation of a similar ship. Further, for example, since the data structure of the process model is based on standardizing types or attribution of information, and relation between a plurality of information sets, it becomes easy to accumulate or utilize the process model.

The program further causes the computer to the verifying step S8 and the model correcting step S9. According to this, it is determined whether the product model or the facility model 12 should be corrected by verifying the building time series information 51 based on the expected target, and the product model or the facility model 12 can appropriately be corrected.

A shipbuilding simulation method, a shipbuilding simulation program and a shipbuilding simulation system based on a unified database according to a second embodiment of the present invention will be described next. The same symbols are allocated to members having the same functions as those of the above-described embodiment, and description thereof will be omitted.

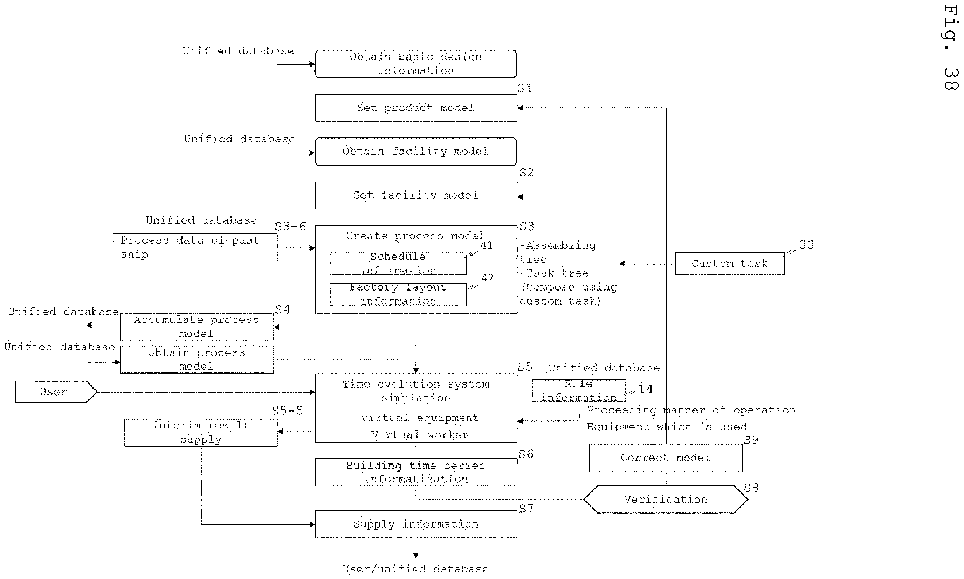

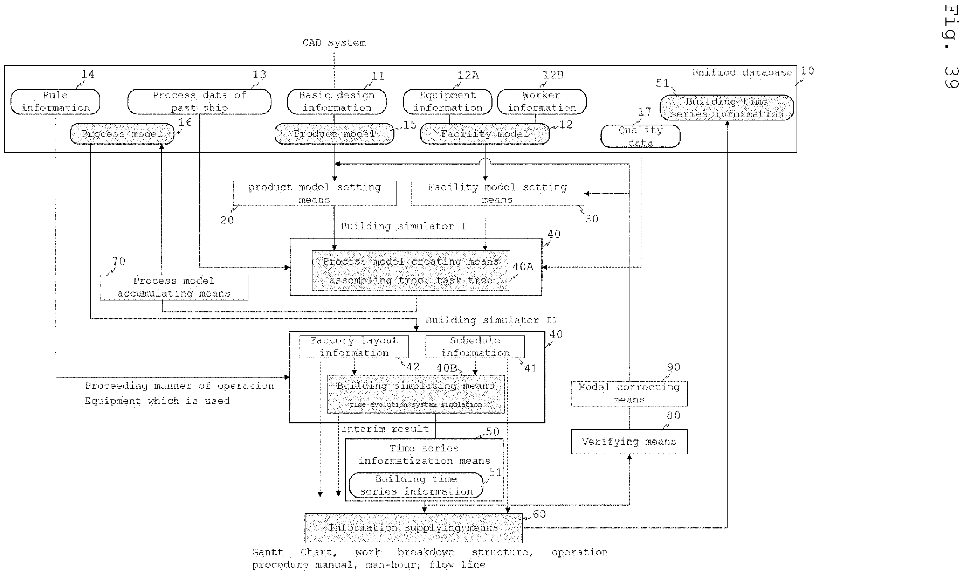

Fig. 38 is a flowchart of the shipbuilding simulation method based on the unified database according to this embodiment, and Fig. 39 is a block diagram expressing by means of functional realizing means a shipbuilding simulation system according to this embodiment.

In this embodiment, a product model 15 is previously created based on the basic design information 11 of a ship, and it is expressed by means of standardized data structure and is accumulated in the unified database 10. According to this, it is possible to easily obtain the product model 15 without accessing the design system.

Further since the product model 15 is the data structure in which types or attribution of information, and relation between a plurality of information sets are standardized for example, it is possible to more easily obtain the product model 15, create a process model 16 and accumulate the models. The standardized data of the product model 15 is information of each blocked and tree-structured block, and more specifically, the data is information of a block name, a constituent member of the block, a member name, a shape of each member, connection information of the member, and information of a welding line. Here, "standardized data structure" of the product model 15 means that types and attribution of these information are defined as a class, and relation such as parent and child relationship of classes is defined as an information tree.

The building time series information 51 supplied from the information supplying means 60 is accumulated in the unified database 10.

The building simulator 40 is divided into two sections, i.e., a building simulation section I having the process model creating means 40A and a building simulation section II having the building simulating means 40B. The building simulation section I creates the process model 16, and the building simulation section II executes the time evolution system simulation.

In this embodiment, by previously executing the process model accumulating step S4 before simulation, the created process model 16 is accumulated in the unified database 10. This process model 16 is expressed by means of the standardized data structure. The process model 16 is obtained from the unified database 10 in the simulating step S5, and the simulating step S5, the time series informatization step S6, and the information supplying step S7 are executed. According to this, when the time evolution system simulation is carried out, time for creating the process model 16 can be omitted. The process model 16 is obtained from the unified database 10 by another computer or a computer placed in another place, and the time evolution system simulation can be carried out.

A shipbuilding simulation method, a shipbuilding simulation program and a shipbuilding simulation system based on a unified database according to a third embodiment of the present invention will be described next. The same symbols are allocated to members having the same functions as those of the above-described embodiment, and description thereof will be omitted.

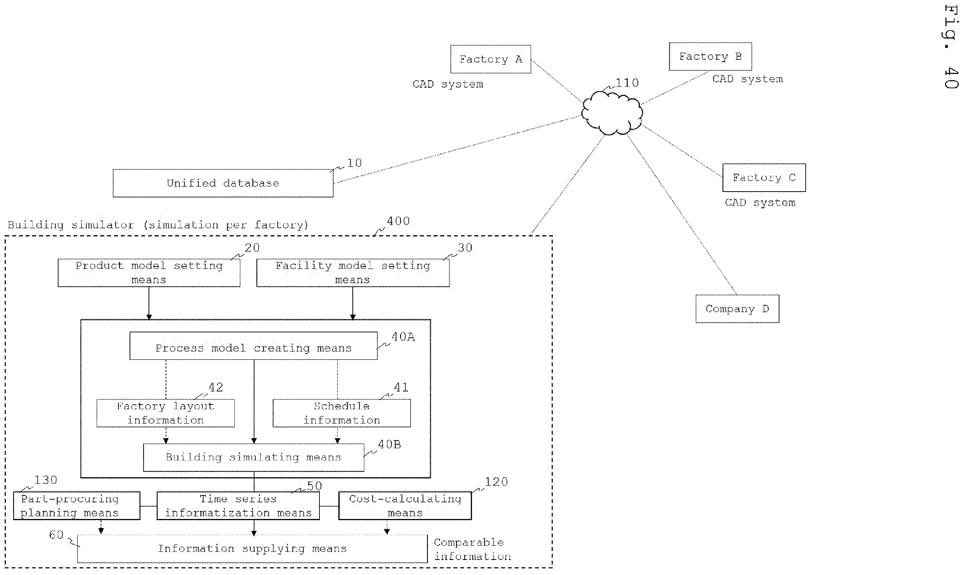

Fig. 40 is a block diagram expressing by means of functional realizing means a shipbuilding simulation system based on the unified database according to this embodiment.

In the shipbuilding simulation system of this embodiment, the product model setting means 20, the facility model setting means 30, the process model creating means 40A, the building simulating means 40B, the time series informatization means 50 and the information supplying means 60 are composed as a building simulator 400, and the unified database 10 and the building simulator 400 are coordinated with through an information communication line 110. According to this, a degree of freedom of placement and convenience can be enhanced, for example, the unified database 10 and the building simulator 400 in different places, or the multiple building simulator 400 can simulate.

The unified database 10 and the building simulator 400 are connected to a factory A, a factory B, a factory C and a company D located at places different from the unified database 10 and the building simulator 400 through an information communication line 110. The company D is not a factory, but is a company which sums up the factories, a company which coordinates for building a ship communally, a company which specializes in basic design of a ship, or a company which certificates producing action.

In the product model setting step S1, the product model setting means 20 obtains basic design information 11 of a ship from the unified database 10, and sets the product model 15 which is expressed by means of standardized data structure.

A facility model 12 of each of factories created from information (equipment information 12A) of equipment and information (worker information 12B) of a worker of the factories A, B and C is accumulated in the unified database 10. In the process model creating step S3, the process model creating means 40A creates the process model 16 for each of the factories. In the simulating step S5, the building simulating means 40B carries out the time evolution system simulation for each of the factories with respect to the product model 15.

According to this, the process model 16 per a factory is created from one product model 15 with respect to the facility model 12 of a plurality of factories accumulated in the unified database 10 for example, and simulation is carried out using the facility model 12 per a factory. Therefore, it is possible to compare production cost and a building period between the factories, it becomes easy to select a factory which actually build, cost is further reduced, and a building period is further shortened. Further, when order of construction of a single or a plurality of ships is received communally for example, it is also possible to forecast the cost and consider the investment of equipment when a plurality of factories communally construct the ship. For example, by sharing jobs with factories, a simulation result can be used for considering a chance of reception of order, e.g., for considering how many orders of ships can be received annually, and for considering the most efficient and beneficial way to allocate which block to which factories. Further, when a certain company order outsources a certain block, it is possible that simulation is carried out using a facility model 12 of an outsource candidate company, and cost and building period are considered based on a result of the simulation. The same company may have all of the plurality of factories or different companies may have a single or a plurality of factories, respectively.

A result of the time evolution system simulation of each of the factories in the building simulating means 40B of the simulating step S5 is supplied to a user from the information supplying means 60 as the comparable building time series information 51 in the information supplying step S7.

According to this, a user can swiftly and reliably compare man-hour prediction results, problems of the facility, and bottlenecks in the factories, and it is possible to compare production cost and a building period.

In the product model setting step S1, the product model obtaining means 20 obtains the basic design information 11 of a ship from any of a CAD system or a plurality of CAD systems of the factories through the information communication line 110. The shipbuilding simulation system supplies the building time series information 51 to the factories and the company D through the information communication line 110. The information supplying means 60 can supply together not only the building time series information 51 but also the basic design information 11 used for the time evolution system simulation, the facility information and all other information.

According to this, even when the shipbuilding simulation system exists at a distant location, it is possible to swiftly obtain the basic design information 11 and supply the building time series information 51 through the information communication line 110.

Since the basic design information 11 of a ship is obtained from the CAD system, design information of the ship created by the CAD system and conversion information can be obtained as the basic design information 11, and it is possible to easily utilize the same such as setting of the product model 15. Although the CAD systems are placed in the factory A, the factory B and the factory C, it is possible to design in representing in one factory or to share and design the CAD systems with a plurality of factories. The CAD system may be placed only in the representative factory.

The building simulator 400 includes cost-calculating means 120 and part-procuring planning means 130.

The cost-calculating means 120 calculates cost related to building of a ship based on the building time series information 51. According to this, it is possible to easily obtain cost related to building of a ship calculated based on the building time series information 51. Further, by calculating based on the building time series information 51, it becomes easy to calculate the cost in more detail than the conventional methods such as a material cost of a jig, electric fee, a consumed amount of a welding wire and the like.

The procuring planning means 130 creates purchase plan of a purchase part which is necessary for building a ship based on the building time series information 51. According to this, it is possible to easily obtain the purchase plan of the purchased part created based on the building time series information 51.

A shipbuilding simulation method, a shipbuilding simulation program and a shipbuilding simulation system based on a unified database according to a fourth embodiment of the present invention will be described next. The same symbols are allocated to members having the same functions as those of the above-described embodiment, and description thereof will be omitted.

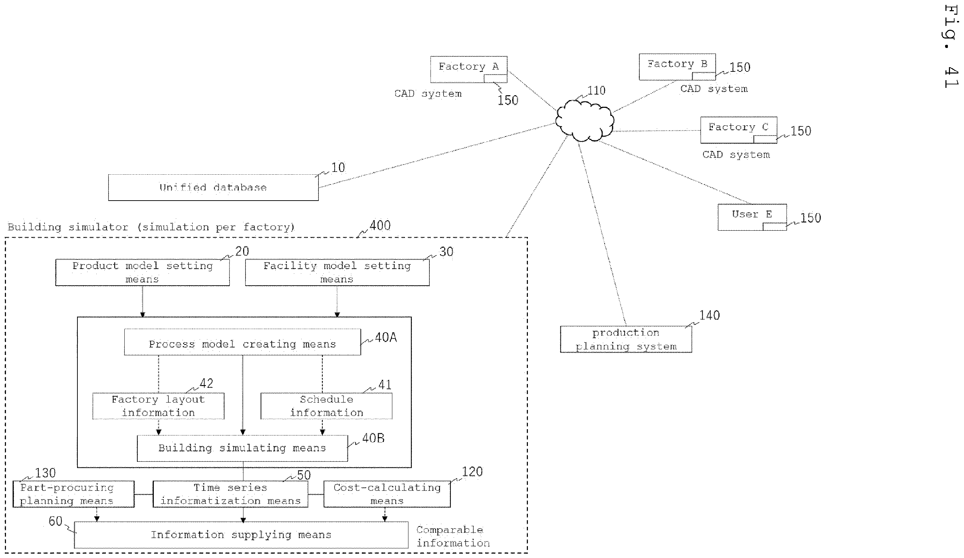

Fig. 41 is a block diagram expressing by means of functional realizing means a shipbuilding simulation system based on the unified database according to this embodiment.

The shipbuilding simulation system of this embodiment coordinates with, through an information communication line 110, a production planning system 140 which gestates a production plan related to building of a ship based on the building time series information 51 of a building simulator 400. According to this, the building time series information 51 can smoothly be connected to gestation of a production plan of the entire building of a ship. The production planning system 140 can utilize an existing production planning system or can be a production planning system which is developed to coordinate with the construction simulation system.

Each of a factory A, a factory B, a factory C and a user E includes a user terminal 150. The user terminal 150 is a laptop computer or a tablet computer. The building simulator 400 and the user terminal 150 coordinate with each other through the information communication line 110, and it is possible to check the building time series information 51 supplied from the information supplying means 60 by the user terminal 150. According to this, related parties, including the factories (site), designers, and head office workers can commonly own the building time series information 51 through the information communication line 110. Not only the shipbuilding place, but also a supplier such as a main engine maker and equipment maker can be included in related parties.

A user can operate the building simulator 400 using the user terminal 150. According to this, the user can operate the building simulator 400 from a site through the information communication line 110 such as starting and stopping of the building simulator 400, instruction to obtain an interim result of simulation by the building simulator 400, and correction of a condition of simulation by seeing the obtained building time series information 51.

A shipbuilding simulation method, a shipbuilding simulation program and a shipbuilding simulation system based on a unified database according to a fifth embodiment of the present invention will be described next. The same symbols are allocated to members having the same functions as those of the above-described embodiment, and description thereof will be omitted.

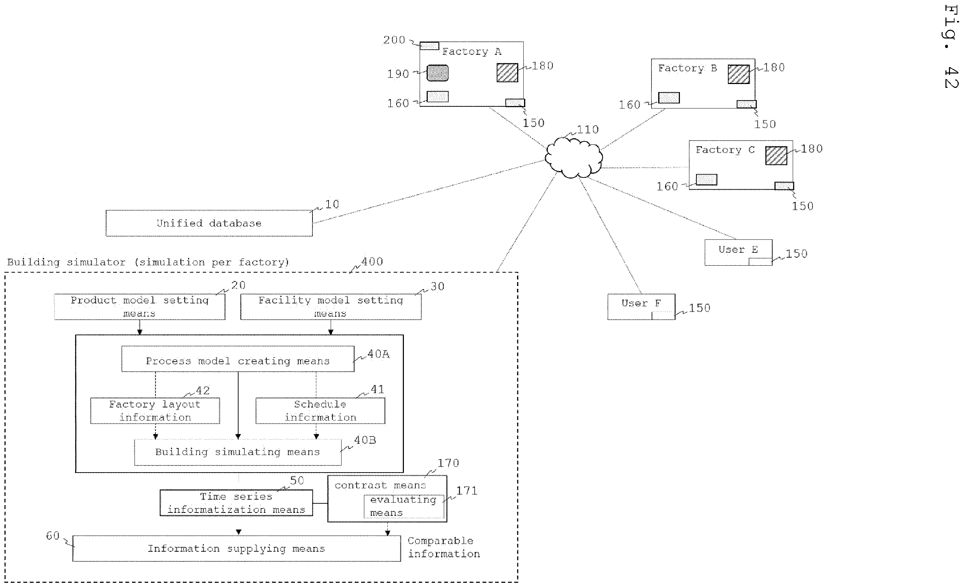

Fig. 42 is a block diagram expressing by means of functional realizing means a shipbuilding simulation system based on a unified database according to this embodiment.

In this embodiment, not only factories A, B and C, and a user E, but also a user F includes a user terminal 150.

The shipbuilding simulation system of this embodiment includes monitor means 160 and contrast means 170. The monitor means 160 is placed in each factory which builds a ship, and monitors an actual building status of the ship. The contrast means 170 is placed in the building simulator 400, and the contrast means 170 contrasts the building time series information 51 supplied from the building simulator 400 and a monitor result of the building status. According to this, the building time series information 51 and the monitor result can be compared with each other, and progress of plan can be monitored and managed at a distant location. It is also possible to monitor and manage a plurality of factories, and grasp a problem of simulation. For example, a supervisor or an inspector can also manage operation at a distant location. The contrast between the building time series information 51 and the monitor result of the building status in the contrast means 170 is carried out by determining a degree of coincidence between a position of a worker at predetermined time included in the building time series information 51 and a position of a worker at predetermined time in the monitor result.

It is preferable that the monitor means 160 monitors the actual building status of a factory by utilizing IoT (Internet of Things) technology or monitoring technology. According to this, it is possible to precisely monitor the actual building status in the factory in real time utilizing the sensor or the monitor. The monitoring technology is an appropriate combination of measuring technology, collecting and transmitting technology of measured data, and analyzing technology of collected data.

The building simulator 400 includes evaluating means 171. The contrast means 170 sends a result of contrast to the evaluating means 171. The evaluating means 171 evaluate a step which is bottleneck or skill of a worker based on the received result of contrast. According to this, a user can appropriately grasp the step which is the bottleneck or skill levels of the worker, and can use them for improvement activities such as re-examining the step or reassigning workers, and evaluating objectively.

The shipbuilding simulation system of this embodiment includes operation information supplying means 180.

The operation information supplying means 180 is placed in each of the factories which builds ships. The operation information supplying means 180 supplies the building time series information 51 to actual workers, thereby contributing instruction of workers. Workers in the factory learns efficient motion and operation procedure from the building time series information 51, thereby enhancing the skill.

The shipbuilding simulation system of this embodiment includes controlling means 200. The controlling means 200 controls automatic equipment (automatic equipment 190) provided in the factory A which builds a ship, based on the building time series information 51. According to this, the automatic equipment is controlled based on the building time series information 51, and a factory can be governed efficiently. The automatic equipment is, for example, an automatic welding robot or an automatic traveling crane.

When an automatic equipment 190 is entirely automated, the facility model 12 can be set in replacement of a robot which corresponds to a worker, or an automatic producing machine.

A shipbuilding simulation method, a shipbuilding simulation program and a shipbuilding simulation system based on a unified database according to a sixth embodiment of the present invention will be described next. The same symbols are allocated to members having the same functions as those of the above-described embodiment, and description thereof will be omitted.

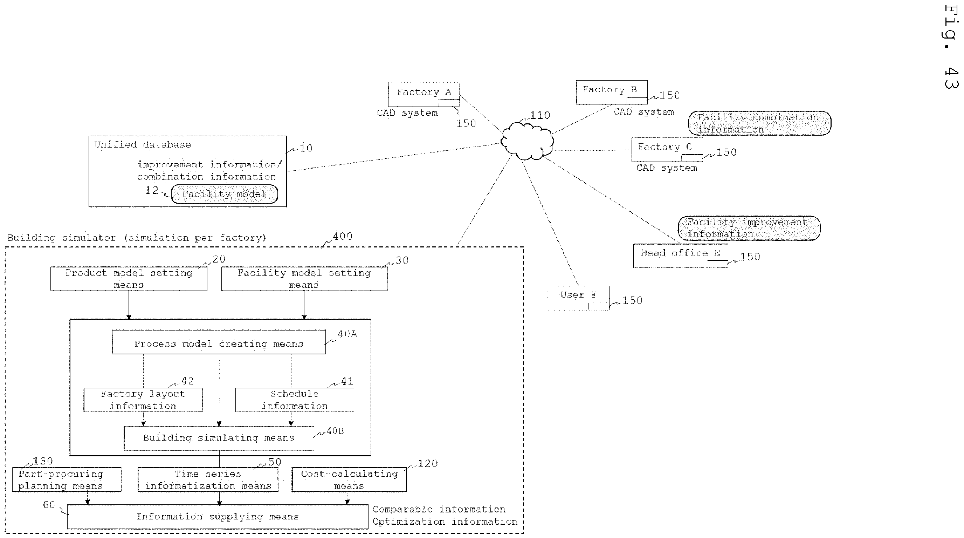

Fig. 43 is a block diagram expressing by means of functional realizing means a shipbuilding simulation system based on a unified database according to this embodiment.

The shipbuilding simulation system of this embodiment, a building simulator 400 obtains improvement information of at least one of equipment and a worker of a factory which builds a ship from an company E headquarter in a facility model setting step S2, sets a facility model 12, carries out time evolution system simulation based on the improvement information in a simulating step S5, and supplies building time series information 51 in information supplying step S7. According to this, the user can obtain the building time series information 51 when equipment or a worker in a factory is changed and improved, and it is possible to assist decision-making of change of equipment or a worker. The improvement information of a factory is renewal or enhancement of ability of a crane, or increase in workers for example.

The building simulator 400 obtains combination information in which combination of equipment and workers in a factory which builds a ship is changed in the facility model setting step S2, sets the facility model 12, carries out the time evolution system simulation based on the combination information in the simulating step S5, and supplies the building time series information 51 in the information supplying step S7. According to this, the building time series information 51 when the combination of equipment and workers in the factory is changed is obtained, and it is possible to derive optimal operation state utilizing the equipment and the workers of the current factory. The combination of the combination information can be automatically changed by the building simulator 400 or can arbitrarily be changed by a user.

The improvement information, the combination information, and the facility model 12 based on these information sets are accumulated in a unified database 10.

In the second to sixth embodiments also, the above-described steps can be executed by a computer.

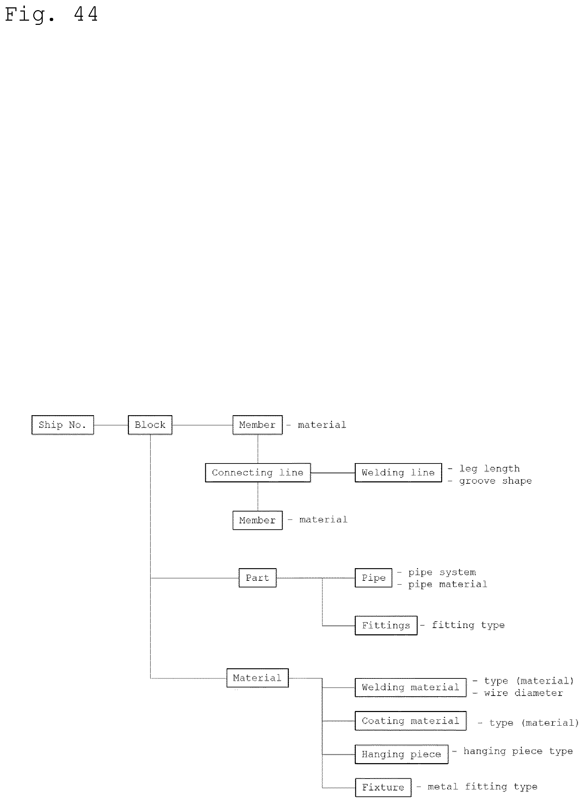

Fig. 44 is a diagram showing an example of standardized data structure of a product model.

In the standardized data structure of the product model 15, product information is expressed by means of BOM (Bill of Materials), and the standardized data structure shows hierarch structure between classes and attribution information of each class.

In Fig. 44, classes which are constituent elements of the standardized data structure are shown by squares, types (names) thereof are described in the squares, and relations between the classes and parent and child relations between the classes are shown by tree structures. Attribution information of the classes are described on the right sides of the squares. More specifically, top class is "Ship No." showing ships to be built such as a No.1 ship and a No.2 ship, one class below is a block constituting a ship hull, one classes below are a "member", "connecting line" or "material" constituting a block, and further one classes below are "welding line" constituting a connecting line, "pipe" and "fittings" constituting a part, and "welding material" , "coating material", "hanging piece" and "fixture" constituting material. Attribution information of class "welding line" is "leg length" and "groove shape", attribution information of class "pipe" is "pipe system" and "pipe material", attribution information of class "fitting" is "fitting type", attribution information of class "welding material" is "type (material)" and "wire diameter", attribution information of class "coating material" is "type (material), attribution information of class "hanging piece" is "hanging piece type", and attribution information of class "fitting jig" is "metal fitting type".

Although it is not illustrated in the drawings, a sub-class can be placed for each of fitting. Examples of the sub-class are "ladder", "pipe support" and the like.

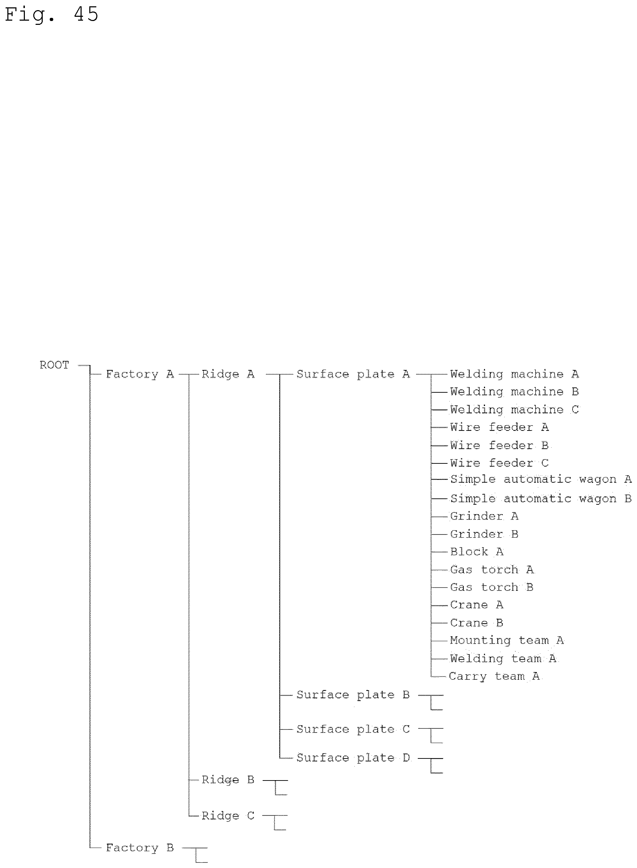

Fig. 45 is a diagram showing an example of standardized data structure of the facility model.

In the standardized data structure of the facility model 12, facility information is expressed by means of BOE (Bill of Equipment), and the standardized data structure shows hierarchic structure between classes and attribution information of each class.

In Fig. 45, classes which are constituent elements of the standardized data structure are described, and relations between the classes and parent and child relations between the classes are shown by tree structures. The uppermost classes are types (names) of shipbuilding factory such as "factories A/B", one classes below are types (names) of ridge in factories such as "ridges A/B/C", one classes below are types (names) of surface plate in each ridge such as "surface plates A/B/C/D", and further one classes below are types (names) of equipment (or tool) and workers used in surface plate such as "welding machines A/B/C", "wire feeders A/B/C", "simple automatic wagons A/B", "grinders A/B", "block A", "gas torches A/B", "cranes A/B", "mounting team A", "welding team A" and "carry team A".

Although it is not illustrated in the drawings, attribution information such as ability value and shape is set for each classes such as the welding machine and the mounting team. The shape can be sorted as a class related to class "welding machine", "crane" and the like.

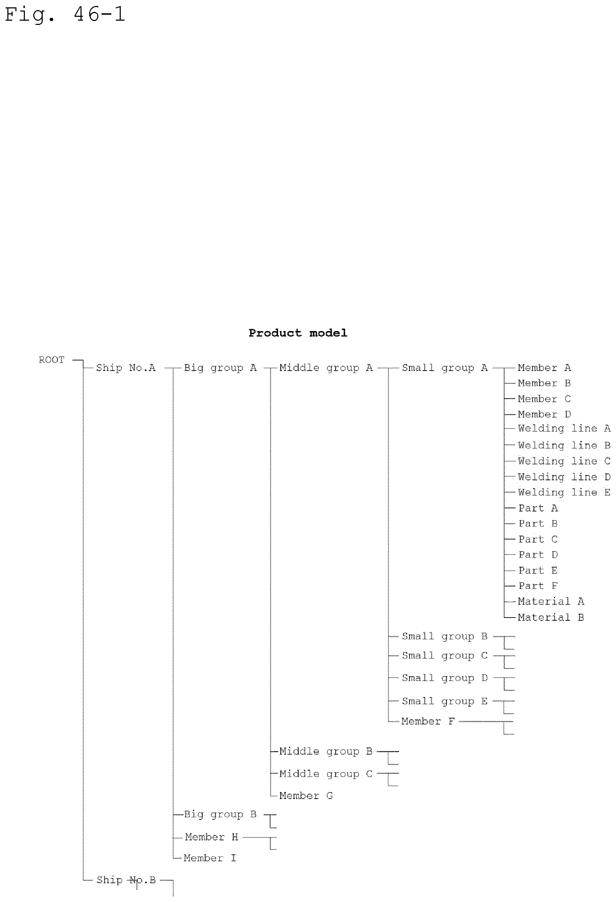

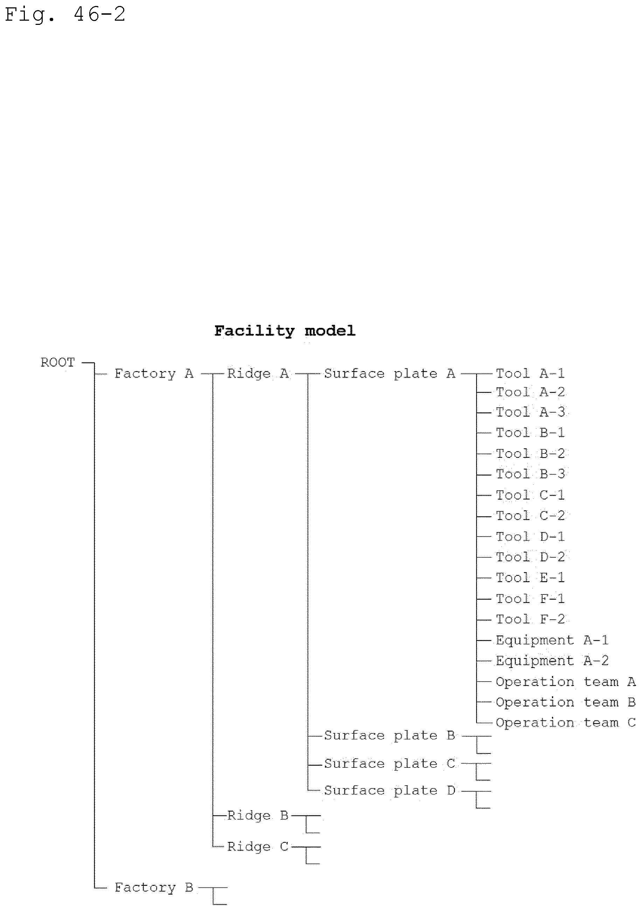

Figs. 46-1 to -3 show examples of standardized data structure of the product model, the facility model and the process model, wherein data structure of the product model shown in Fig. 46-1 is expressed by means of BOM, data structure of the facility model shown in Fig.46-2 is expressed by means of BOE, and data structure of the process model shown in 46-3 is expressed by BOP (Bill of Process). The standardized data structure of the product model 15 shown in Fig. 46-1 is different from the standardized data structure of the product model 15 shown in Fig. 44 in that the data structure is divided into parent and child relations of "big group", "middle group" and "small group" in instance of class "block". The standardized data structure of the facility model 12 shown in Fig. 46-2 is different from the standardized data structure of the facility model 12 shown in Fig. 45 in that the lowermost class is expressed as high-level concept.

As shown in Figs. 46-1 to -3, information of the process model 16 replicate by simulator expressed by the tree structure which combined with information of the product model 15 as object of the process model 16 and information of the facility model 12 required for the process model 16, and thereof relation of the models is organized. According to this, a product and a facility which are target of a process is associated with the process model 16, and can be managed. Expression (granularity of process) of process required for operating the simulator is organized. According to this, since data handled in the shipbuilding design and production plan can be managed in the unified manner in the unified database 10, operation can be proceeded based on single information in the shipbuilding design and production plan work, lead time of building can be shortened, and design and production plan can be optimized.

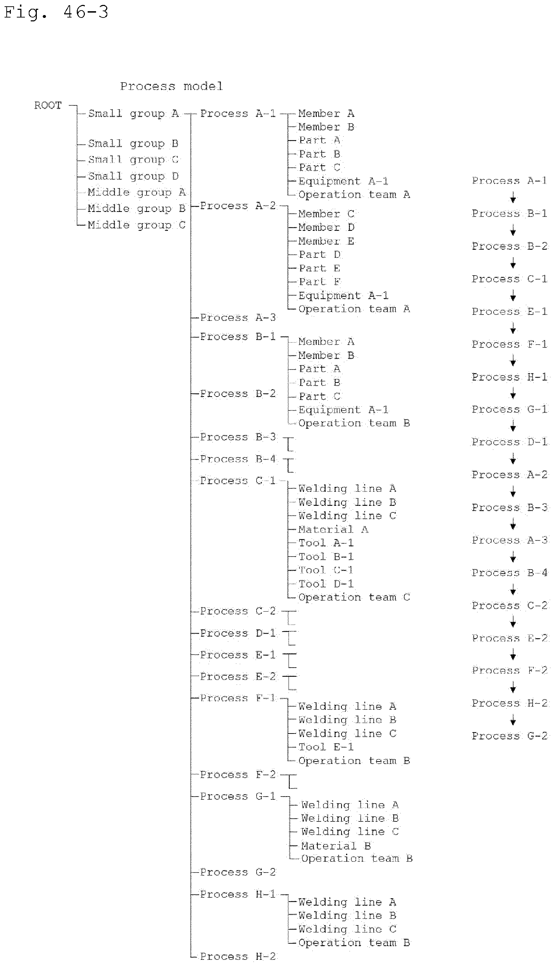

Among standardized data structure of the process model 16 shown in Fig. 46-3, concreate examples of task "process A-1 to -3" are "carries A to C", concreate examples of task "process B-1 to -4" are "mounting A to D", concreate examples of task "process C-1 to -2" are "welding A to B", concreate examples of task "process D-1" are "reverse A", concreate examples of task "process E-1 to -2" are "pipes A to B", concreate examples of task "process F-1 to -2" are "straightening distortion A to B", concreate examples of task "process G-1 to -2" are "rust prevention coating A to B, and concreate examples of task "process H-1 to -2" are cleaning A to B". Processes such as carrying, mounting, welding and the like are organized such that information of the product model 15 and information of the facility model 12 for appropriately expressing the processes by the simulator are associated with the processes. That is, organization is made such that if which information of the product model 15 and which information of the facility model 12 are set and expressed, the processes can be replicated, and this is reflected to design of BOP. Especially, expressions such as cleaning operation and rust prevention coating operation incidental to welding operation are contrived. For example, concerning "cleaning" task, attention is focused on reality of the situation that brushing with a broom is carried out along a welding line after welding operation, "welding line" is associated as information of the product model 15.

In the process model 16, execution sequence or order of processes is defined. As shown on the right side of Fig. 46-3 for example, the execution sequence is defined such that "process A-1 (carry A)" → "process B-1 (mounting A)" -> "process B-2 (mounting B)" → "process C-1 (welding A)" → "process E-1 (pipe A)" -> "process F-1 (straightening distortion A)" -> "process H-1 (cleaning A)" -> "process G-1 (rust prevention coating A)" -> "process D-1 (reverse A)"→ "process A-2 (carry B)" → "process B-3 (mounting C)" → "process A-3 (carry C)" → "process B-4 (mounting D)" → "process C-2 (welding B)" -> "process E-2 (pipe B)" → "process F-2 (straightening distortion B)" -> "process H-2 (cleaning B)" -> "process G-2 (rust prevention coating B)".

As described above, the standardized data structures of the product model 15, the facility model 12 and the process model 16 at least include a plurality of classes sorted based on types of data, relation between classes and parent and child relation between classes. According to this, it becomes easy to obtain, accumulate and utilize the product model 15, the facility model 12 and the process model 16 due to data structure on the axis of classes and relation between classes.

Next, a quality database construction method of a ship, a quality database construction program, a unified database (unified data platform), and utilizing method of the unified database according to the embodiment of the present invention will be described. The same symbols are allocated to members having the same functions as those of the above-described embodiment, and description thereof will be omitted.

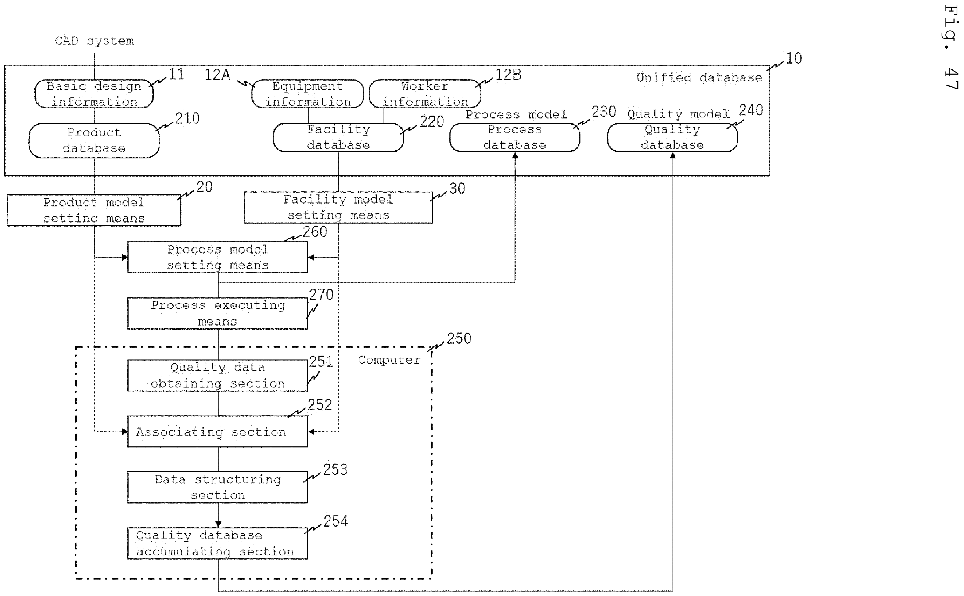

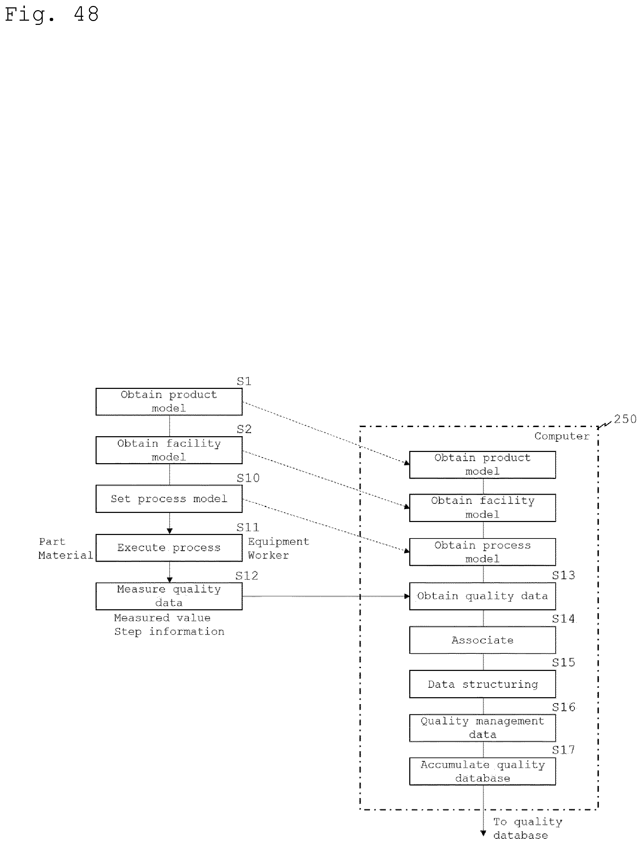

Fig. 47 is a block diagram of a system used in a quality database construction method of a ship according to a seventh embodiment, and Fig. 48 is a flowchart of the quality database construction method of a ship according to the seventh embodiment.

The system includes a unified database 10, product model setting means 20, facility model setting means 30, process model setting means 260 and a computer 250. The system coordinates with a CAD system. Process executing means 270 is a worker or manufacturing equipment which produces a product in a shipbuilding factory for example.

The unified database 10 includes a product database 210 in which a product model 15 is accumulated, a facility database 220 in which a facility model 12 is accumulated, a process database 230 in which a process model 16 is accumulated, and a quality database 240 in which quality data 17 related to building of a ship is accumulated. The unified database 10 handles information related to building of a ship.

The computer 250 includes a quality data obtaining section 251, an associating section 252, a data structuring section 253, and a quality database accumulating section 254.

In the quality database construction method, building process is executed based on the process model 16 or the building time series information of a shipbuilding simulation method based on the unified database.

First, the product model setting means 20 obtains the product model 15 related to design of a ship from the product database 210 (product model setting step S1). The product model 15 is set based on the basic design information 11 of a ship. The product model setting means 20 sends the obtained product model 15 to the process model setting means 260 and the computer 250.

In this embodiment, since the unified database 10 includes the product database 210, it becomes easy to accumulate and obtain the product model 15 and it is possible to commonly utilize the product model 15 as compared with a case where the product database 210 is provided in a place other than the unified database 10. Further, by accumulating the product model 15 in the product database 210 in standardized (unified) data structure, it is possible to manage database in a unified manner.

Next, the facility model setting means 30 obtains the facility model 12 (facility model setting step S2). The facility model 12 includes equipment information 12A and worker information 12B of a factory which builds a ship. The facility model setting means 30 sends the obtained facility model 12 to the process model setting means 260 and the computer 250. The facility model setting step S2 may be carried out before the product model setting step S1.

In this embodiment, since the unified database 10 includes the facility database 220, it becomes easy to accumulate and obtain the facility model 12 and it is possible to commonly utilize the facility model 12 as compared with a case where the facility database 220 is provided in a place other than the unified database 10. Further, by accumulating the facility model 12 in the facility database 220 in standardized (unified) data structure, it is possible to manage database in a unified manner.

Next, the process model setting means 260 sets the process model 16 based on the product model 15 and the facility model 12 (process model setting step S10). The set process model 16 is sent to the computer 250 and the process database 230.

In this embodiment, the process model 16 which is determined as standard of proceeding way of operation is accumulated in the process database 230. According to this, when a similar product is produced at a later date or when a product is produced on a conjoint basis in another factory, the accumulated process model 16 can effectively be utilized. By accumulating the process model 16 in the process database 230 in the standardized (unified) data structure, it is possible to manage the database in the unified manner.

The setting the process model 16 in the process model setting means 260 can also be done by a person based on the obtained product model 15 and the facility model 12.

Next, the process executing means 270 executes the building process in accordance with the process model 16 (building process executing step S11). The building process executing step S11 is a step relates to production and inspection executed using material or a part by a worker who produces a product in a factory or equipment which is used in the factory. It is preferable that building time series information is utilized for executing the building process.

Next, the quality data 17 concerning building process which is executed in accordance with the process model 16 is measured (quality data measuring step S12).

The quality is defined as shown in the following 1) to 3) .
1) Compliance between specification of a product and design drawing (is product produced in accordance with specification or drawing?)
2) Satisfaction of inspection items determined by inspection authority, such as ship's classification.
3) Excellence as a product. Quality of a product which is not expressed on the specification, drawing or inspection of ship's classification. Quality on production step is secured.

The quality data 17 is actual material quality, size, plate thickness, state of weld bead, film thickness, corrosion degree, pipe shape, mounting state of a product. The quality data 17 obtained at when a ship is built is as shown in the following 1) to 6).
1) Record and manage actual welding construction condition (welding order, current, voltage and the like) per welding line.
2) Record and manage actual welding construction result (appearance, interior defect, roentgen) per welding line.
3) Record and manage size precision (irregularity or the like) of block per block.
4) Record and manage distortion amount of outer plate or on ship side.
5) Record and manage coating condition and film thickness of coating per coating surface.
6) Record and manage inspection result (welding, coating and the like) determined by ship's classification and supervision.

As a measuring device or a measuring method of the quality data 17, there are a 3D scanner, a film thickness gauge, a digital welding machine, a bead shape measuring device, a camera (image data), various types of sensors, and visual contact, and automatic measuring and manual measuring may be mixed.

The quality data 17 is measured in each building process executed by the process executing means 270. It is preferable that the quality data 17 includes at least one of step information and a measurement value obtained in midstream of the building process. For example, information other than a numeric value such as record of a visual inspection result, an image analysis result and an operation test result are also included in the step information. The quality data 17 in midstream of the building process is also accumulated in the quality database 240 as quality management data. According to this, it is possible to precisely analyze concerning quality and improve quality based on time series quality management data.

It is preferable that the quality data 17 includes procurement article quality information which is quality information of a procurement article used in midstream of the building process. The procurement article is a part or material which is produced and delivered by another company. By also accumulating quality data 17 of the procurement article in the quality database 240 as quality management data, it is possible to precisely analyze concerning quality including a part and material and improve quality.

Mending information concerning building obtained in midstream of the building process can be included in the quality data 17. By accumulating the mending information in the quality database 240 as quality management data, it is possible to analyze concerning quality to which information such as correction and change of failure of design and a part in midstream of production is reflected.

Here, the improvement means that accumulating mending information related to building of a ship, such as correction or change in midstream of the building process or after the building process, and improvement at the time of docking, and transforming a product or equipment, placement of a worker, or a maintenance method.

Further, the improvement also includes a fact that not only production quality, but also design quality, planning quality, usage quality and the like are directly or indirectly transforming, sometimes utilizing quality information, based on the quality management data, procurement article quality information, and after launch quality information.

Next, the quality data obtaining section 251 obtains the measured quality data 17 (quality data obtaining step S13). The quality data 17 is obtained by automatically or manually inputting into the computer 250.

Next, the associating section 252 associates the quality data 17 and the product model 15 obtained by the product model setting means 20 with each other (associating step S14). Since the product model 15 expresses configuration or a shape of a product, if the quality data 17 is associated with the product model 15, it is possible to show that the data is related to which quality of the product.

The associating section 252 associates the quality data 17 and the process model 16 which is set by the process model setting means 260. According to this, the quality data 17 is also associated with the process model 16. Since the process data expresses a making manner of a product, the quality data 17 can be associated with the process model 16 to show which process and which operation the quality data 17 is generated.

The associating section 252 associates the quality data 17 and the facility model 12 obtained by the facility model setting means 30. According to this, the quality data 17 is also associated with the facility model 12 such as equipment and a worker.

Next, the data structuring section 253 expresses, by means of the standardized data structure, the quality data 17 which is associated with the product model 15, the process model 16 and the facility model 12, and the quality data 17 is made as quality management data (data structuring step S15) .

Here, "quality data is expressed by means of the standardized data structure" means that information concerning quality such as size and film thickness of a product is defined as a class and systematized.

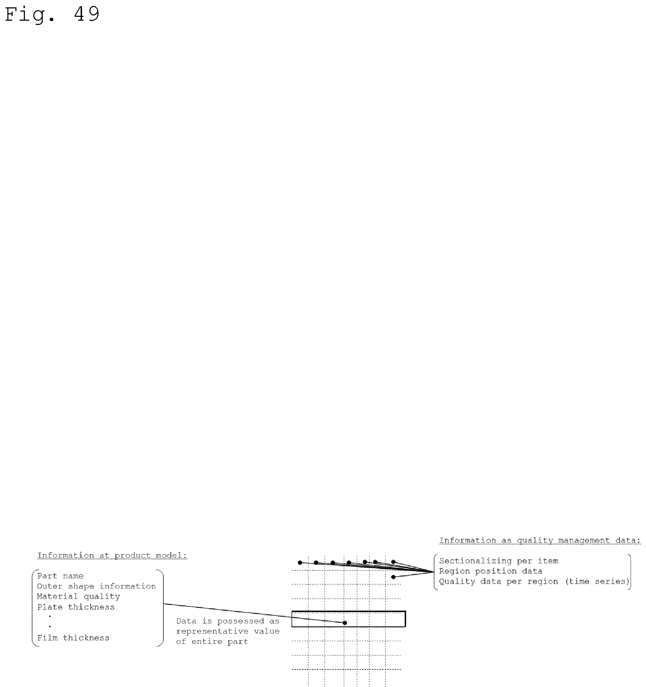

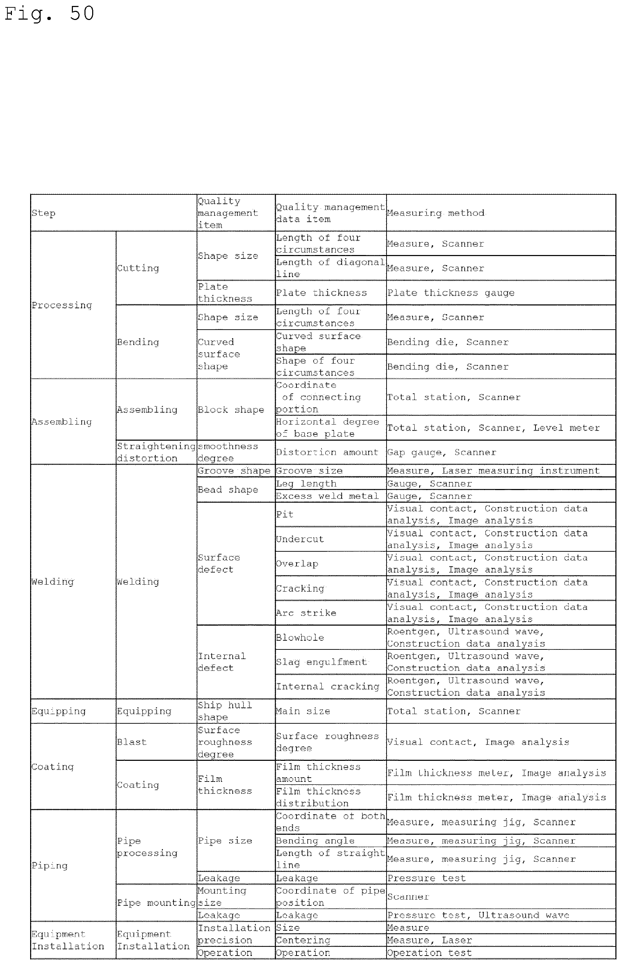

Here, Fig. 49 is a conceptual diagram of data structure of quality management data, and Fig. 50 is a diagram showing examples of quality management item and quality management data.

The product model 15 manages information in a unit of a part. That is, the product model 15 is a data structure of a unit of a part. The quality management data manages the quality data 17 in each position in a part. The quality management data sometimes be managed in time series depending upon the quality data 17. Hence, data structure is organized for management of the quality data 17.

As shown in Fig. 49, define a new class for sectionalizing a region for managing quality of a part. Data class of the product model 15, and data class of the process model 16 are related to class of quality management data. A manner for sectionalizing a region differs depending upon item of quality. For example, it is necessary to handle the quality data 17 in time series depending upon items such as corrosion data and film thickness data. Concerning "actual plate thickness" among quality management data, plate thickness on design in the product model 15 is expressed by means of only a representative value with respect to a certain member, but in the case of quality management, management by means of one point of the representative value is not appropriate, and it is necessary to input measurement values of all of points on a member. Hence, for the existing data structure, since it is necessary to expand data structure so that data can be input at all of positions on the member, data structure which is specialized for quality management is defined.

Fig. 50 shows objective step when a ship is built and an assumption example of the quality management data to be managed. In this way, they are expressed (class design) in data structures per item of the quality data 17 and per assumption utilization.

It is preferable that the standardized data structure is standardized types and attribution of data and relation between data. By standardizing types and attribution of data and standardized relation between data, it becomes easier to handle the quality management data.

It is preferable that association between the quality data 17 and the product model 15 is association in which a class defined by types and attribution of data of the product model 15 and a class of the quality data 17 are conformed with each other. According to this, it is possible to reliably associate the quality data 17 and the product model 15 with each other based on the class.

Next, the data structuring section 253 sends the quality management data to the quality database accumulating section 254 (quality management data sending step S16). The quality database accumulating section 254 accumulates the quality management data in the quality database 240 (quality management data accumulating step S17).

By associating the quality data 17 of a ship (product) built (produced) in accordance with the process model 16 with the product model 15 and accumulating the same as the quality management data of the product model 15 in this manner, it is possible to manage the product model 15 of a ship and the quality data 17 of an actual product in the unified manner. According to this, it is possible to cross-check the actual product and the quality data 17, and it is possible to analyze concerning quality, and it is possible to enhance the quality management, improve quality, and enhance the service. If quality management is quantified, it is possible to eliminate subjective determination by people and arbitrary determination.

Further, by associating the process model 16 and the quality data 17 of a product produced in accordance with the process model 16 with each other and accumulating the same as the quality management data, it is possible to manage the process model 16, the actual step information and the quality data 17 in the unified manner. According to this, it is possible to cross-check the operation concerning production and the quality data 17, and it is possible to analyze concerning quality and improve step quality. Further, it is possible to manage the quality data 17 in time series.

By associating the facility model 12 and the quality data 17 of a product produced in accordance with the process model 16 with each other and accumulate the same as the quality management data, it is possible to manage the facility model 12 and the quality data 17 of the actual product in the unified manner. According to this, it is possible to cross-check equipment or a worker in a step with the quality data 17, and it is possible to analyze concerning quality, and to improve, etc. the step.

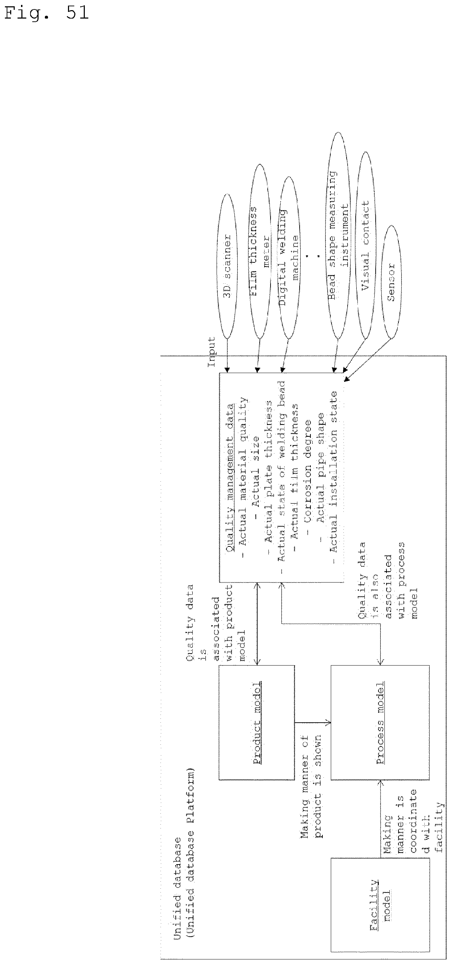

Fig. 51 is a diagram showing configuration of the unified database.

The process model 16 accumulate in the process database 230 expresses a making manner of a product, and the making manner coordinates with the facility model 12 which is accumulate in the facility database 220.

The quality data 17 obtained by measuring by means of a 3D scanner, a film thickness gauge, a digital welding machine, a bead shape measuring device, visual contact and various types of sensors is associated with the product model 15 and the process model 16. The quality management data such as actual material quality, actual size, actual plate thickness, actual state of weld bead, actual film thickness, corrosion degree, actual pipe shape, actual mounting state is accumulated in the quality database 240.

In this manner, the quality model is the core and is associated with the product model 15, the facility model 12 and the process model 16. According to this, significance for expressing (systematizing) the product database 210, the facility database 220 and the process database 230 in addition to the quality database 240 in the unified database 10 by means of the standardized data structure is deepened.

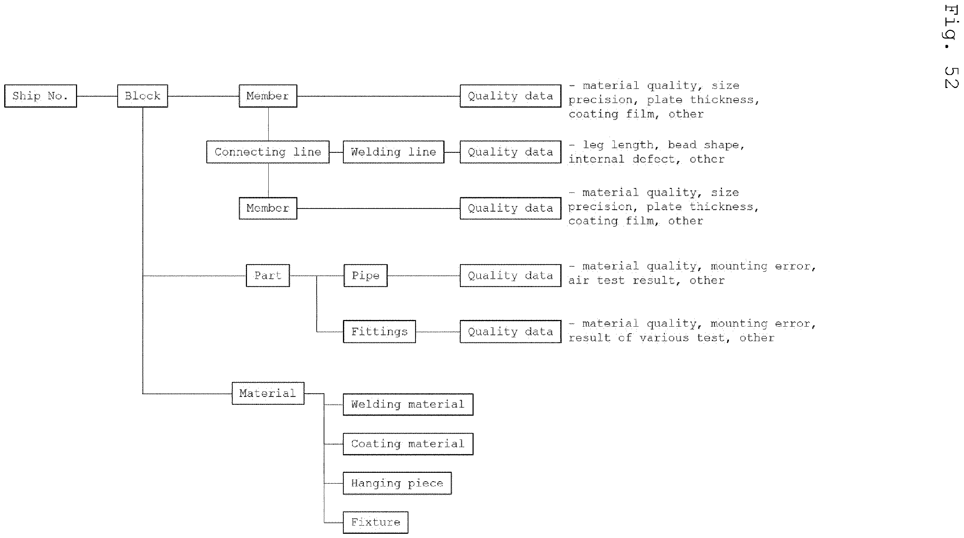

Fig. 52 is a class diagram of the product model and the quality data.

The quality data is associated with the product model which is expressed as BOM. In other words, the quality data is associated with a tree structure of BOM and managed.

Fig. 52 shows an example in which the quality data is associated with a class structure of the product model, and the quality data is associated with classes of a member, a welding line, a pipe and fitting. Attribution information of the quality data associated with a class [member] is material quality, size precision, coating film and the like, attribution information of quality data associated with a class [welding line] is leg length, bead shape and internal defect, attribution information of quality data associated with a class [pipe] is material quality, mounting error, air test result, and attribution information of quality data associated with a class [fitting] is material quality, mounting error, and various types of test results.

After launch of a ship, when the quality data obtaining section 251 obtains after launch quality information in trial operation, during service, or during docking, the associating section 252 is associated with the product model 15, the data structuring section 253 expresses (systematizes) the quality data 17 associated with the product model 15 in standardized data structure, this is made as quality management data, and the quality database accumulating section 254 accumulates the quality management data in the quality database 240. The quality data 17 which is obtained after launch is as described in the following 1) and 2) .
1) Information (damaged location, contents of damage) of damage or improving construction.
2) Recording management of wear state (rust, deterioration of painting) of ship hull of periodic inspection (on an annual basis).

By accumulating the after launch quality information of after launch during trial operation, during service, or during docking in the quality database 240 as quality management data, it is possible to analyze concerning quality to which information such as damage or improving construction after launch is reflected, and it is possible to improve design quality, planning quality, and usage quality. After launch quality information during service can also be collected utilizing IoT (Internet of Things) technology.

Mending information concerning building obtained after the building process can be included in the after launch quality information. Examples of the mending information concerning building obtained after the building process are mending and reorganization of a product at the time of docking. According to this, it is possible to correction or change in midstream of production, analyze concerning quality to which information such mending at the time of docking is reflected, and improve quality.

The quality management data accumulated in the quality database 240 can be utilized as quality model as it accumulates. By utilizing the quality management data as the quality model, it is possible to enhance quality management and service, and improve the quality. It is possible to improve design quality, planning quality and usage quality utilizing the quality model.

A quality database construction method of a ship can be executed using a quality database construction program of a ship.

In this case, the quality database construction program of a ship makes the computer 250 obtain the product model 15 obtained by the product model setting means 20 and the process model 16 which is set by the process model setting means 260. When the quality data 17 is measured, the program makes the quality data obtaining section 251 obtain the quality data 17, and the program makes the computer 250 execute processing of steps S13 to 17. The program can save labor by executing accumulation of quality management data in which the quality data 17 is associated with the product model 15. The program makes the computer 250 further obtains the facility model 12 obtained by the facility model setting means 30. According to this, by obtaining the facility model 12, the program can be used to create the quality management data which is carried out while associating the quality data 17 and the facility model 12 with each other.

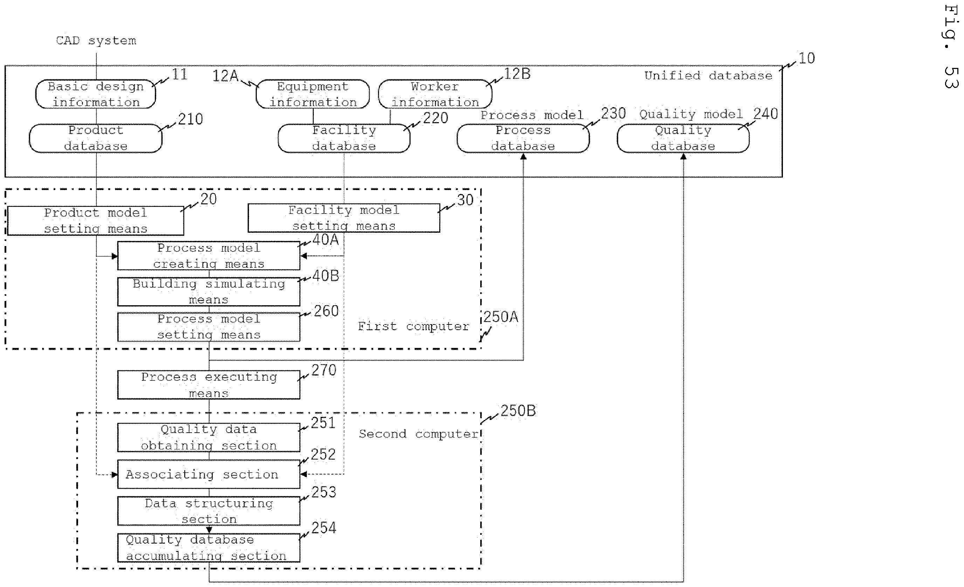

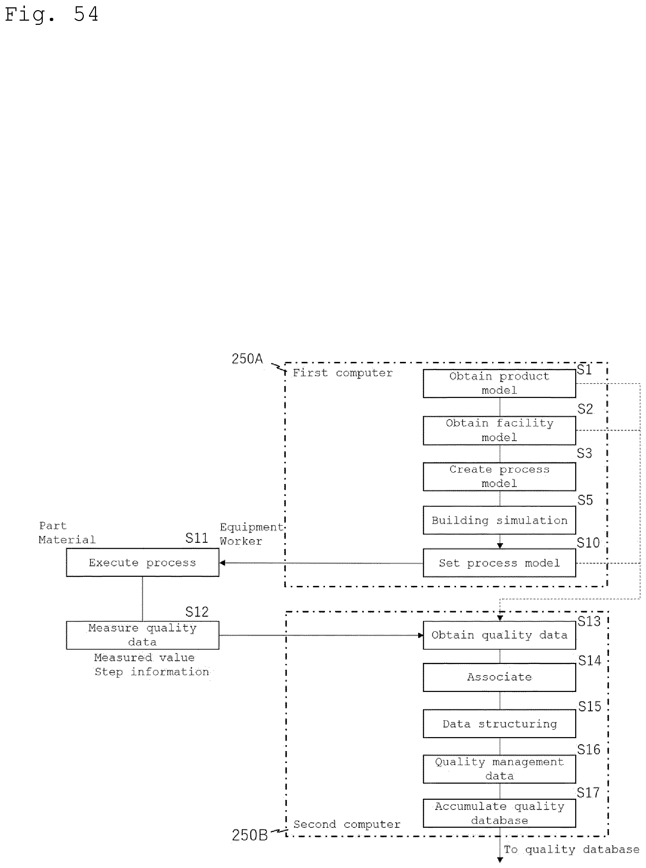

Fig. 53 is a block diagram of a system used in a quality database construction method of a ship according to an eighth embodiment, and Fig. 54 is a flowchart of the quality database construction method of a ship according to the eighth embodiment. The same symbols are allocated to members having the same functions as those of the above-described embodiment, and description thereof will be omitted.

The system includes a unified database 10, a first computer 250A and a second computer 250B, and the system cooperates with a CAD system.

Like the quality database construction method of a ship of the first embodiment, the unified database 10 includes a product database 210, a facility database 220, a process database 230 and a quality database 240, and handles information related to building of a ship.

The first computer 250A includes product model setting means 20, facility model setting means 30, process model creating means 40A, building simulating means 40B and process model setting means 260.

The second computer 250B includes a quality data obtaining section 251, an associating section 252, a data structuring section 253 and a quality database accumulating section 254.

The quality database construction program of a ship is installed in the first computer 250A and the second computer 250B.

The first computer 250A obtains a product model 15 related to design of a ship from the product database 210 through the product model setting means 20 (product model setting step S1).

The first computer 250A obtains a facility model 12 related to equipment and a worker of a factory from the facility database 220 through the facility model setting means 30 (facility model setting step S2).

Next, the first computer 250A creates the process model 16 expressed by means of standardized data structure in which assembling procedure and a task for building a ship from a component part are clarified based on the product model 15 and the facility model 12 in the process model creating means 40A (process model creating step S3).

Next, the first computer 250A simulates building of a ship in the building simulating means 40B based on the created process model 16 (simulating step S5).

The building simulating means 40B carries out the time evolution system simulation (time evolution on three-dimensional space) for sequentially calculating an hourly progress status of building based on the process model 16 which is created by the process model creating means 40A.

In the time evolution system simulation, positions of each facilities and product on the three-dimensional platform or an occupation status, and a proceeding status of the task are changed based on the process model 16, thereby simulating the building in the shipbuilding. In the simulation, detailed motion of a worker, i.e., motion of element operation is expressed.

Next, the first computer 250A sets the process model 16 used in the simulation as the process model 16 which should be used by the process executing means 270 in the process model setting means 260 (process model setting step S10) .

For setting the process model 16, the process model setting means 260 determines whether a result of simulation exceeds an expected target range. When the result does not exceed the expected target range, the process model 16 used in the simulation is set. When the result exceeds the expected target range, at least one of the product model 15 and the facility model 12 is corrected without setting the process model 16, and the procedure returns to the process model creating step S3. The process model 16 is created based on the corrected product model 15 and facility model 12 (process model creating step S3), and building simulation based on the process model 16 is again carried out (simulating step S5).

As described above, the process model 16 is created by the simulation based on the product model 15 and the facility model 12. BY automatically creating the process model 16 by the simulation, it becomes easy to select an optimal process model 16. By reflecting a result of the building simulation, it is possible to enhance the selection and precision for setting the process model 16.

The following processing is the same as the quality database construction method of a ship according to a seventh embodiment, and the processing is proceeded as follows.

The process executing means 270 executes the building process in accordance with the process model 16 (building process executing step S11).

Next, the quality data 17 related to the building process executed in accordance with the process model 16 is measured by a measuring device, or visually or the like (quality data measuring step S12).

Next, the second computer 250B obtains the measured quality data 17 through the quality data obtaining section 251 (quality data obtaining step S13).

Next, the second computer 250B associates the quality data 17 and the product model 15 with each other, associates the quality data 17 and the process model 16 with each other, and associates the quality data 17 and the facility model with each other in the associating section 252 (associating step S14).

Next, the second computer 250B expresses (systematizes) the quality data 17 associated with the product model 15, the process model 16 and the facility model 12in standardized data structure, this is made as quality management data, in the data structuring section 253 (data structuring step S15).

Next, the second computer 250B sends quality management data to the quality database accumulating section 254 (quality management data sending step S16), and sends the quality management data from the quality database accumulating section 254 to the quality database 240 (quality management data accumulating step S17). According to this, the quality management data is accumulated in the quality database 240.

After launch of a ship, the second computer 250B obtains after launch quality information at the time of trial operation, during service, or during docking through the quality data obtaining section 251, the associating section 252 is associated with the product model 15, the data structuring section 253 expresses (systematizes) the quality data 17 associated with the product model 15 in standardized data structure, this is made as quality management data, and the quality management data is sent from the quality database accumulating section 254 to the quality database 240.

The first computer 250A and the second computer 250B may be one computer, a program used in the first computer 250A and a program used in the second computer 250B may be one sequence program.

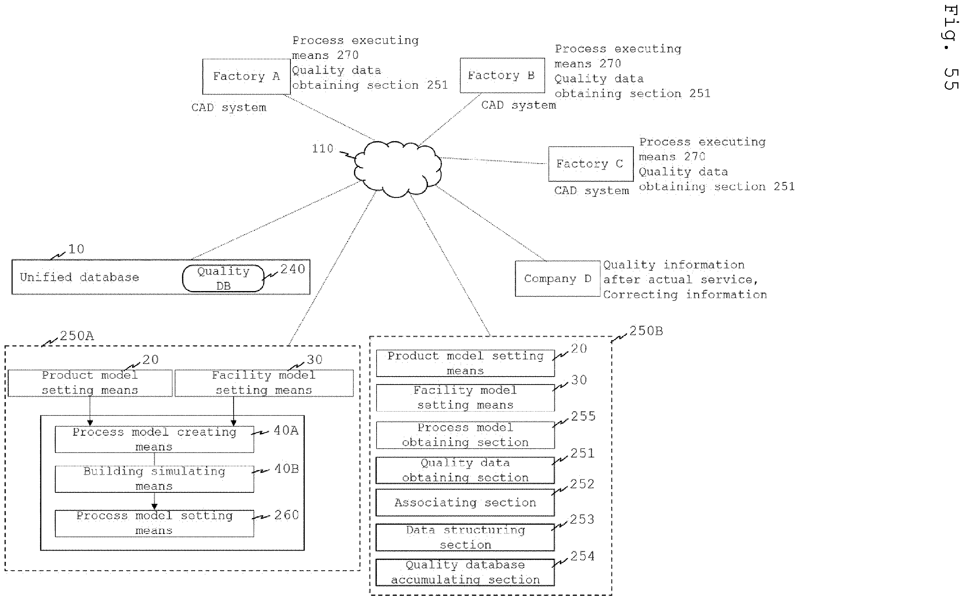

Fig. 55 is an explanatory diagram of a utilizing method of the unified database in the quality database construction method of a ship. The same symbols are allocated to members having the same functions as those of the above-described embodiment, and description thereof will be omitted.

The system includes a unified database 10, a first computer 250A and a second computer 250B. The system is connected to a factory A, a factory B, a factory C and a company D located at places different from the system through an information communication line (information communication network) 110. The company D is not a factory, but is a company which sums up the factories, a company which coordinates for building a ship communally, a company which specializes in basic design of a ship, or a company which certificates producing action. The factories A, B and C may be different shipbuilding companies which build ships, or may be factories in a plurality of places of one shipbuilding company.

The unified database 10 includes a product database 210, a facility database 220, a process database 230 and a quality database 240. Fig. 55 shows the quality database 240 as representative.

The first computer 250A includes product model setting means 20, facility model setting means 30, process model creating means 40A, building simulating means 40B and process model setting means 260.

The second computer 250B includes product model setting means 20, facility model setting means 30, a process model obtaining section 255, a quality data obtaining section 251, an associating section 252, a data structuring section 253, and a quality database accumulating section 254.

Each factory includes process executing means 270 and a quality data obtaining section 251, and a CAD system is placed in each factory.

The basic design information 11 is sent from the CAD system in each of the factories to the unified database 10 through the information communication line 110 of a ship, and the set product model 15 is accumulated in the product database 210. Although the CAD systems are placed in each of the factories, it is possible to design in representing in one factory or can be designed in the plurality of factories in a sharing manner.

The facility model 12 of each factory created from the equipment information 12A and the worker information 12B is accumulated in the facility database 220 of the unified database 10.

The first computer 250A creates the process model 16 of each factory in the process model creating means 40A, and executes building simulation of the time evolution system of each factory with respect to the product model 15 in the building simulating means 40B.

A result of the building simulation of the time evolution system of each of the factories in the building simulating means 40B is supplied to the factories and the company D as building time series information. According to this, the factories and the company D can obtain prediction results such as man-hour and production cost based on the result of the building simulation.

The company D obtains after launch quality information and mending information after launch from information accumulated in the quality database 240 of the unified database 10. According to this, it is possible to gestate service plan and maintenance plan while taking the mending information and the after launch quality information after launch into account.

As described above, the unified database 10 is utilized through the information communication line 110 in the plurality of factories. According to this, it is possible to reduce the producing cost in each factory and shorten a building period. The unified database 10 can effectively be utilized for unified quality management and quality improvement, managing and improving equipment and a worker, managing and improving man-hour, and managing and improving design.

Although the unified database 10, the first computer 250A and the second computer 250B are separately placed in Fig. 55, they may be placed in the same place, or one computer may fulfill the required function. The unified database 10, the first computer 250A and the second computer 250B may be managed by different organizations or institutions, or may be managed by a representative factory, and they can be freely be set in accordance with management ability. The unified database 10, the first computer 250A and the second computer 250B can be administered as service business.

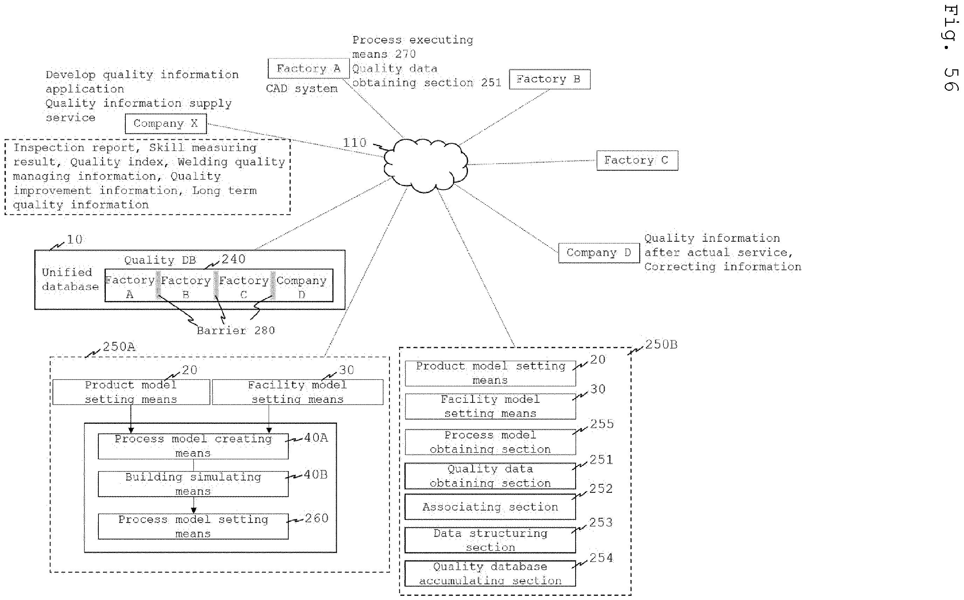

Fig. 56 is an explanatory diagram of another utilizing method of the unified database in the quality database construction method of a ship. The same symbols are allocated to members having the same functions as those of the above-described embodiment, and description thereof will be omitted.

The system includes a unified database 10, a first computer 250A and a second computer 250B. The system is connected to a factory A, a factory B, a factory C, a company D and a company X located at places different from the system through an information communication line 110.

The unified database 10 includes a product database 210, a facility database 220, a process database 230 and a quality database 240. Fig. 56 shows the quality database 240 as representative.

The first computer 250A includes product model setting means 20, facility model setting means 30, process model creating means 40A, building simulating means 40B and process model setting means 260.

The second computer 250B includes product model setting means 20, facility model setting means 30, a process model obtaining section 255, a quality data obtaining section 251, an associating section 252, a data structuring section 253, and a quality database accumulating section 254.

Among the factories, the factory A includes process executing means 270 and a quality data obtaining section 251, and a CAD system is placed in the factory A.

Quality management data of the factories A, B and C and the company D is accumulated in the quality database 240. Access to the quality database 240 of each factory is limited by a barrier 280. When another person who does not belong to the factory desires to browse the quality management data accumulated in the database of each factory, he or she must be authorized by the factory, and it is necessary to input predetermined conditions such as ID and password. If the other person browses the quality database 240 of the plurality of factories by inputting the predetermined conditions, it is possible to appropriately manage the browse of the quality management data when collaborating the building of a ship or when outsourcing design to a design company. Even in the same factory, it is also possible that only an authorized person can browse depending upon degree of secrecy of the quality management data.

The unified database 10 may not especially be provided with a server, the factories A, B and C and the company D may be coordinated, and the unified database 10 may be constructed as function.

The company X develops an application program related to building of a ship and supplies information. The company X creates utilization quality information relates to the building of a ship using the quality management data accumulated in the quality database 240 of the unified database 10, and supplies the utilization quality information to a shipbuilding company or a ship owner. According to this, a factory or a design sector related to the building of a ship, a managing sector or the ship owner can check the quality related to the building by the utilization quality information.

As the utilization quality information, it is preferable create at least one of an inspection report, a skill measuring result, a quality index, and welding quality managing information. According to this, the factory or the design sector related to the building of a ship, the managing sector or the ship owner can check the quality in more detail. Further, a responsible person of the factory or the managing sector can grasp skill, a skill level, strong and weak points of a worker in an objective way.

Further, as the utilization quality information, it is preferable to create quality improvement information for improving quality related to the building of a ship. According to this, a person who receives the quality improvement information can make precise quality improvements not only improve quality of a product but also design quality, planning quality, and using quality, for example, reform a product, equipment, personnel distribution or maintenance based on the created quality improvement information.

Further, as the utilization quality information, it is preferable to create long term quality information which is long-continued from the building of a ship to the subsequent time after launch. According to this, a person who receives the long term quality information can appropriately plan a timing and contents of maintenance, and the improvement of production quality, design quality, planning quality, and using quality based on the created long term quality information.

The application program developed by the company X and the created utilization quality information can be supplied to an order person or a client including the factories A, B and C and the company D through the information communication network 70.

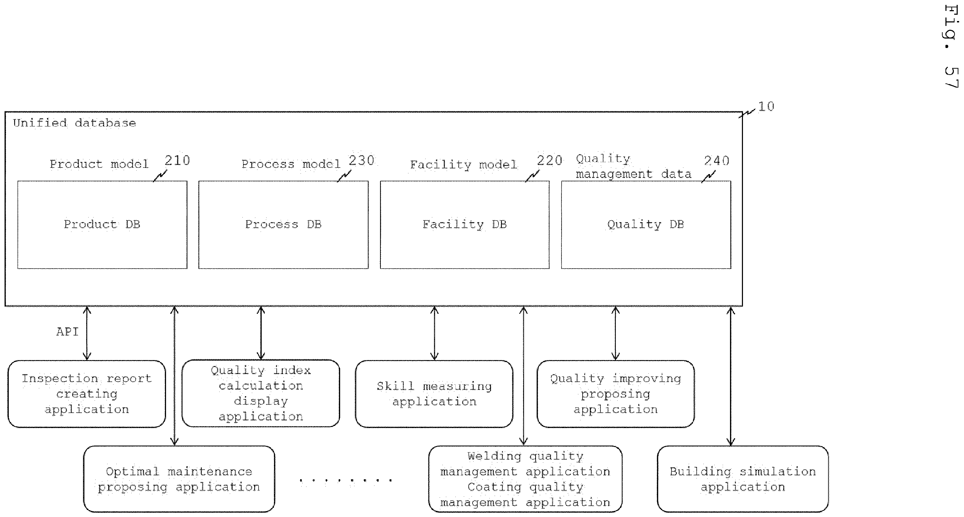

Fig. 57 is a diagram showing an entire configuration of the unified database and each application in quality database construction method of a ship.

Connected to the unified database 10 are an inspection report creating application for creating an inspection report, a quality index calculation display application for calculating and displaying quality index, a skill measuring application for measuring skill of a worker and displaying a skill measuring result, a quality improving proposing application for creating quality improvement information, an optimal maintenance proposing application for creating a period and contents of optimal maintenance, a welding quality management application for creating welding quality management information, a coating quality management application for creating coating quality management information, and a building simulation application for carrying out building simulation, and the unified database 10 is operated.

These application programs related to the quality management refers to necessary data from the unified database 10, or input or output the necessary data.

Data which is imported in the unified database 10 is not quality reference (threshold value of quality), but the data which is imported is only data concerning a state of a product used for determining quality, for example, plate thickness, material quality, size of a block, leg length of welding, existence or non-existence of defect, film thickness of coating. It is determined whether these data satisfies quality reference of each company, and an application side connected to the unified database 10 such as the welding quality management application, the coating quality management application and the like issues an alarm to the quality reference which is set by each company.

For example, the unified database 10 and the applications can be utilized as follows.

Data is managed based on three sets of a product, a process and quality by the quality management data. Therefore, a generation pattern is analyzed concerning a shipbuilding process which easily generates a problem of quality by a statistics processing technique such as clustering, or a similarity searching AI using machine learning, construction which becomes a cause of quality failure is extracted such that an alarm is issued to development of building of next same type ship or a new design ship, or risk prediction of quality is issued, and construction method improving structure for improving construction or construction method can be constructed.

In accordance with quality of individual product (e.g., size error of a block or the like), it is possible to construct an output system of operation procedure which outputs optimal operation procedure for each of products. For example, a size error of a block of previous process is quantified, and production instruction which is inherent to the block (individual) in a subsequent step in accordance with the quantified value is real-time output. According to this, quality can be recorded, and it is possible to enhance the quality by the optimal production instruction in accordance with the individual.

Since a worker, operation contents and quality can be associated with each other, it is possible to construct a skill determination system of a worker which determines skill or characteristic (strong and weak points) of a worker from quality.

It is possible to construct optimal maintenance service by always monitoring the quality state of a ship after launch with a sensor or the like, and an alarm is issued when a problem of quality is generated, or a timing when the quality becomes lower than a threshold value is forecasted and an optimal timing and contents of maintenance are presented. Currently, a ship after launch receives periodical survey in accordance with a period and an inspection item which are prescribed in a rule. The survey term in the periodical survey becomes longer or shorter depending upon maintenance of an operator of a ship. Therefore, it is assumed that incentive to excellently maintain a state of a ship acts by utilizing the optimal maintenance service. Further, since forecasting technique for forecasting optimal timing and contents of maintenance requires high technical capacity, only a designer of the product (ship) can carry out. Therefore, a shipbuilding company can create new businesses, such as operating a ship and lends a ship each voyage or a shipbuilding company itself becomes a transport company.

When service state data of a ship is obtained and the obtained service state data is associated with the product model 15 and the quality data 17 and the service state data is accumulated in a database provided in the unified database 10, since the product model 15, the service state data and the quality data 17 are associated with each other on the unified database 10, a pattern of generation of failure is analyzed concerning a location where the failure of quality is prone to be generated, and an alarm can be issued to an operator concerning a similar location and a status. By developing it, shipbuilding company side can construct a rational design structurer per a ship. For example, considerable safety factor is included in the current ship design, but by managing the quality data 17 including a service condition, it is possible to set optimal safety factor per individual ship, or setting of the safety factor can be made unnecessary.

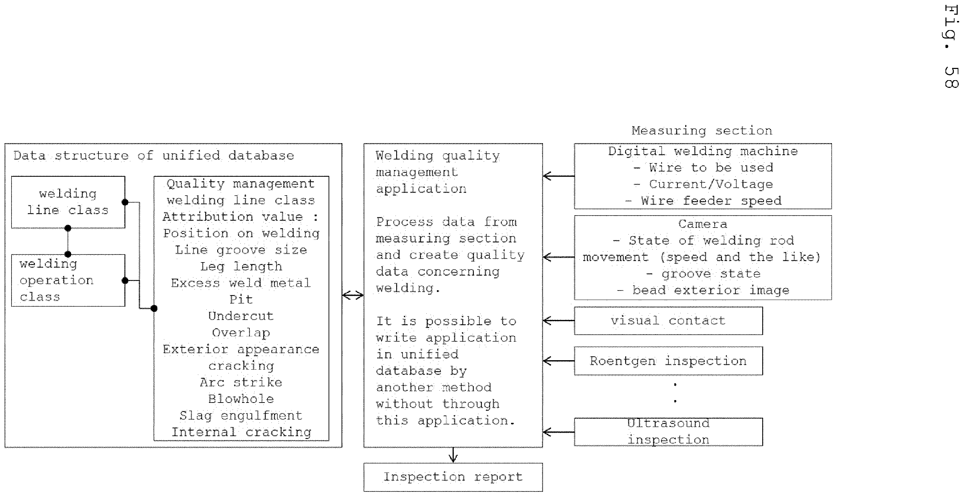

Fig. 58 is a diagram showing utilization of quality management data by a welding quality management application.

In data structure of the unified database 10, a newly defined quality management welding line class is associated with a welding line class of the product model 15 and a welding operation class of the process model 16.

A right side of Fig. 58 shows a digital welding machine, a camera, visual contact, roentgen inspection, ultrasound inspection and the like as examples of measuring section which measure a welding location of an actual product. The welding quality management application processes the quality data 17 by a welding machine, image data, various types of inspections (roentgen inspection, ultrasound inspection), visual check and the like, welding quality management information is created as quality management data, and this is registered in the unified database 10.

The welding quality management application summarizes an inspection report in accordance with a predetermined inspection report item.

A supervisor (ship orderer) or a classification surveyor checks the inspection report created by the welding quality management application online and gives approval.

It is described as an example that the welding quality management application carries out both analyzes the measured quality data 17 and creates the inspection report, but various applications may exist, e.g., different applications may analyze the quality data 17 and create the inspection report.

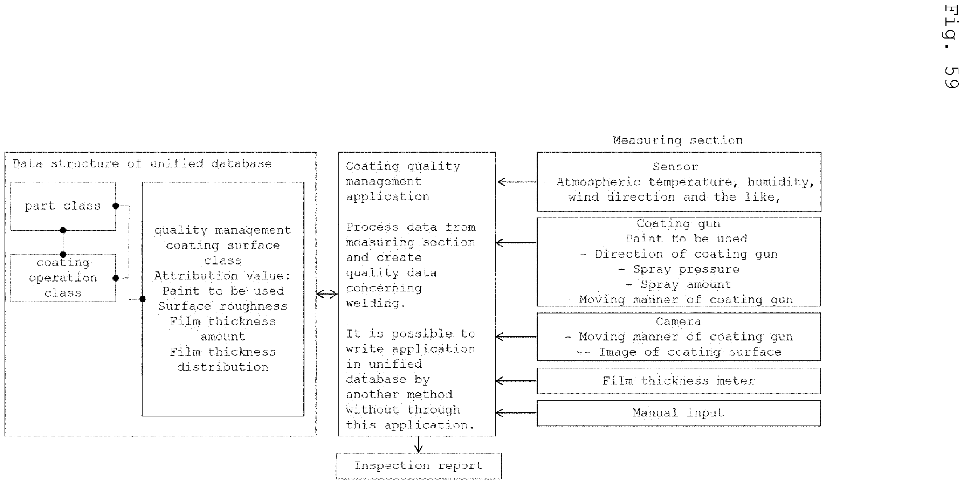

Fig. 59 is a diagram showing utilization of quality management data by a coating quality management application.

According to a data structure of the unified database 10, a newly defined quality management coating class is associated with a part class of the product model 15 and a coating operation class of the process model 16.

On the right side of Fig. 59, a sensor, a coating gun, a camera, a film thickness gauge and manual input are shown as examples of the measuring section which measures a coating location of an actual product. The coating quality management application obtains quality data 17 concerning a coating operation from the coating gun, various types of sensors, the film thickness gauge and image data, the coating quality management application processes the quality data 17, coating quality management information is created as quality management data, and this is registered in the unified database 10.

The coating quality management application summarizes an inspection report in accordance with a predetermined inspection report item.

A supervisor (ship orderer) or a classification surveyor checks the inspection report created by the coating quality management application online and gives approval.

It is described here as an example that the coating quality management application carries out both analyzes the measured quality data 17 and creates the inspection report, but various applications may exist, e.g., different applications may analyze the quality data 17 and create the inspection report.

It is preferable that when abnormality is detected in quality in a welding step or a coating step in the shipbuilding process, the welding quality management application and the coating quality management application immediately inform an administrator or a worker at the site that abnormality is detected. According to this, it is possible to construct the structure to dissolve quality failure within the step (procedure should not proceed while leaving quality failure as it is).

### [Examples]

An example in which a shipbuilding factory model is input data will be described. When moving speed of a worker, moving speed of a crane, and a set value of speed per unit length of a welding operation which are set for carrying out simulation are shown in the following table 15. Here, these values are set in a single uniform way, but the values can be defined per each of tasks (e.g., in accordance with welding attitude).

**[Table 15]**

| Attribution name | Set value |
|---|---|
| Moving speed of worker | 1.0m/s (when crane is utilized, speed is set equal to crane speed |
| Moving speed of crane | 0.5m/s |
| Speed per unit length of temporary welding operation | 0.2m/s |
| Speed per unit length of regular welding operation | 0.02m/s |

Essentially, temporal welding should be expressed by intermittent welding line like tack welding, but in this example, for simplification, a welding line path (polyline) which is utilized for regular welding is used in combination, and an operation difference is expressed by changing the welding speed per unit length. A welding operation in assembling scenario which is set in this embodiment is only horizontal fillet welding, and overhead welding is not generated.

An OBJ type (Wavefront Technologies company) which is generic intermediate file format that can be imported to Unity (Registered Trademark) is employed as a 3D CAD model file.

### (Case 1)

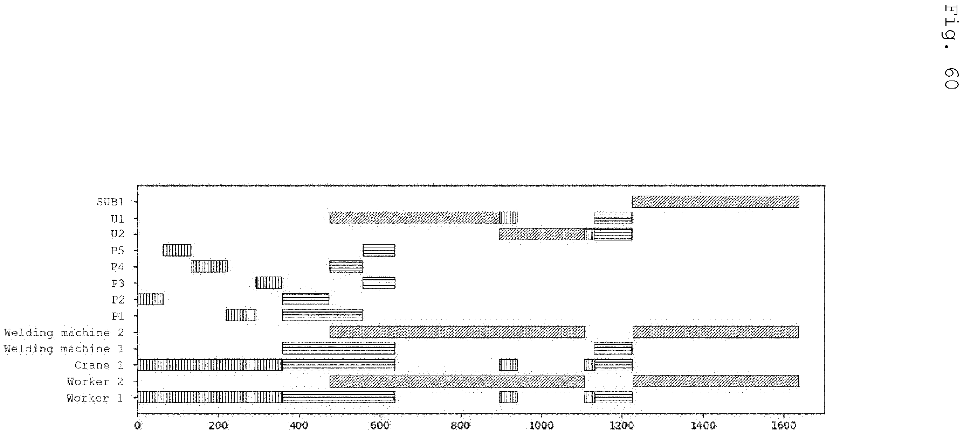

Fig. 60 is a Gantt Chart of a calculation result of simulation in an assembling scenario of a case 1. Names of a vertical axis show facilities and products (completed parts, intermediate parts and component parts), and horizontal axis shows time (s) . Lateral rods of the vertical line show carry task, lateral rods of the lateral line show temporary welding task, and lateral rods of the diagonal line show time occupied by regular welding task. It can be said that this Gantt Chart, time series information which carried out time evolution system simulation based on the process model is expressed in association with information of a product model and a facility model.

In the scenario of the case 1, an assembling operation is carried out for a five-plate model by total two workers, i.e., one ironworker and one welder. Schedules of the determined each worker is as shown in table 7. A worker 1 on second line in table 7 is the ironworker, and a worker 2 on second line is the welder. The workers carry out tasks in the order described in table 7.

It can be found that time required for the carry of plates P1 to P5 shown by the lateral rods of the vertical line is about 370 seconds from Fig. 60 which is the Gantt chart calculated by the shipbuilding simulation system based on this scenario. This time corresponds to about 1/4 or less of the entire time. Time required for the carry cannot directly be calculated by a conventional method which calculates from a welding length, and this time corresponds to associated operation. Since the worker 2 cannot start the operation until the carry and the temporary welding task are completed, the worker 2 must wait for about 480 seconds. Thereafter, the worker 1 needs to wait for the task until the worker 2 completes the intermediate part U2, and the worker 1 executes the temporary welding task from about 1100 seconds.

Time required for each of the tasks which cannot be calculated by the conventional calculation method carried out by the shipbuilding simulation system is calculated in this manner, and a manner in which waiting time is generated depending upon a progressing degree of the tasks is replicated.

### (Case 2)

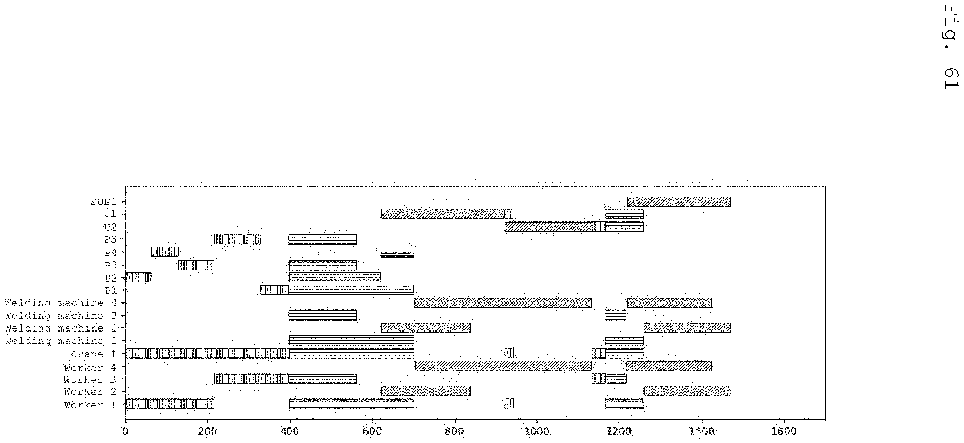

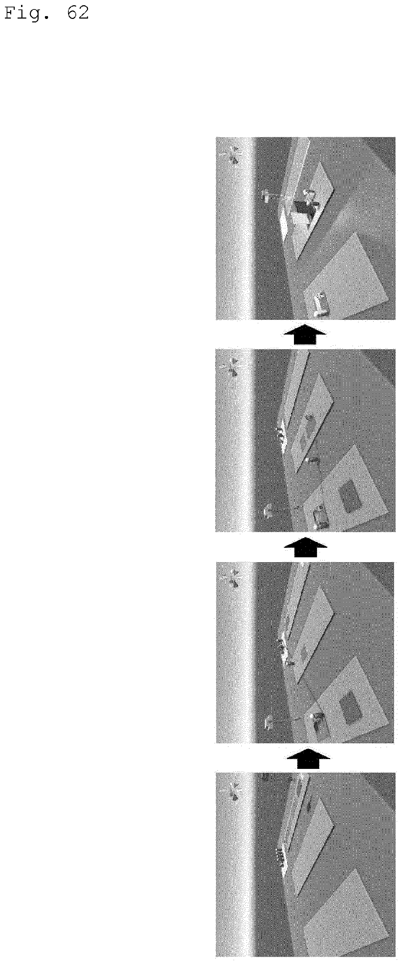

Fig. 61 is a Gantt chart of a calculation result of simulation in an assembling scenario of a case 2. Names of a vertical axis show facilities and products (completed parts, intermediate parts and component parts), and horizontal axis shows time (s) . Lateral rods of the vertical line show carry task, lateral rods of the lateral line show temporary welding task, and diagonal lateral rods of the diagonal line show time occupied by regular welding task. Fig. 62 is a three-dimensional appearance diagram of simulation of the case 2.

In the case 2, the scenario in which the number of workers is increased to total four, i.e., two iron workers (workers 1, 3) and two welders (workers 2, 4) is set for an objective of a five-plate model like the case 1. Correspondingly, two welding machines are added. Schedules of each worker are as shown in the following table 16.

**[Table 16]**

| Person in charge | Task to be charged and execution order |
|---|---|
| worker 1 | Carry 0, carry 2, carry 4, temporary welding 0, temporary welding 1, carry 5, temporary welding 3 |
| worker 2 | Regular welding 0, regular welding 3 |
| worker 3 | Carry 3, carry 1, temporary welding 2, carry 6, temporary welding 4 |
| worker 4 | Regular welding 1, regular welding 2, regular welding 4 |

From Fig. 61 which is the Gantt chart calculated by the simulator based on this scenario, it can be found that time required for the carry of the plates P1 to P5 is about 400 seconds, and the time is longer than that of the case 1. This is because that since the worker 1 and the worker 3 commonly use one crane, extra walking time is required. Concerning the temporary welding time also, since one crane is commonly used, it becomes longer than the case 1. During the regular welding between the intermediate part U1 and the completed part SUB1, since two workers respectively carry out two welding lines in parallel, time is shortened as compared with the case 1. On the other hand, concerning the total building period from the beginning to the end, the number of workers is made two times as compared with the case 1, but the total building period does not become half, and a difference thereof as a result is only about 150 seconds caused by reduction in the regular welding time of the intermediate part U1 and the completed part SUB1.

In this manner, it becomes possible to consider details that cannot be considered under the conventional concept of efficiency, and the quantitative difference and its basis become clear.

As shown in Fig. 62, it is also possible to directly check the manner in which a position of a three-dimensional object of each of the models is changed.

### [INDUSTRIAL APPLICABILITY]

According to the present invention, it is possible to precisely simulate building of a ship which requires determination of detailed operations in accordance with a status in which flow of an object at the time of production and motion of a worker are not formulaic, and a result thereof can be utilized in a wide range concerning building such as forecast of cost, production design, gestation and improvement of building schedule plan, investment of equipment, analysis of production field and clarification of bottleneck.

Further, the present invention can be applied to traceability concerning building of a ship. By utilizing the invention for quality index of a ship, the quality of the ship can be quantified. The invention can be put to some use of improvement of quality of a ship. Since a ship of high quality can be marketed expensively regardless of whether the ship is new or used ship, it is possible to develop to a rating service of quality.

For example, in the case of size precision, in JSQS (Japanese Shipbuilding Quality Standard), standard "this block should be built within several millimeters of precision error" is specified, and a shipbuilding company builds a ship in accordance with this standard. However, if the ship is within this standard, quality does not rise to the surface irrespective whether the precision error is 0 mm or 5 mm. For example, size precision of all of connecting portions of all of blocks is measured and digitized, an index which quantifies a state of size precision of one ship is created, and a ship produce with 0 mm precision error and a ship produced with 5 mm precision error can be differentiated. In this case, as the index of size precision, an index corresponding to a standard deviation between average size error and a size error is used. Concerning welding and coating also, currently, quantitative inspection which is sampling inspection of inspection location is handled as total inspection, and a state based on its inspection result is quantified and digitalized by index. Currently, quality is not recorded, or even if quality is recorded, the quality is not digitized in a state where it can be managed. Therefore, a supervisor dispatched from a ship owner must supervise the shipbuilding field, but according to the present invention, it is possible to construct inspection based on the quality management data, and shipbuilding quality control system without dependence on the supervisor. According to this, since a supervisor can check the quality without coming to the field, even when an infection disease such as COVID-19 is going around and outgo is refrained, problems can be solved by working at home. Further, since quality management is quantified, it is possible to avoid subjective or arbitrary determination made by supervisor. A role of a supervisor can be burdened to AI.

Although the preferable embodiments and examples of the present invention have been described above, the invention is not limited to them, the invention can variously be changed and carried out within scopes of claims, detailed description of the invention and the accompanying drawings, and they belong to the scope of the invention of course.

Further, the present invention can be developed to other products such as a floating body in which analogy similar to a ship is established, offshore wind power generation equipment, underwater sailing body and a marine structural object, and other industries such as construction industry. When the invention is applied to them, it is possible to replace a ship in claims with words in other products and other industries, and interpret the words.

### [EXPOANATION OF SYMBOLS]

- 10: unified database
- 11: basic design information
- 12: facility model
- 13: process data of past ship
- 14: rule information
- 15: product model
- 16: process model
- 17: quality data
- 20: product model setting means
- 30: facility model setting means
- 40A: process model creating means
- 40B: building simulating means
- 41: schedule information
- 42: factory layout information
- 50: time series informatization means
- 51: building time series information
- 60: information supplying means
- 70: process model accumulating means
- 240: quality database
- S1: product model setting step
- S2: facility model setting step
- S3: process model creating step
- S4: process model accumulating step
- S5: simulating step
- S6: time series informatization step
- S7: information supplying step
- S8: verifying step
- S9: model correcting step

## Claims

1. A shipbuilding simulation method based on unified database for simulating building of a ship based on information which is expressed by means of standardized data structure accumulated in a unified database, executing:
a product model setting step for obtaining basic design information of the ship from the unified database, and for setting the basic design information as a product model which is expressed by means of the standardized data structure;
a facility model setting step for obtaining, from the unified database, information concerning equipment and worker of a factory which builds the ship, and for setting this information as a facility model which is expressed by means of the standardized data structure;
a process model creating step for clarifying assembling procedure and tasks to build the ship from a component part based on the product model and the facility model, and creating a process model which is expressed by means of the standardized data structure;
a simulating step for carry out time evolution system simulation which sequentially calculates a progress status of building hourly based on the process model;
a time series informatization step for converting a result of the time evolution system simulation into time series data and into building time series information; and
an information supplying step for supplying the building time series information.

2. The shipbuilding simulation method based on unified database according to claim 1, wherein the facility model is previously created based on information concerning the equipment and the worker, and the facility model is expressed by means of the standardized data structure and is accumulate in the unified database.

3. The shipbuilding simulation method based on unified database according to claim 1 or 2, wherein the product model is previously created based on the basic design information of the ship, and the product model is expressed by means of the standardized data structure and is accumulate in the unified database.

4. The shipbuilding simulation method based on unified database according to any one of claims 1 to 3, further executing a process model accumulating step for accumulate, in the unified database, the process model created in the process model creating step and expressed by means of the standardized data structure.

5. The shipbuilding simulation method based on unified database according to any one of claims 1 to 4, wherein the process model includes an assembling tree expressing dependence relation of assembling as the assembling procedure, and a task tree expressing dependence relation between the tasks based on the assembling tree.

6. The shipbuilding simulation method based on unified database according to any one of claims 1 to 5, wherein the tasks include a custom task constructed by combining basic tasks which are functions that can be executed by the time evolution system simulation.

7. The shipbuilding simulation method based on unified database according to any one of claims 1 to 6, wherein in the process model creating step, at least one of schedule information of the worker or factory layout information concerning location of the equipment and the worker in the factory is created based on the assembling procedure and the tasks.

8. The shipbuilding simulation method based on unified database according to any one of claims 1 to 7, wherein rule information including Brains which is determination rule given to the worker is utilized so that the worker proceeds a virtual operation or so that the worker determines the equipment which is used in the virtual operation.

9. The shipbuilding simulation method based on unified database according to any one of claims 1 to 8, wherein each of the standardized data structures of the product model, the facility model and the process model includes classes divided according to type of at least a plurality of data, and a data structure including relation between the classes and parent and child relation between the classes.

10. The shipbuilding simulation method based on unified database according to any one of claims 1 to 9, wherein in the information supplying step, at least the building time series information is supplied to the unified database as the standardized data structure.

11. A shipbuilding simulation program based on unified database for simulating building of a ship based on information which is expressed by means of standardized data structure accumulated in a unified database, the simulation program makes a computer executes:
in the shipbuilding simulation method based on unified database according to any one of claims 1 to 10,
the product model setting step;
the facility model setting step;
the process model creating step;
the simulating step;
the time series informatization step; and
the information supplying step.

12. The shipbuilding simulation program based on unified database according claim 11 which depends on claim 4, wherein the simulation program further causes the computer to the process model accumulating step.

13. A shipbuilding simulation system for executing the shipbuilding simulation method based on unified database according to any one of claims 1 to 10, comprising:
unified database in which information concerning building of the ship is accumulated in a standardized data structure;
product model setting means for setting the product model;
facility model setting means for setting the facility model;
process model creating means for creating the process model;
building simulating means for carrying out time evolution system simulation;
time series informatization means for creating the building time series information; and
information supplying means for supplying the building time series information.

14. The shipbuilding simulation system based on unified database according to claim 13 which depends on claim 4, further comprising process model accumulating means for accumulating the process model in the unified database.

15. The shipbuilding simulation system based on unified database according to claim 13 or 14, wherein the facility model is created from information of the equipment of the plurality of factories and information of the worker, the process model creating means creates the process model for each of the factories, and the building simulating means carries out the time evolution system simulation for each of the factories for the product model.

16. The shipbuilding simulation system based on unified database according to claim 15, wherein a result of the time evolution system simulation of each of the factories in the building simulating means is supplied from the information supplying means as the comparable building time series information.

17. The shipbuilding simulation system according to any one of claims 13 to 16, further comprising at least one of cost-calculating means for calculating cost concerning building of the ship, part-procuring planning means for creating purchase plan of a purchased part which is required for building of the ship, and production planning means for gestating a production plan concerning building of the ship, based on the building time series information.

18. A quality database construction method of a ship, wherein based on the process model or the building time series information in the shipbuilding simulation method based on unified database according to any one of claims 1 to 15, building process is executed, the quality data concerning the building process is obtained, the quality data is associated with at least one of the product model, the facility model and the process model, and the quality data is expressed in a standardized quality data structure and the quality data is accumulate in the quality database a quality management data of the product model.

19. The quality database construction method of a ship according to claim 18, wherein after launch quality information after launch of the ship is obtained, the after launch quality information is associated with at least one of the product model, the facility model and the process model, and the quality information is accumulated in the quality database as the quality management data after launch of the ship.

20. The quality database construction method of a ship according to claim 18 or 19, wherein the standardized quality data structure is associated with the standardized data structure of at least one of the product model, the facility model and the process model and is standardized.
